# EUROPEAN PATENT SPECIFICATION

(11) **EP 3 206 143 B1**
(45) Date of publication and mention of the grant of the patent: **01.11.2023**
(21) Application number: 16201218.1
(22) Date of filing: 29.11.2016
(51) Int. Cl.: G06F 30/00

(54) **SYSTEM AND METHOD FOR MANAGING VARIATIONS IN A PRODUCT STRUCTURE FOR A PRODUCT**
SYSTEM UND VERFAHREN ZUR VERWALTUNG VON VARIANTEN IN EINER PRODUKTSTRUKTUR FÜR EIN PRODUKT
SYSTÈME ET MÉTHODE DE GESTION DES VARIATIONS DE STRUCTURE D'UN PRODUIT

(30) Priority: 12.02.2016 US 201615042933
(43) Date of publication of application: 16.08.2017
(73) Proprietor: The Boeing Company, Arlington, VA 22202 (US)
(72) Inventor: CALLAHAN, Sean M., CHICAGO, IL, 60606-1596 (US); PUTERBAUGH, Kevin D., CHICAGO, IL, 60606-1596 (US)
(74) Representative: Plasseraud IP

(56) References cited:
- US-A1- 2013 080 478
- US-A1- 2013 218 527
- US-A1- 2015 213 154
- SEAN CALLAHAN: "Extended Generic Product Structure: An Information Model for Representing Product Families", JOURNAL OF COMPUTING AND INFORMATION SCIENCE IN ENGINEERING, vol. 6, no. 3, 2006, page 263, XP055380813, US ISSN: 1530-9827, DOI: 10.1115/1.2218361
- WONGVASU N ET AL: "Representing the relationship between items in logical bill-of-material to support customers' requests for quotation for make-to-order products", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 4192, October 2000 (2000-10), pages 74-85, XP002307659, DOI: 10.1117/12.403638 ISBN: 978-1-62841-730-2

## Description

### BACKGROUND INFORMATION

### 1. Field:

The present disclosure relates generally to managing a model of a product structure for a product and, in particular, to a method and apparatus for using the model to manage and present information about variations in the product structure for the product.

### 2. Background:

A product may be any item that has been produced by labor or effort or any item that results from an act or process. Oftentimes, different variants of a product may be designed and produced. Variants of a product may differ in one or more properties with respect to the design for the product. Oftentimes, computer software, such as, for example, without limitation, computer-aided design (CAD) programs, may be used to manage the designs of products. For example, computer-aided design models may be used to manage the designs of complex products. A complex product may comprise, for example, without limitation, thousands to millions of components.

As the number of components that make up a product increases, managing the different possible variations in the design for that product may become more difficult. In particular, managing the different variations in the design for a complex product may take more time, effort, resources, and/or processing power than desired.

For example, with some currently available computer-aided design programs for modeling the design of a product, adding a variation to the design of a complex product in a model may require adding redundant data to the model for the design of the complex product. For example, capturing a modification to the design of the complex product in the model may require copying and/or duplicating more data than just the data associated with the modification.

US 2013/218527 A1, in accordance with its abstract, states a method and apparatus for managing variations in a product structure for a product. In one illustrative embodiment, a product management system for managing variations in a product structure for a product comprises a model. The model comprises a primary hierarchical organization and a number of optimized product variant structures. The primary hierarchical organization comprises a group of domain master objects. The number of optimized product variant structures comprises a group of domain configuration objects in which each domain configuration object in the group of domain configuration objects represents a configuration for a component represented by a corresponding domain master object in the group of domain master objects.

US 2013/080478 A1, in accordance with its abstract, states a method for product data management and corresponding systems and computer-readable mediums. A method includes maintaining a data structure for a complex item. The data structure includes a root node representing the complex item, at least one assembly node associated with the root node, and a plurality of part nodes each associated with the assembly node. The method includes defining at least two absolute occurrences associated with the root node and corresponding to at least the root node and the assembly node. The method includes defining at least one managed occurrence that includes a plurality of the absolute occurrences. The method includes using the managed occurrence as a central control authority for the plurality of absolute occurrences.

US 2015/213154 A1, in accordance with its abstract states a method for generating a product data structure for a configurable product that may include receiving a computer-aided design (CAD) model including one or more configurations of the product. Model data may be extracted from the CAD model. The extracted model data may include geometric information of product items from each configuration of the product. The extracted model data may be provided in the product data structure including product item variants and instances associated with the variants. The instances may provide geometric information extracted from the CAD model.

Sean Callahan in his article "Extended Generic Product Structure: An Information Model for Representing Product Families", JOURNAL OF COMPUTING AND INFORMATION SCIENCE IN ENGINEERING, vol. 6, no. 3, 2006, in accordance with its abstract, states an information model that supports sharing of design definition data between the designs of completely configured variants within a product family. Design data sharing is supported across many levels of a design's product structure hierarchy: A change in one subassembly component does not force the whole subassembly to be duplicated. This is achieved for completely configured models and does not require the use of effectivity or any other filtering mechanism. The key is recognizing a product structure architecture that acts as a template for product variants, maximizing data sharing between them. This approach is applied to many distinct product structure abstractions, including the geometric design and the logical systems design of a product.

This type of redundancy of data within the model may increase the amount of time, effort, and cost needed to manage the model relative to a desired amount of time, effort, and cost, respectively. Therefore, it would be desirable to have a method and apparatus that takes into account at least some of the issues discussed above as well as possibly other issues.

### SUMMARY

The present disclosure provides a product management system as defined by the independent claim 1 and a method for managing a model of a product structure for a product as defined by the independent claim 8. Preferred embodiments are defined in the appended dependent claims.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and features thereof will best be understood by reference to the following detailed description of an illustrative embodiment of the present disclosure when read in conjunction with the accompanying drawings, wherein:
**Figure 1** is an illustration of a product management system in the form of a block diagram in accordance with an illustrative embodiment;
**Figure 2** is an illustration of a reusable definition object in the form of a block diagram in accordance with an illustrative embodiment;
**Figure 3** is an illustration of an in-place definition object in the form of a block diagram in accordance with an illustrative embodiment;
**Figure 4** is an illustration of a usage object in the form of a block diagram in accordance with an illustrative embodiment;
**Figure 5** is an illustration of an occurrence object in the form of a block diagram in accordance with an illustrative embodiment;
**Figure 6** is an illustration of a reusable definition configuration object in the form of a block diagram in accordance with an illustrative embodiment;
**Figure 7** is an illustration of an in-place definition configuration object in the form of a block diagram in accordance with an illustrative embodiment;
**Figure 8** is an illustration of a usage configuration object in the form of a block diagram in accordance with an illustrative embodiment;
**Figure 9** is an illustration of an occurrence configuration object in the form of a block diagram in accordance with an illustrative embodiment;
**Figure 10** is an illustration of port objects in the form of a block diagram in accordance with an illustrative embodiment;
**Figure 11** is an illustration of a reusable category for port objects in the form of a block diagram in accordance with an illustrative embodiment;
**Figure 12** is an illustration of an interface category for port objects in the form of a block diagram in accordance with an illustrative embodiment;
**Figure 13** is an illustration of a connectable category for port objects in the form of a block diagram in accordance with an illustrative embodiment;
**Figure 14** is an illustration of a promotion object in the form of a block diagram in accordance with an illustrative embodiment;
**Figure 15** is an illustration of a connection object in the form of a block diagram in accordance with an illustrative embodiment;
**Figure 16** is an illustration of a legend of objects in accordance with an illustrative embodiment;
**Figure 17** is an illustration of a primary hierarchical organization in accordance with an illustrative embodiment;
**Figure 18** is an illustration of a portion of a secondary hierarchical organization associated with a portion of a primary hierarchical organization in accordance with an illustrative embodiment;
**Figure 19** is an illustration of a six-brick assembly in accordance with an illustrative embodiment;
**Figure 20** is an illustration of a model of a six-brick assembly in accordance with an illustrative embodiment;
**Figure 21** is an illustration of a model of a six-brick assembly in accordance with an illustrative embodiment;
**Figure 22** is an illustration of a variant of a six-brick assembly in accordance with an illustrative embodiment;
**Figure 23** is an illustration of a model representing two variants of a six-brick assembly in accordance with an illustrative embodiment;
**Figure 24** is an illustration of a breakdown of sequences for assembly a six-brick assembly in accordance with an illustrative embodiment;
**Figure 25** is an illustration of a mapping between models for two domains in accordance with an illustrative embodiment;
**Figure 26** is an illustration of a model for a generator system in accordance with an illustrative embodiment;
**Figure 27** is another illustration of a model for a generator system in accordance with an illustrative embodiment;
**Figure 28** is another illustration of a model for a generator system in accordance with an illustrative embodiment;
**Figure 29** is an illustration of a model for an engine system in accordance with an illustrative embodiment;
**Figure 30** is an illustration of a more detailed model of an engine system in accordance with an illustrative embodiment;
**Figure 31** is an illustration of a projection of a configuration for an engine system in accordance with an illustrative embodiment;
**Figure 32** is an illustration of a projection of a configuration for an engine system in accordance with an illustrative embodiment;
**Figure 33** is an illustration of a data model in accordance with an illustrative embodiment;
**Figure 34** is an illustration of a product management system in the form of a block diagram in accordance with an illustrative embodiment;
**Figure 35** is an illustration of a modeling scheme in accordance with an illustrative embodiment;
**Figure 36** is an illustration of an element object in accordance with an illustrative embodiment;
**Figure 37** is an illustration of a configuration control zone in accordance with an illustrative embodiment;
**Figure 38** is an illustration of a model of an aircraft product structure in accordance with an illustrative embodiment;
**Figure 39** is an illustration of a process for managing variations in a product structure for a product in the form of a flowchart in accordance with an illustrative embodiment;
**Figure 40** is an illustration of a process for managing a model of a product structure in the form of a flowchart in accordance with an illustrative embodiment;
**Figure 41** is an illustration of a process for changing the design data for a product structure in the form of a flowchart in accordance with an illustrative embodiment;
**Figure 42A****,** **Figure 42B****,** and **Figure 42C** are a table of terms and descriptions for these terms in accordance with an illustrative embodiment;
**Figure 43** is an illustration of a data processing system in the form of a block diagram in accordance with an illustrative embodiment;
**Figure 44** is an illustration of an aircraft manufacturing and service method in the form of a block diagram in accordance with an illustrative embodiment;
**Figure 45** is an illustration of an aircraft in the form of a block diagram in accordance with an illustrative embodiment; and
**Figure 46** is an illustration of a manufacturing and maintenance system in the form of a block diagram in accordance with an illustrative embodiment.

### DETAILED DESCRIPTION

The different illustrative embodiments recognize and take into account different considerations. For example, the different illustrative embodiments recognize and take into account that some currently available computer-aided design (CAD) programs for modeling the design of a complex product may not allow the sharing of common data between variants of a product.

For example, in some cases, with some currently available computer-aided design (CAD) programs, a model of the design for a product may be created for each variant of the product. These programs may not allow data that is common between these models to be shared. Consequently, the amount of data that may need to be stored to capture the different possible variations in the design for a product may require more processing power, data storage, and/or other computer resources than desired.

Further, managing the associations between redundant data and the different variations in the design for a product may require more time and effort than desired. Additionally, the existence of redundant data may make it more difficult than desired to understand the differences between design variants. Consequently, this increase in difficulty and the complexity added by the redundant data may lead to undesired inconsistencies when forming a product. Reworking the product to correct these undesired inconsistencies may be more expensive than desired.

The different illustrative embodiments recognize and take into account that a model that is capable of capturing different possible variations in the design for a product may be desirable. In particular, the different illustrative embodiments recognize and take into account that it may be desirable to have a model that is capable of capturing these different variations without increasing the amount of redundant data in the model more than desired.

Thus, the illustrative embodiments may provide an organization schema for representing variants of a product in a manner that minimizes storage requirements and processing power. For example, in the past, one technique for storing multiple variations of a product was to store a complete schematic for each variant of the product. This old technique may have been used even for minor variations among embodiments of the product.

In an extreme example, even though the only difference between two aircraft is a single pump or actuator, an entire aircraft schematic may have been saved for both aircraft system designs. A first complete aircraft systems schematic may have been saved for a first aircraft and a second complete aircraft systems schematic may have been saved for a second aircraft, when the only difference between the two aircraft systems schematics was a single different pump or actuator. As a result, most of the same data may be redundantly saved twice, thereby using storage space undesirably and making it difficult to understand what has changed between the two system design configurations.

However, when using this old technique for storing hundreds of variants of a product that may include hundreds of thousands or even millions of components, the amount of storage space and processing power used to store, compare, and manipulate variations among product schemas may become undesirable due to vast redundancies in stored data. The illustrative embodiments address this issue, and other issues, by providing an organization schema for representing variations in a product using a minimum amount of storage space.

The different illustrative embodiments recognize and take into account that a model that supports sharing of product data between the designs of completely configured variants within a family of products may be desirable. The different illustrative embodiments provide a model that allows data that is common between different variations of a product structure for a product to be shared by different representations of the components for the components in the product. The model allows design data for the product to be shared across a plurality of levels in the hierarchy for the product structure for the product.

Thus, the illustrative embodiments may minimize or eliminate redundant data when representing multiple variations in a product. Further, the different illustrative embodiments may provide a model that may be used to accurately identify and present the differences between product design configurations without using redundant data. In this manner, understanding of the differences between product design configurations may be increased. In particular, an operator may be able to more easily find and understand the differences between product designs using the model provided in the different illustrative embodiments.

For example, in the model provided by the different illustrative embodiments, adding a representation of a change in one component in a sub-assembly to the model does not require that all of the objects representing the components in the sub-assembly be duplicated in the model. This feature is a feature of the completely configured model and is provided without the use of any filtering mechanisms. The model recognizes an overall organization for the product structure for the product that may act as a template for the different variants of the product. In this manner, data sharing between representations of the different variants of the product may be maximized.

Further, the model provided by the different illustrative embodiments may be used for different abstractions of the product structure for the product. These abstractions may include, for example, without limitation, a geometric design, a logical systems design, or some other suitable type of abstraction. The model achieves data scalability for hierarchical product structures such that the amount of new data added to a model to add a representation of a new variant for a product may be proportional to the amount of design change required for the new variant. These different abstractions may be achieved by sub-classing or typing the classes.

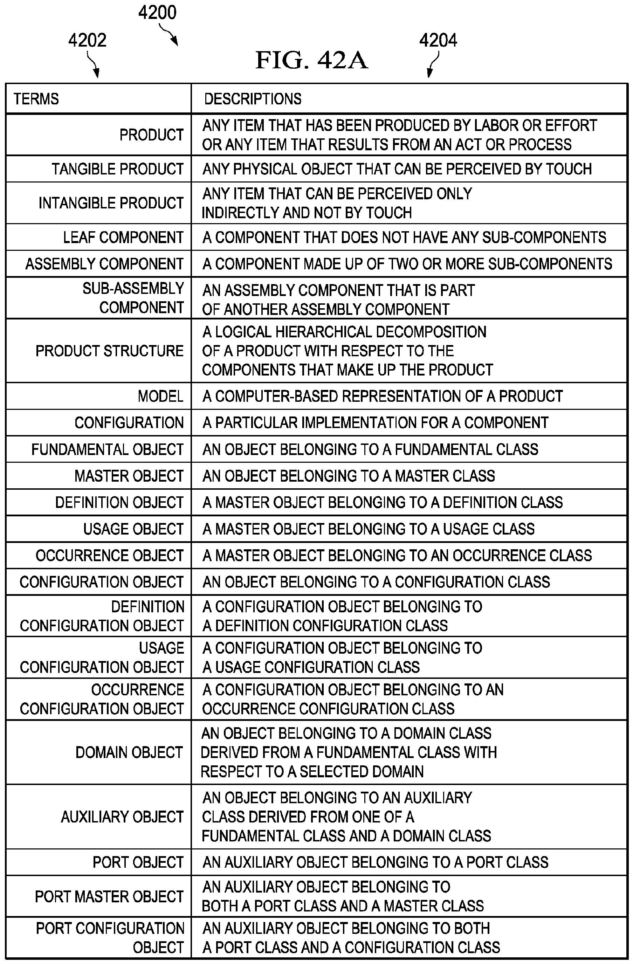

Thus, the different illustrative embodiments may provide a method and apparatus for managing variations in a product structure for a product using a model for the product structure. A listing of the different terms related to the different illustrative embodiments and descriptions of these terms, as used herein, may be found in **Figures 42A-42C** below.

### PRODUCT MANAGEMENT SYSTEM, GENERALLY

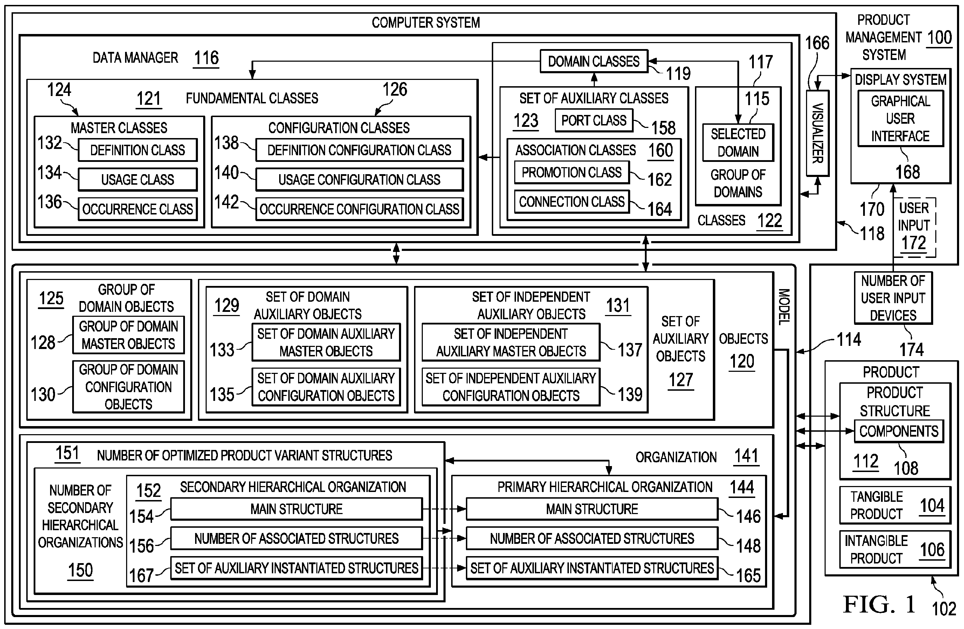

Referring now to the figures, **Figure 1** is an illustration of a product management system in the form of a block diagram, depicted in accordance with an illustrative embodiment. In these illustrative examples, product management system **100** may be configured to manage and visually present information about product **102.** As used herein, a "product", such as product **102,** may be any item that has been produced by labor or effort or any item that results from an act or process.

Product **102** may be selected from one of tangible product **104** and intangible product **106.** As used herein, a "tangible product", such as tangible product **104,** may be any physical object that can be perceived by touch. For example, tangible product **104** may take the form of, without limitation, a mobile platform, a stationary platform, a vehicle, a house, an electromechanical system, an engine, a robotic machine, a tool, a computer system, an appliance, a manmade structure, a building, a piece of furniture, a writing instrument, a container, an aircraft, or some other suitable type of tangible object. In one illustrative example, product **102** is tangible product **104,** which may be an aircraft comprising at least 100,000 components.

As used herein, an "intangible product", such as intangible product **106,** may be any item that can be perceived only indirectly and not by touch. For example, intangible product **106** may take the form of, without limitation, a business organizational product, a power point presentation, a logical systems design, a build plan, an assembly sequence, a manufacturing plan, a simulation model, a functional design, a computer-aided design (CAD) model, a policy, a handbook, a dance routine, or some other suitable type of intangible item.

In these illustrative examples, product **102** may comprise components **108.** Components **108** may be the different items that, together, form product **102.** Components **108** may include tangible components or intangible components, depending on the implementation. In some illustrative examples, components **108** for tangible product **104** may include both tangible and intangible components. Of course, components **108** for intangible product **106** may include only intangible components in these illustrative examples.

Each component in components **108** may be described as either a leaf component or an assembly component. As used herein, a "leaf component" may be a component that does not have any sub-components. In other words, a leaf component may be a primary constituent of product **102** that is not made up of other components. In some cases, product **102** may be a leaf component. In other words, product **102** may be a single component that is indivisible and does not have any sub-components.

An "assembly component", as used herein, may be made up of two or more sub-components. Product **102** may be considered an assembly component in these examples. In some cases, a subcomponent of an assembly component may be a leaf component or another assembly component. Further, an assembly component that is part of another assembly component may be referred to as a sub-assembly component.

As depicted, product **102** may have product structure **112.** In these illustrative examples, product structure **112** may be a logical hierarchical decomposition of product **102** with respect to components **108** that make up product **102.** In other words, product structure **112** may describe the relationships between components **108** as well as the sub-components that make up assembly components in components **108.**

In these illustrative examples, product structure **112** may be a logical hierarchical decomposition of product **102** with respect to selected domain **115** from group of domains **117.** In some illustrative examples, product **102** may have multiple product structures within a particular domain in group of domains **117.**

As used herein, a "group of" items, such as group of domains **117,** means one or more items. In this manner, group of domains **117** may be one or more domains. A "domain", as used herein, is a particular level of abstraction for product **102.** In other words, each of these domains may be a different way of describing product **102.** Group of domains **117** may include, for example, without limitation, a geometric domain, a system domain, a manufacturing domain, and/or other types of domains.

In some cases, product structure **112** may be the logical hierarchical decomposition of a design for product **102** with respect to components **108** that make up product **102.** Further, product structure **112** may capture a standard configuration for product **102** and components **108** in product **102.** In some illustrative examples, product structure **112** may be referred to as a bill of materials (BOM). In other illustrative examples, product structure **112** may be referred to as an extended generic product structure (EGPS).

The logical hierarchical decomposition of product **102** in product structure **112** may be based on a selected level of abstraction for describing components **108** that make up product **102.** For example, components **108** that make up product **102** may be organized in product structure **112** according to one of a selected level of detail, a selected domain for components **108,** or some other suitable level of abstraction for describing components **108** that make up product **102.**

Product management system **100** may be configured to manage product structure **112** for product **102.** In particular, data manager **116** in product management system **100** may manage product structure **112** of product **102.** Data manager **116** may be implemented using hardware, software, or a combination of the two.

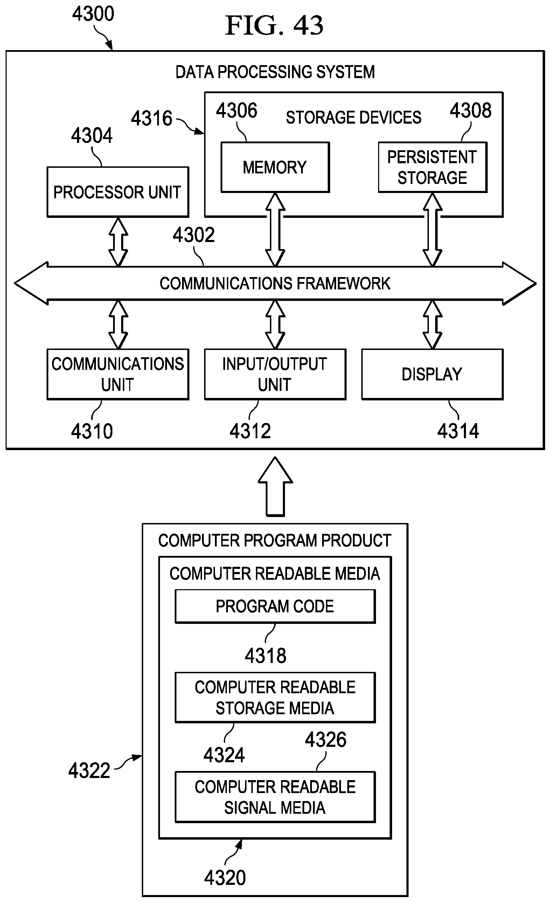

For example, data manager **116** may be implemented in computer system **118.** Computer system **118** may comprise one or more computers. When more than one computer is present in computer system **118,** these computers may be in communication with each other. An example of one manner in which computer system **118** may be implemented is described in **Figure 43** below.

In these illustrative examples, data manager **116** in product management system **100** may manage product structure **112** for product **102** using model **114.** Model **114** may be a representation of product structure **112** in a form that is substantially comprehensive and yet comprehensible. Further, model **114** may be configured to represent variations in product structure **112** that may result in different variants of product **102.** Data manager **116** may manage variations in product structure **112** for product **102** using model **114.**

As depicted, model **114** may include objects **120** belonging to classes **122.** Objects **120** may represent components **108** and/or types of components **108** that make up product **102.** An object in objects **120** that belongs to a particular class in classes **122** may be of the type of that particular class. In other words, an object belonging to a particular class may share the same attributes as the attributes for that particular class.

In object-oriented programming, an object may be referred to as an "instance" of a class. However, in these illustrative examples, the word "instance" and "instantiation" are used differently. As used herein, an "instance" or an "instantiation" of an item may mean a usage of that item in model **114.** For example, an instantiation of an object, such as one of objects **120,** may be a usage of that object in model **114.**

In these illustrative examples, classes **122** may be derived from fundamental classes **121.** In other words fundamental classes **121** may be the base classes off of which all other classes in classes **122** are directly or indirectly based. Each class in classes **122** may share the attributes of the corresponding fundamental class in fundamental classes **121** from which the class is derived. An object in objects **120** in model **114** belonging to a particular class in classes **122** may be considered as also belonging to the corresponding fundamental class in fundamental classes **121** from which the particular class is derived.

A class in classes **122** may be either directly or indirectly derived from a fundamental class in fundamental classes **121.** A class in classes **122** that is indirectly derived from a fundamental class may be a class that is directly derived from another class in classes **122** that is directly derived from a fundamental class. This type of derivation may correspond to one level of indirect derivation. Depending on the implementation, more than one level of indirect derivation may be present between a class in classes **122** and a fundamental class in fundamental classes **121.**

An object belonging to one of fundamental classes **121** may be referred to as a fundamental object. As depicted, fundamental classes **121** include master classes **124** and configuration classes **126.** An object belonging to one of master classes **124** may be referred to as a master object. A master object may represent a component in product structure **112** for product **102.** An object belonging to one of configuration classes **126** may be referred to as a configuration object. In these illustrative examples, a configuration object may correspond to a master object. In particular, the configuration object may represent a configuration for the component in product structure **112** for product **102** represented by the corresponding master object.

As used herein, a "configuration" for a component may be a particular implementation for that component. For example, a configuration for a component in product structure **112** for product **102** may be a variation in product structure **112** for product **102** or may be associated with a particular variation in product structure **112** for product **102.**

Different configurations of the same component may, for example, without limitation, have different features, have different properties, have different shapes, comprise different materials, have different attachments, and/or have other differing characteristics. In these examples, a configuration object may belong to only one master object. However, more than one configuration object may belong to the same master object.

As depicted, master classes **124** may include definition class **132,** usage class **134,** and occurrence class **136.** An object belonging to definition class **132** may be referred to as a definition object. An object belonging to usage class **134** may be referred to as a usage object. An object belonging to occurrence class **136** may be referred to as an occurrence object.

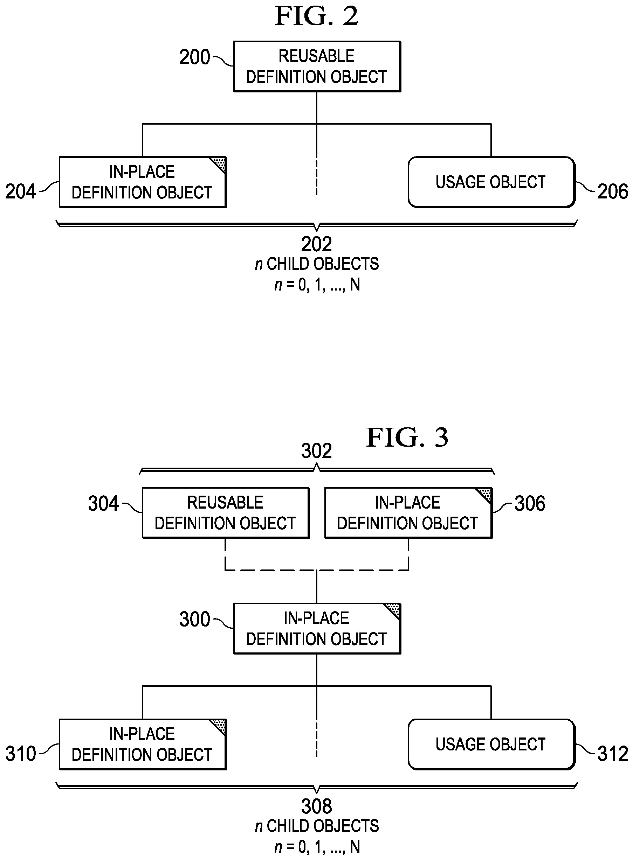

In this manner, a definition object, a usage object, and an occurrence object are examples of master objects. Examples of implementations for definition objects, usage objects, and occurrence objects are described in greater detail in **Figures 2-****5** below.

Configuration classes **126** may include definition configuration class **138,** usage configuration class **140,** and occurrence configuration class **142.** An object belonging to definition configuration class **138** may be referred to as a definition configuration object. An object belonging to usage configuration class **140** may be referred to as a usage configuration object. An object belonging to occurrence configuration class **142** may be referred to as an occurrence configuration object.

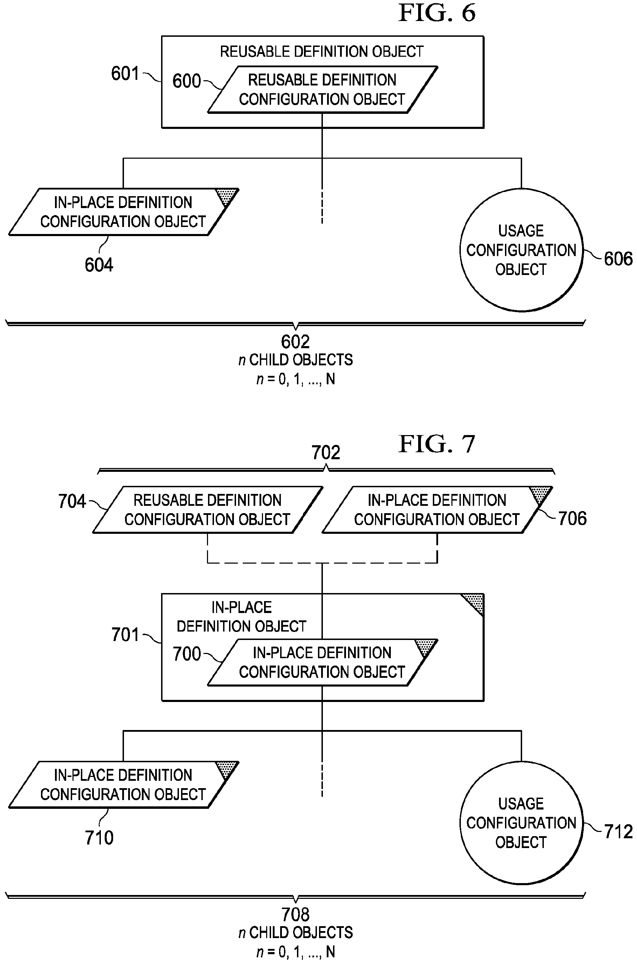

In this manner, a definition configuration object, a usage configuration object, and an occurrence configuration object are examples of configuration objects. Examples of implementations for definition configuration objects, usage configuration objects, and occurrence configuration objects in group of domain configuration objects **130** are described in greater detail in **Figures 6-9** below.

Classes **122** may include domain classes **119** and set of auxiliary classes **123.** Domain classes **119** may be derived from fundamental classes **121** for selected domain **115.** In particular, domain classes **119** include classes derived from each of master classes **124** and each of configuration classes **126** for selected domain **115.** An object belonging to one of domain classes **119** may be referred to as a domain object.

Set of auxiliary classes **123** may be classes that are derived from fundamental classes **121** and/or domain classes **119.** An auxiliary class in auxiliary classes **123** that is derived from a domain class in domain classes **119** that is directly derived from a fundamental class in fundamental classes **121** may be considered indirectly derived from that fundamental class. An object belonging to set of auxiliary classes **123** may be referred to as an auxiliary object.

Objects **120** in model **114** may include group of domain objects **125** belonging to domain classes **119** and set of auxiliary objects **127** belonging to set of auxiliary classes **123.** As used herein, a "set of" items means zero or more items. For example, set of auxiliary objects **127** may be zero, one, two, or some other number of auxiliary classes. In this manner, in some cases, set of auxiliary objects **127** may be an empty set or a null set.

A domain object in group of domain objects **125** is an object that is considered necessary in product structure **112.** As depicted, group of domain objects **125** may include group of domain master objects **128** and group of domain configuration objects **130.**

Group of domain master objects **128** may belong to one or more domain master classes in domain classes **119** derived from master classes **124.** Group of domain master objects **128** may include any number of objects belonging to definition class **132,** usage class **134,** and/or occurrence class **136.**

Further, group of domain configuration objects **130** may belong to one or more domain configuration classes in domain classes **119** derived from configuration classes **126.** Group of domain configuration objects **130** may include any number of objects belonging to definition configuration class **138,** usage configuration class **140,** and occurrence configuration class **142.**

In these illustrative examples, objects **120** may be organized into organization **141.** Organization **141** may comprise primary hierarchical organization **144** and number of secondary hierarchical organizations **150.** Group of domain master objects **128** may be organized into primary hierarchical organization **144** in model **114.** For example, without limitation, group of domain master objects **128** may be related to each other in model **114** such that group of domain master objects **128** have primary hierarchical organization **144** with respect to product **102.**

Primary hierarchical organization **144** may comprise main structure **146** and number of associated structures **148.** As used herein, a "number of" items means one or more items. For example, number of associated structures **148** may mean one or more associated structures.

Main structure **146** of primary hierarchical organization **144** and each associated structure in number of associated structures **148** of primary hierarchical organization **144** may be hierarchical structures. As used herein, a "hierarchical structure" may be a representation of an arrangement of items in which the items are represented as being above, below, or at the same level as one another. Typically, a hierarchical structure may be organized into a tree structure comprising parent objects and child objects.

In these illustrative examples, first objects that are in a level above second objects may be parent objects of the second objects. The second objects may be child objects of the parent objects. In these illustrative examples, each child object may have only one parent object in a particular hierarchical structure. However, in some cases, an object may be part of two different hierarchical structures and have two different parent objects in these different hierarchical structures. These different hierarchical structures may be considered part of a multi-tree structure in some illustrative examples.

A hierarchical structure may have a root object. As used herein, a "root object" may be the object at the topmost level in a hierarchical structure. Further, in these illustrative examples, a hierarchical structure may have substructures. As used herein, a "substructure" may comprise a particular object and any child objects related to that particular object. Child objects related to a particular object may include child objects of the particular object, child objects of the child objects of the particular object, and so on. The substructure may not include the parent objects of the particular object.

Main structure **146** may represent the hierarchical decomposition of product **102** with respect to components **108** using a plurality of hierarchical levels. Product **102** may be represented in model **114** by the root object of main structure **146** in primary hierarchical organization **144.**

One or more of the domain master objects in main structure **146** may be associated with an associated structure in number of associated structures **148.** An associated structure in number of associated structures **148** may represent the hierarchical decomposition of a particular component in components **108** for product **102** using one or more hierarchical levels. This particular component may be represented by the root object of the associated structure.

Each associated structure in number of associated structures **148** may be implemented in a manner similar to main structure **146.** Further, in these illustrative examples, an associated structure in number of associated structures **148** may be considered a main structure for a primary hierarchical organization when the component represented by the root object of the associated structure is considered to be a product.

A domain master object in main structure **146** that is associated with an associated structure in number of associated structures **148** of primary hierarchical organization **144** may represent an instance of the component in components **108** for product **102** represented by the root object of the associated structure. An instance of this component may be a usage of the component in a specific manner in product **102.**

When the root object of the associated structure is instantiated as the domain master object in main structure **146,** all other objects within the associated structure may be also instantiated in main structure **146.** In particular, when the root object of the associated structure is instantiated as a domain usage object in main structure **146,** all other objects within the associated structure may also be instantiated as domain occurrence objects that are child objects related to the domain usage object in main structure **146.** In this manner, a portion of the domain master objects in main structure **146** may represent or instantiate the associated structure. This representation or instantiation of the associated structure may be referred to as a substructure of main structure **146.**

In this manner, a portion of the domain master objects in main structure **146** may represent or instantiate the associated structure. This representation or instantiation of the associated structure may be referred to as a substructure of main structure **146.** In other words, the associated structure may be a "template" on which a substructure of main structure **146** is based. In particular, this substructure of main structure **146** may be considered a "lightweight" copy of the associated structure.

In these illustrative examples, an associated structure in number of associated structures **148** may be associated with one or more domain master objects in main structure **146** of primary hierarchical organization **144.** In other words, one or more substructures within main structure **146** may be based off of a particular associated structure. Further, an associated structure may also be considered the main structure of a primary hierarchical organization for a product represented by the root object of the associated structure.

Additionally, group of domain configuration objects **130** may be organized into number of secondary hierarchical organizations **150** in model **114.** Each of number of secondary hierarchical organizations **150** may be associated with primary hierarchical organization **144.** In some cases, a secondary hierarchical organization may be referred to as being "nested within" primary hierarchical organization **144.** Each of number of secondary hierarchical organizations **150** may be configured to represent a particular configuration or variant of product **102** in model **114.**

Further, a number of domain configuration objects in a secondary hierarchical organization may represent a number of variations in product structure **112** for product **102.** These variations may include, for example, without limitation, a variation in a placement of a component, a variation in a size of a component, a variation in a feature of a component, an optional feature for a component, and/or other suitable types of variations.

Secondary hierarchical organization **152** may be an example of one of number of secondary hierarchical organizations **150.** Secondary hierarchical organization **152** may be implemented in a manner similar to primary hierarchical organization **144.**

For example, secondary hierarchical organization **152** may comprise main structure **154** and number of associated structures **156.** Main structure **154** and number of associated structures **156** for secondary hierarchical organization **152** may be implemented in a manner similar to main structure **146** and number of associated structures **148,** respectively, for primary hierarchical organization **144.** Main structure **154** and each associated structure in number of associated structures **156** may be hierarchical associated structures.

Main structure **154** of secondary hierarchical organization **152** may be implemented similarly to main structure **146** of primary hierarchical organization **144.** Number of associated structures **156** in secondary hierarchical organization **152** may be implemented similarly to number of associated structures **148** in primary hierarchical organization **144.**

In these illustrative examples, main structure **154** of secondary hierarchical organization **152** may represent the hierarchical decomposition of a particular configuration for product **102** using a plurality of hierarchical levels. Main structure **154** may include a main structure for each configuration for product **102.** An associated structure in number of associated structures **156** in secondary hierarchical organization **152** may represent the hierarchical decomposition of a particular configuration for a component in components **108** for product **102** using a number of hierarchical levels.

In these illustrative examples, group of domain objects **125** that form primary hierarchical organization **144** and number of secondary hierarchical organizations **150** are specialized to selected domain **115** for which model **114** is created. In particular, group of domain master objects **128** and group of domain configuration objects **130** are specialized to selected domain **115** for which model **114** is created.

Group of domain master objects **128** and group of domain configuration objects **130** may be named using the name of the fundamental unit for selected domain **115.** For example, the fundamental unit for the geometric domain may be a "part", the fundamental unit for the system domain may be a "system", and the fundamental unit for the manufacturing domain may be a "sequence."

As one illustrative example, selected domain **115** may be a geometric domain for product **102.** Consequently, when group of domain master objects **128** is created for the geometric domain, a domain definition object belonging to definition class **132** is referred to as a part definition object; a domain usage object belonging to usage class **134** is referred to as a part usage object; and a domain occurrence object belonging to occurrence class **136** is referred to as a part occurrence object. In some cases, a part definition object may be simply referred to as a part object.

Similarly, when group of domain configuration objects **130** is created for the geometric domain, a domain definition configuration object belonging to definition configuration class **138** is referred to as a part definition configuration object; a domain usage configuration object belonging to usage configuration class **140** is referred to as a part usage configuration object; and a domain occurrence configuration object belonging to occurrence configuration class **142** is referred to as a part occurrence configuration object. In some cases, a part definition configuration object may be simply referred to as a part configuration object.

Primary hierarchical organization **144** and number of secondary hierarchical organizations **150** may be used to represent product structure **112** for product **102** and variations in product structure **112** for product **102** in a manner that reduces redundancy in model **114** and increases the amount of information that may be represented in model **114.** Further, primary hierarchical organization **144** and number of secondary hierarchical organizations **150** may allow model **114** to maintain a desired level of specificity with respect to the hierarchical decomposition of components **108** in product structure **112** without increasing the amount of data that needs to be stored more than is desirable.

In particular, primary hierarchical organization **144** may provide a base architecture or template from which all variations in product structure **112** for product **102** and/or all product design data may be captured and shared between variants of product **102.** Each variant of product **102** may be represented using a secondary hierarchical organization.

For example, when a new variant of product **102** is to be represented in model **114,** data manager **116** may add secondary hierarchical organization **152** to model **114** and nest secondary hierarchical organization **152** within primary hierarchical organization **144** to represent this new variant. This action is taken instead of creating a new primary hierarchical organization for this variant.

The number of domain configuration objects added to model **114** to form secondary hierarchical organization **152** may be less than the number of domain master objects that may need to be duplicated to represent the new variant in model **114** using a new primary hierarchical organization. For example, secondary hierarchical organization **152** may share a same number of domain configuration objects with another secondary hierarchical organization in number of secondary hierarchical organizations **150.**

The only new domain configuration objects that need to be added to form secondary hierarchical organization **152** may be the one or more domain configuration objects needed to represent the respective one or more new variations of components that make up the new variant of product **102.** In this manner, secondary hierarchical organization **152** may be an optimized product variant structure configured to represent the new variant of product **102.**

Secondary hierarchical organization **152** may be optimized in that the number of domain configuration objects needed to represent the new variant of product **102** is reduced. This optimized product variant structure may reduce the overall data footprint of model **114.** As used herein, the "data footprint" of a data structure, such as model **114,** may be the amount of data storage required to store the data structure.

For example, product **102** may be an aerospace vehicle comprising billions or trillions of components. A new variant of product **102** may comprise a variation in a single fastener in product **102.** Representing this variation within model **114** may be performed by forming a new secondary hierarchical organization within model **114.**

This new secondary hierarchical organization may include a new domain configuration object in a particular hierarchical level within organization **141** to represent the variation of the fastener and a new domain configuration object for every hierarchical level in organization **141** above this particular hierarchical level. However, the new secondary hierarchical organization may share previously created domain configuration objects that are already part of other secondary hierarchical organizations within model **114.**

In one illustrative example, when a new variant of product **102** includes variations to multiple components represented by domain master objects in a particular hierarchical level within organization **141** in which the domain master objects are child objects of the same parent object, new domain configuration objects may be added to model **114** at the particular hierarchical level for these domain master objects. However, only one new domain configuration object may need to be added to represent this collection of variations at each hierarchical level above the particular hierarchical level for the parent object. In this manner, this new secondary hierarchical organization may be optimized to reduce the data footprint associated with representing the new variant of product **102.**

In these illustrative examples, at least two secondary hierarchical organizations in number of secondary hierarchical organizations **150** may share a same number of domain configuration objects. Further, any number of domain configuration objects in group of domain configuration objects **130** may be shared between different second hierarchical organizations in number of secondary hierarchical organizations **150.**

Consequently, relating the different variations in product structure **112** for product **102** to each other and to a standard configuration for product **102** may be easier and require less data by using number of secondary hierarchical organizations **150** relative to using multiple primary hierarchical organizations. Number of secondary hierarchical organizations **150** may be referred to as number of optimized product variant structures **151.**

In some illustrative examples, model **114** may include set of auxiliary objects **127** belonging to set of auxiliary classes **123.** Set of auxiliary classes **123** are auxiliary to domain classes **119.** In other words, set of auxiliary objects **127** are supplementary and may not be necessary to describe the basic structure of product **102.** In this manner, set of auxiliary objects **127** may provide supplementary information about product structure **112** for product **102.**

Set of auxiliary objects **127** may include set of domain auxiliary objects **129** belonging to auxiliary classes derived from domain classes **119** and set of independent auxiliary objects **131** belonging to auxiliary classes derived from fundamental classes **121.**

Set of domain auxiliary objects **129** may include set of domain auxiliary master objects **133** and set of domain auxiliary configuration objects **135.** Set of domain auxiliary master objects **133** may be auxiliary objects that belong to auxiliary classes derived from domain master classes in which the domain master classes are derived from master classes **124.** Similarly, set of domain auxiliary configuration objects **135** may be auxiliary objects that belong to auxiliary classes derived from domain configuration classes in which the domain configuration classes are derived from configuration classes **126.**

Set of independent auxiliary objects **131** may include set of independent auxiliary master objects **137** and set of auxiliary configuration objects **139.** Set of independent auxiliary master objects **137** may be auxiliary objects that belong to auxiliary classes derived from master classes **124.** Set of independent auxiliary configuration objects **139** may be auxiliary objects that belong to auxiliary classes derived from configuration classes **126.**

Set of auxiliary classes **123** may include, for example, without limitation, port class **158** and association classes **160.** A port object belonging to port class **158** may be either a port master object or a port configuration object. Further, an association object belonging to one of association classes **160** may be either an association master object or an association configuration object.

A port master object may represent a connection point on product **102** or a component of product **102.** This connection point may be a physical connection point or a logical connection point. For example, a port master object may represent a physical interface, a physical connection element, an outlet, a jack, a connector, a logical interface, a data interface, a virtual data connection, or some other type of connection point. A port configuration object may correspond to a particular port master object. The port configuration object may represent a particular configuration for the connection point represented by the particular port master object.

An association master object may represent a relationship between two objects. In particular, an association master object may represent any type of association not explicitly represented by the hierarchical relationships and instantiation relationships between objects belonging to fundamental classes **121.** An association configuration object may correspond to a particular association master object. The association configuration object may represent a particular configuration for the relationship represented by the particular association master object.

Association classes **160** may include, for example, without limitation, promotion class **162** and connection class **164.** Each of these different auxiliary classes may be derived from either one of domain classes **119** or one of fundamental classes **121.**

In particular, an auxiliary object may behave according to both the auxiliary class to which the auxiliary object belongs and the auxiliary class and/or fundamental class and/or domain class from which the auxiliary class is derived. The auxiliary class to which the auxiliary object belongs may impose one or more constraints and/or impart one or more properties to the auxiliary object, depending on the role of the auxiliary object within model **114.**

In these illustrative examples, set of auxiliary objects **127** may be considered part of primary hierarchical organization **144** and/or number of secondary hierarchical organizations **150.** For example, an auxiliary object may be a child object of an object in primary hierarchical organization **144** or one of number of secondary hierarchical organizations **150.** However, in some cases, an auxiliary object may not be considered part of main structure **146** or number of associated structures **148** in primary hierarchical organization **144** or part of the main structure **154** or number of associated structures **156** in one of number of secondary hierarchical organizations **150.**

For example, one or more of set of auxiliary objects **127** may belong to number of auxiliary associated structures **165** within primary hierarchical organization **144.** Further, one or more of set of auxiliary objects **127** may belong to a set of auxiliary associated structures within one of number of secondary hierarchical organizations **150,** such as set of auxiliary associated structures **167** in secondary hierarchical organization **152.**

An auxiliary associated structure may be a hierarchical structure that is instantiated as a substructure connected to main structure **146** or one of number of associated structures **148** in primary hierarchical organization **144.** In some cases, an auxiliary associated structure may be a hierarchical structure that is instantiated as a substructure connected to main structure **154** or one of number of associated structures **156** in secondary hierarchical organization **152.**

In some illustrative examples, at least two secondary hierarchical organizations in number of secondary hierarchical organizations **150** may share a same number of auxiliary configuration objects. Further, any number of auxiliary configuration objects in set of auxiliary objects **127** may be shared between different second hierarchical organizations in number of secondary hierarchical organizations **150.**

In these illustrative examples, product management system **100** may include visualizer **166** in addition to data manager **116.** As depicted, visualizer **166** may be implemented in computer system **118.** Visualizer **166** may be configured to visually present the information about product structure **112** represented in model **114.** In particular, visualizer **166** may visually present information about product structure **112** for product **102,** as represented in model **114,** in a manner that may be easily understood by a user.

Visualizer **166** may visually present this information about product structure **112** for product **102** in graphical user interface **168.** Graphical user interface **168** may be configured for display on display system **170.**

Further, graphical user interface **168** may be configured to receive user input **172** through number of user input devices **174.** In this manner, a user may interact with graphical user interface **168** by entering user input **172** through number of user input devices **174.**

Number of user input devices **174** may include any device configured to allow a user to interact with graphical user interface **168.** Number of user input devices **174** may include, for example, without limitation, a keyboard, a mouse, a joystick, a touch screen, a touchpad, a pen, a pointer, a microphone, and/or some other suitable type of user input device.

Graphical user interface **168** may allow a user to make modifications to model **114** to modify product structure **112** for product **102.** For example, without limitation, graphical user interface **168** may allow a user to add and remove variations to and from product structure **112,** add and remove one or more components to and from product structure **112,** add and remove one or more relationships between components in product structure **112,** and/or modify product structure **112** in some other suitable manner by modifying model **114.**

In this manner, product management system **100** may be used to manage model **114** for product structure **112** for product **102** as well as visually present information about product structure **112** in graphical user interface **168.** Further, a user may be able to interact with graphical user interface **168** to modify model **114** to indicate variations in product structure **112** for product **102.**

For example, without limitation, visualizer **166** may be configured to present information about an object in model **114** on graphical user interface **168** using a multi-column display. When the object is a master object, the first column in this multi-column display may identify the master object and all child objects belonging to the master object.

Further, other columns in the multi-column display may present information about one or more selected configuration for the component represented by the master object. For example, a particular column may identify a configuration object corresponding to the master object and all the child objects belonging to this configuration object. Additionally, other columns in the multi-column display may include information such as, for example, without limitation, a type of object, a level of an object with respect to a hierarchical organization to which the object belongs, and/or other types of information.

In this manner, a user may be able to compare the different configurations for a component represented by a master object side-by-side. Further, visualizer **166** may visually present the information about the master object in a manner such that particular variations between different configurations for the component may be readily discernible to the user. For example, the information may be displayed using any number of graphical indicators. Examples of graphical indicators that may be used include, but are not limited to, highlighting, color, bolding, italicizing, icons, flashing text, text descriptions, shading, shadowing, and/or other types of text effects and visual effects.

In some cases, data manager **116** and/or visualizer **166** may be configured to generate a report that compares the different variations in product structure **112** for product **102** represented by model **114.** The report may comprise, a table, a spreadsheet, a slide presentation, a graph, a chart, a text report, a number of images, a video, an animated report, and/or some other suitable type of report.

In some illustrative examples, data manager **116** may be configured to receive user input through graphical user interface **168** and make changes to model **114** based on this user input. For example, data manager **116** may add objects to model **114,** remove objects from model **114,** change relationships between objects in model **114,** and/or change model **114** in some other manner. In one illustrative example, the user input may identify new possible variations to one or more components for product **102.** Data manager **116** may determine the number and type of objects that need to be added to model **114** to capture these new variations.

Additionally, data manager **116** may be configured to manage multiple models for multiple domains. Data manager **116** may manage the mapping of objects in a model for one domain to the objects in a model for another domain.
Data manager **116** may also be configured to synchronize the data stored in model **114** with data managed by, for example, other types of product management systems. In some cases, data manager **116** may be able to synchronize the data stored in model **114** with a computer aided design (CAD) model such that variations to items in the computer aided design model using computer aided design software tools may be represented in model **114** without requiring additional user input.

In these illustrative examples, data manager **116** may manage model **114** for product **102** and, in some cases, other models for product **102** over the entire lifecycle of product **102.** In some illustrative examples, data manager **116** may be configured to store timestamps corresponding to each of objects **120** in model **114.** In this manner, a history of the creation of model **114** and any changes to model **114** over the life of product **102** may be recorded.

The illustration of product management system **100** in **Figure 1** is not meant to imply physical or architectural limitations to the manner in which an illustrative embodiment may be implemented. Other components in addition to or in place of the ones illustrated may be used. Some components may be optional. Also, the blocks are presented to illustrate some functional components. One or more of these blocks may be combined, divided, or combined and divided into different blocks when implemented in an illustrative embodiment.

In some illustrative examples, data manager **116** and visualizer **166** may be implemented in two different computer systems. Visualizer **166** may be in a location remote to data manager **116.** In other illustrative examples, data manager **116** and visualizer **166** may be implemented as part of the same module within computer system **118.** In some cases, visualizer **166** may be implemented as part of data manager **116.**

### DIFFERENT TYPES OF MODEL OBJECTS

**Figures 2-9** are illustrations of the different types of objects that may be used in a model, in the form of block diagrams, depicted in accordance with an illustrative embodiment. In particular, **Figures 2-5** are illustrations of the different types of master objects that may belong to master classes **124** in **Figure 1** in the form of block diagrams. **Figures 6-9** are illustrations of the different types of configuration objects that may belong to configuration classes **126** in **Figure 1** in the form of block diagrams.

The master objects described in **Figures 2-6** and the configuration objects described in **Figures 6-9** may be described in the context of domain master objects and domain configuration objects, respectively. However, auxiliary master objects and auxiliary configuration object may behave similarly to the master objects described in **Figures 2-5** and the configuration objects described in **Figures 6-9****,** respectively.

Referring now to **Figures 2-5****,** **Figure 2** is an illustration of a reusable definition object in the form of a block diagram depicted in accordance with an illustrative embodiment. In these illustrative examples, reusable definition object **200** may be one example of a definition object that belongs to a domain master class derived from definition class **132** of master classes **124** in **Figure 1****.**

Any reusable definition object described herein may be implemented in a manner similar to reusable definition object **200.** Reusable definition object **200** may represent a leaf component or an assembly component in components **108** for product **102** in **Figure 1****.** In one illustrative example, reusable definition object **200** may represent product **102** in model **114** in **Figure 1****.**

As depicted, reusable definition object **200** may not have any parent objects. In other words, reusable definition object **200** may not be the child object of any other master objects in primary hierarchical organization **144** in **Figure 1****.** Consequently, reusable definition object **200** may be referred to as a root object and, in particular a root definition object.

In these illustrative examples, reusable definition object **200** may be the root object of main structure **146** in primary hierarchical organization **144** or the root object of an associated structure in number of associated structures **148** in primary hierarchical organization **144** in **Figure 1****.** In other words, reusable definition object **200** may be the object at the topmost level of main structure **146** or the object at the topmost level of an associated structure in number of associated structures **148.**

Reusable definition objects, such as reusable definition object **200,** may not be used in model **114** at any level below the topmost level in main structure **146** or the topmost level in an associated structure in number of associated structures **148.** In this manner, only one reusable definition object may be present in main structure **146** of primary hierarchical organization **144** in **Figure 1****.** Further, only one reusable definition object may be present in an associated structure in number of associated structures **148** of primary hierarchical organization **144.**

However, reusable definition object **200** may represent a component in components **108** for product **102** that may be used any number of times in product **102.** More specifically, reusable definition object **200** may represent a type of component in which multiple components of this type may be used in product **102.**

In these illustrative examples, a usage of the component represented by reusable definition object **200** may be represented in primary hierarchical organization **144** as a usage of reusable definition object **200.** Each usage of reusable definition object **200** may be referred to as an "instantiation" or "instance" of reusable definition object **200** in these illustrative examples. Each instantiation of reusable definition object **200** may take the form of a usage object belonging to usage class **134** of master classes **124** in **Figure 1****.**

As one illustrative example, when product **102** is a wing for an aircraft, reusable definition object **200** may represent a particular type of fastener configured for use in the wing. Multiple fasteners of this particular type may be used in the wing. Reusable definition object **200** may be instantiated in model **114** as many times as the number of times that a fastener of that particular type is used in the wing.

In these illustrative examples, reusable definition object **200** may be a parent object for set of child objects **202.** Set of child objects **202** may include n child objects. As described above, a "set of" items means zero or more items. In this manner, set of child objects **202** may be an empty set or a null set in some cases.

When set of child objects **202** for reusable definition object **200** is an empty set, reusable definition object **200** may represent a leaf component in components **108** for product **102.** In other words, reusable definition object **200** may represent an indivisible component within product **102.** When set of child objects **202** for reusable definition object **200** includes one or more child objects, reusable definition object **200** may represent an assembly component in components **108.**

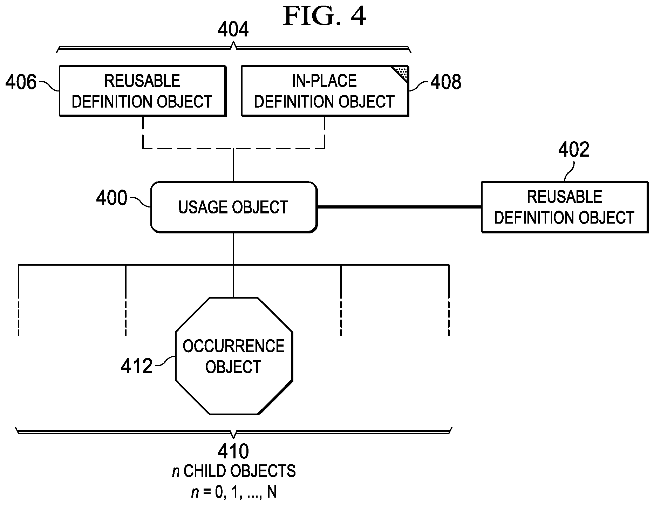

In these illustrative examples, when set of child objects **202** is a non-empty set, set of child objects **202** may include one or more in-place definition objects and/or one or more usage objects. In-place definition object **204** and usage object **206** are examples of child objects that may be in set of child objects **202.** In-place definition objects are described in greater detail in **Figure 3** below. Further, usage objects are described in greater detail in **Figure 4** below.

**Figure 3** is an illustration of an in-place definition object in the form of a block diagram depicted in accordance with an illustrative embodiment. In these illustrative examples, in-place definition object **300** may be one example of a definition object that belongs to a domain master class derived from definition class **132** of master classes **124** in **Figure 1****.**

Any in-place definition object described herein may be implemented in a manner similar to in-place definition object **300.** Further, an in-place definition object that is a child object of a reusable definition object, such as reusable definition object **200** in **Figure 2****,** may be implemented in a manner similar to in-place definition object **300.**

In-place definition object **300** may be part of primary hierarchical organization **144** in **Figure 1****.** The component represented by in-place definition object **300** may be a leaf component or an assembly component.

As depicted in these examples, in-place definition object **300** may be a child object of one of potential parent objects **302.** Potential parent objects **302** may be definition objects belonging to definition class **132** of master classes **124.** For example, potential parent objects **302** for in-place definition object **300** may include reusable definition object **304** and in-place definition object **306.**

In these illustrative examples, in-place definition object **300** may be used only once as a child object of a definition object. In-place definition object **300** may not be instantiated as the child object of any other objects other than this definition object. In other words, in-place definition object **300** may be a child object specific to that definition object.

In this manner, in-place definition object **300** may represent a component in product **102** that is only used once in an assembly component in product **102** in **Figure 1****.** In other words, in-place definition object **300** may represent a component that is specific to an assembly component in product **102** and that may not be used in any other assembly component for product **102.**

As one illustrative example, reusable definition object **304** may be the parent object of in-place definition object **300.** Reusable definition object **304** may represent product **102.** Product **102** may be, for example, a fuselage of an aircraft. In-place definition object **300** may represent a skin panel for the fuselage of the aircraft that has a particular label indicating that the skin panel is for a particular location of the fuselage.

Additionally, in-place definition object **300** may be a parent object for set of child objects **308.** Set of child objects **308** may include n child objects. When set of child objects **308** is a non-empty set, set of child objects **308** may include one or more in-place definition objects and/or one or more usage objects. In-place definition object **310** and usage object **312** are examples of child objects that may be in set of child objects **308.** Usage objects are described in greater detail in **Figure 4** below.

**Figure 4** is an illustration of a usage object in the form of a block diagram depicted in accordance with an illustrative embodiment. In this illustrative example, usage object **400** may be an example of one implementation for a usage object belonging to a domain master class derived from usage class **134** of master classes **124** in **Figure 1****.** Any usage object described herein may be implemented in a manner similar to usage object **400.**

A usage object that is a child object of a reusable definition object, such as reusable definition object **200,** or an in-place definition object, such as in-place definition object **300,** may be implemented in a manner similar to usage object **400.** Usage object **400** may be part of primary hierarchical organization **144** in **Figure 1****.**

Usage object **400** may be an instantiation of a corresponding reusable definition object. For example, usage object **400** may be an instantiation of reusable definition object **402.** In this manner, usage object **400** is a usage of the component represented by reusable definition object **402** in product **102** in **Figure 1****.**

As depicted, usage object **400** may be the child object of one of potential parent objects **404.** Potential parent objects **404** for usage object **400** include reusable definition object **406** and in-place definition object **408.**

When the child object of reusable definition object **406** or in-place definition object **408** needs to represent a component that is represented by reusable definition object **402,** usage object **400** is used as the child object instead of reusable definition object **402.** In this manner, reusable definition object **402** may be instantiated multiple times as usage objects without tying reusable definition object **402** to a particular hierarchical structure.

As depicted, usage object **400** may have set of child objects **410.** Set of child objects **410** may include *n* objects. In particular, set of child objects **410** may include any number of occurrence objects belonging to occurrence class **136** of master classes **124** in **Figure 1****.**

When reusable definition object **402** represents an assembly component, reusable definition object **402** may be a root object of a hierarchical structure for that assembly component. When usage object **400** is created as an instantiation of reusable definition object **402,** all child objects of reusable definition object **402** are instantiated as occurrence objects that become child objects of usage object **400.**

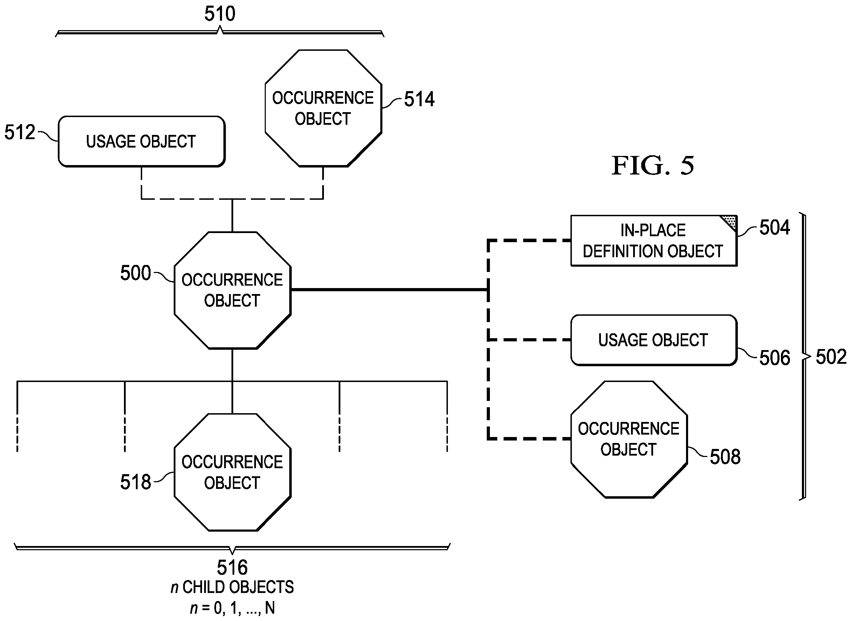

In this manner, when reusable definition object **402** represents a leaf component, set of child objects **410** may be an empty set. When reusable definition object **402** represents an assembly component, set of child objects **410** may include one or more occurrence objects. Occurrence object **412** may be an example of an occurrence object in set of child objects **410.** Occurrence objects are described in greater detail in **Figure 5** below.

**Figure 5** is an illustration of an occurrence object in the form of a block diagram depicted in accordance with an illustrative embodiment. In this illustrative example, occurrence object **500** may be an example of one implementation for an occurrence object belonging to a domain master class derived from occurrence class **136** of master classes **124** in **Figure 1****.** Any occurrence object described herein may be implemented in a manner similar to occurrence object **500.**

An occurrence object that is a child object of a usage object, such as usage object **400** in **Figure 4****,** may be implemented in a manner similar to occurrence object **500.** Occurrence object **500** may be part of primary hierarchical organization **144** in **Figure 1****.**

Occurrence object **500** may be an instantiation of one of potential objects **502.** Potential objects **502** include in-place definition object **504,** usage object **506,** and occurrence object **508.** The particular object in potential objects **502** instantiated by occurrence object **500** may depend on which of potential parent objects **510** is the parent object of occurrence object **500.**

For example, potential parent objects **510** include usage object **512** and occurrence object **514.** When usage object **512** is the parent object of occurrence object **500,** occurrence object **500** may be the instantiation of a child object of the reusable definition object instantiated by usage object **512.** For example, when usage object **512** is the parent object of occurrence object **500,** occurrence object **500** may be an instantiation of in-place definition object **504** or usage object **506.**

Further, when occurrence object **514** is the parent object of occurrence object **500,** occurrence object **500** may be the instantiation of a child object of the object instantiated by occurrence object **514.** In particular, when occurrence object **514** is the parent object of occurrence object **500** and occurrence object **514** is the child object of a usage object, occurrence object **500** may be the instantiation of a child object of an in-place definition object or the instantiation of a child object of a usage object.

Occurrence object **500** may be the instantiation of occurrence object **508.** For example, when occurrence object **514** is an instantiation of a usage object, occurrence object **500** may be an instantiation of the occurrence object that is a child object of this usage object.

In these illustrative examples, occurrence object **500** may have set of child objects **516.** Set of child objects **516** may include n child objects. In particular, set of child objects **516** may include any number of occurrence objects. The number of occurrence objects in set of child objects **516** may be equal to the number of children of the object in potential objects **502** instantiated by occurrence object **500.** Occurrence object **518** may be an example of an occurrence object in set of child objects **516.**

Referring now to **Figures 6-9****,** **Figure 6** is an illustration of a reusable definition configuration object in the form of a block diagram depicted in accordance with an illustrative embodiment. In these illustrative examples, reusable definition configuration object **600** may be one example of a definition configuration object that belongs to a domain configuration class derived from definition configuration class **138** of configuration classes **126** in **Figure 1****.** Any reusable definition configuration object described herein may be implemented in a manner similar to reusable definition configuration object **600.**

Reusable definition configuration object **600** corresponds to a reusable definition object, such as, for example, reusable definition object **601.** Reusable definition configuration object **600** may represent a configuration for the component represented by reusable definition object **601.**

In this manner, reusable definition configuration object **600** may correspond to only one reusable definition object. However, any number of reusable definition configuration objects may correspond to the same reusable definition object. In other words, the component represented by reusable definition object **601** may have multiple configurations, which may be represented by multiple reusable definition configuration objects.

As depicted, reusable definition configuration object **600** may not have any parent objects. In other words, reusable definition configuration object **600** may not be the child object of any other configuration objects in model **114** in **Figure 1****.** Consequently, reusable definition configuration object **600** may be referred to as a root configuration object and, in particular, a root definition configuration object.

Reusable definition configuration object **600** may be part of a secondary hierarchical organization in number of secondary hierarchical organizations **150,** such as secondary hierarchical organization **152,** in **Figure 1****.** For example, reusable definition configuration object **600** may be the root configuration object of main structure **154** in secondary hierarchical organization **152** or the root configuration object of an associated structure in number of associated structures **156** in secondary hierarchical organization **152** in **Figure 1****.**

In other words, reusable definition configuration object **600** may be the configuration object at the topmost level of main structure **154** or the configuration object at the topmost level of an associated structure in number of associated structures **156.** Only one reusable definition configuration object may be present in main structure **154** of secondary hierarchical organization **152** in **Figure 1****.** Further, only one reusable definition configuration object may be present in each associated structure in number of associated structures **156** of secondary hierarchical organization **152.**

However, reusable definition configuration object **600** may represent a configuration for a component that may be used any number of times in product **102** in **Figure 1****.** In these illustrative examples, a usage of the configuration represented by reusable definition configuration object **600** may be represented as an instantiation of reusable definition configuration object **600** in secondary hierarchical organization **152.** Each instantiation of reusable definition configuration object **600** may take the form of a usage configuration object belonging to usage configuration class **140** of configuration classes **126** in **Figure 1****.**

As one illustrative example, when reusable definition object **601** represents a family of hydraulic pumps, reusable definition configuration object **600** may represent one configuration or member for this family of pumps. This configuration may be, for example, a heavy-duty pump versus a light-duty pump.

In these illustrative examples, reusable definition configuration object **600** may be a parent object for set of child objects **602.** Set of child objects **602** may include n child objects. In particular, when reusable definition object **601** has one or more child objects, reusable definition configuration object **600** may have one or more corresponding child objects. In this manner, each child object of reusable definition object **601** may have a corresponding child object in set of child objects **602** for reusable definition configuration object **600.**

For example, when a child object of reusable definition object **601** is an in-place definition object, set of child objects **602** may include an in-place definition configuration object, such as in-place definition configuration object **604.** When a child object of reusable definition object **601** is a usage object, set of child objects **602** may include a usage configuration object, such as usage configuration object **606.**

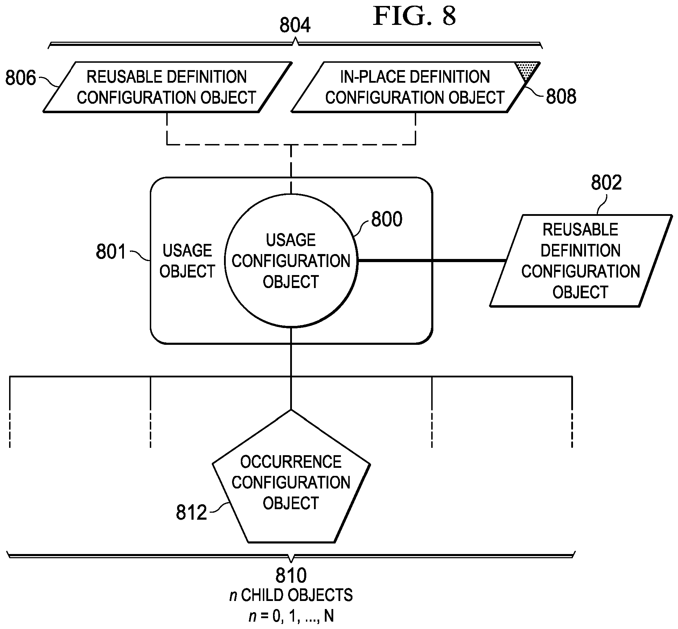

In-place definition configuration objects are described in greater detail in **Figure 7** below. Additionally, usage configuration objects are described in greater detail in **Figure 8** below.

**Figure 7** is an illustration of an in-place definition configuration object in the form of a block diagram depicted in accordance with an illustrative embodiment. In these illustrative examples, in-place definition configuration object **700** may be one example of a definition configuration object that belongs to a domain configuration class derived from definition configuration class **138** of configuration classes **126** in **Figure 1****.**

Any in-place definition configuration object described herein may be implemented in a manner similar to in-place definition configuration object **700.** An in-place definition configuration object that is a child object of a reusable definition configuration object, such as reusable definition configuration object **600** in **Figure 6****,** may be implemented in a manner similar to in-place definition configuration object **700.**

Further, in-place definition configuration object **700** may be part of a secondary hierarchical organization in number of secondary hierarchical organizations **150,** such as secondary hierarchical organization **152,** in **Figure 1****.** In-place definition configuration object **700** may correspond to an in-place definition object, such as in-place definition object **701.** For example, in-place definition configuration object **700** may represent the configuration for a component represented by in-place definition object **701.**

In these illustrative examples, in-place definition configuration object **700** corresponds to only one in-place definition object. However, any number of in-place definition configuration objects may correspond to the same in-place definition object.

As depicted in these examples, in-place definition configuration object **700** may be a child object of one or more configuration objects in potential parent objects **702.** Potential parent objects **702** for in-place definition configuration object **700** may include any number of definition configuration objects belonging to definition configuration class **138** of configuration classes **126** in **Figure 1****.**

For example, potential parent objects **702** for in-place definition configuration object **700** may include reusable definition configuration object **704** and in-place definition configuration object **706.** In one illustrative example, in-place definition configuration object **700** may have two parent objects that are both reusable definition configuration objects corresponding to the same reusable definition object. In this manner, these two reusable definition configuration objects may share in-place definition configuration object **700** as a child object.

Further, as depicted, in-place definition configuration object **700** may be a parent object for set of child objects **708.** Set of child objects **708** may include n child objects. When set of child objects **708** is not a null set, set of child objects **708** may include one or more in-place definition configuration objects and/or one or more usage configuration objects. In-place definition configuration object **710** and usage configuration object **712** are examples of child objects in set of child objects **708.** Usage configuration objects are described in greater detail in **Figure 8** below.

**Figure 8** is an illustration of a usage configuration object in the form of a block diagram depicted in accordance with an illustrative embodiment. In this illustrative example, usage configuration object **800** may be an example of one implementation for a usage configuration object belonging to a domain configuration class derived from usage configuration class **140** of configuration classes **126** in **Figure 1****.** Any usage configuration object described herein may be implemented in a manner similar to usage configuration object **800.**

A usage configuration object that is a child object of a reusable definition configuration object, such as reusable definition configuration object **600** in **Figure 6****,** or a child object of an in-place definition configuration object, such as in-place definition configuration object **700** in **Figure 7****,** may be implemented in a manner similar to usage configuration object **800.** Usage configuration object **800** may be part of a secondary hierarchical organization in number of secondary hierarchical organizations **150,** such as secondary hierarchical organization **152** in **Figure 1****.**

Usage configuration object **800** may correspond to a usage object, such as, for example, usage object **801.** Usage object **801** may be an instantiation of a corresponding reusable definition object. Consequently, usage configuration object **800** may be an instantiation of a reusable definition configuration object corresponding to the reusable definition object instantiated by usage object **801.**

For example, reusable definition configuration object **802** may correspond to the reusable definition object instantiated by usage object **801.** Usage configuration object **800** may be an instantiation of reusable definition configuration object **802.**

As depicted, usage configuration object **800** may be the child object of one or more of potential parent objects **804.** Potential parent objects **804** for usage configuration object **800** include reusable definition configuration object **806** and in-place definition configuration object **808.**

In these illustrative examples, more than one parent object in potential parent objects **804** may share usage configuration object **800** when the parent objects correspond to the same definition object. For example, three reusable definition configuration objects corresponding to the same reusable definition object may share usage configuration object **800** as a child object.

As depicted, usage configuration object **800** may be the parent object for set of child objects **810.** Set of child objects **810** may include n child objects. In particular, set of child objects **810** may include any number of occurrence configuration objects belonging to occurrence configuration class **142** of configuration classes **126** in **Figure 1****.**

In these illustrative examples, when usage object **801** has one or more child objects, usage configuration object **800** may have one or more corresponding child objects. In other words, each child object of usage object **801** may have a corresponding child object in set of child objects **810** for usage configuration object **800.**

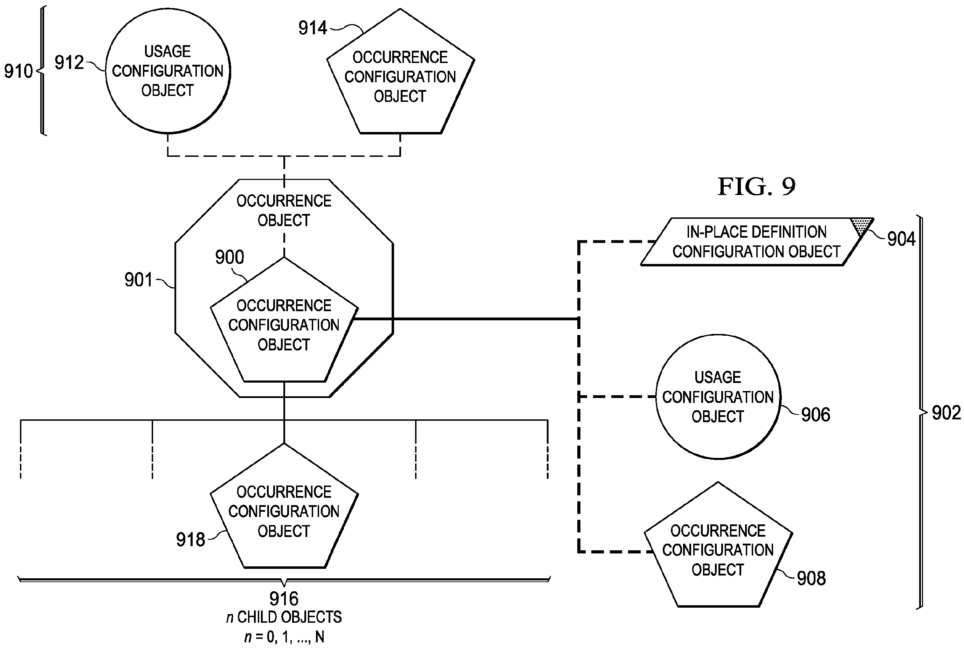

In this manner, all child objects in set of child objects **810** may be occurrence configuration objects. Occurrence configuration object **812** is an example of an occurrence configuration object in set of child objects **810.** Occurrence configuration objects are described in greater detail in **Figure 9** below.

**Figure 9** is an illustration of an occurrence configuration object in the form of a block diagram depicted in accordance with an illustrative embodiment. In this illustrative example, occurrence configuration object **900** may be an example of one implementation for an occurrence configuration object belonging to a domain configuration class derived from occurrence configuration class **142** of configuration classes **126** in **Figure 1****.** Any occurrence configuration object described herein may be implemented in a manner similar to occurrence configuration object **900.**

An occurrence configuration object that is a child object of a usage configuration object, such as usage configuration object **800** in **Figure 8****,** may be implemented in a manner similar to occurrence configuration object **900.** Occurrence configuration object **812** in **Figure 8** may be part of a secondary hierarchical organization in number of secondary hierarchical organizations **150,** such as secondary hierarchical organization **152,** in **Figure 1****.**

As depicted, occurrence configuration object **900** may correspond to an occurrence object, such as occurrence object **901.** Occurrence object **901** may be an instantiation of a child object of a usage object. Consequently, occurrence configuration object **900** may be an instantiation of a configuration object corresponding to a child object of the usage object instantiated by occurrence object **901.**

For example, occurrence configuration object **900** may be an instantiation of one of potential configuration objects **902.** Potential configuration objects **902** include in-place definition configuration object **904,** usage configuration object **906,** and occurrence configuration object **908.**

As depicted, occurrence configuration object **900** may be the child object of one or more of potential parent objects **910.** Potential parent objects **910** for occurrence configuration object **900** may include usage configuration object **912** and occurrence configuration object **914.**

In these illustrative examples, more than one parent object in potential parent objects **910** may share occurrence configuration object **900** when the parent objects correspond to the same usage object or the same occurrence object. For example, three usage configuration objects corresponding to the same usage object may share occurrence configuration object **900** as a child object.

As depicted, occurrence configuration object **900** may be the parent object for set of child objects **916.** Set of child objects **916** may include n child objects. The number of child objects in set of child objects **916** may be equal to and correspond to the number of child objects of the object in potential configuration objects **902** instantiated by occurrence configuration object **900.** In particular, set of child objects **916** may include any number of occurrence configuration objects belonging to occurrence configuration class **142** of configuration classes **126** in **Figure 1****.**

In these illustrative examples, when occurrence object **901** has one or more child objects, occurrence configuration object **900** may have one or more corresponding child objects. In other words, each child object of occurrence object **901** may have a corresponding child object in set of child objects **916** for occurrence configuration object **900.**

In this manner, all child objects in set of child objects **916** may be occurrence configuration objects. Occurrence configuration object **918** is an example of an occurrence configuration object in set of child objects **916.**

### DIFFERENT TYPES OF AUXILIARY OBJECTS

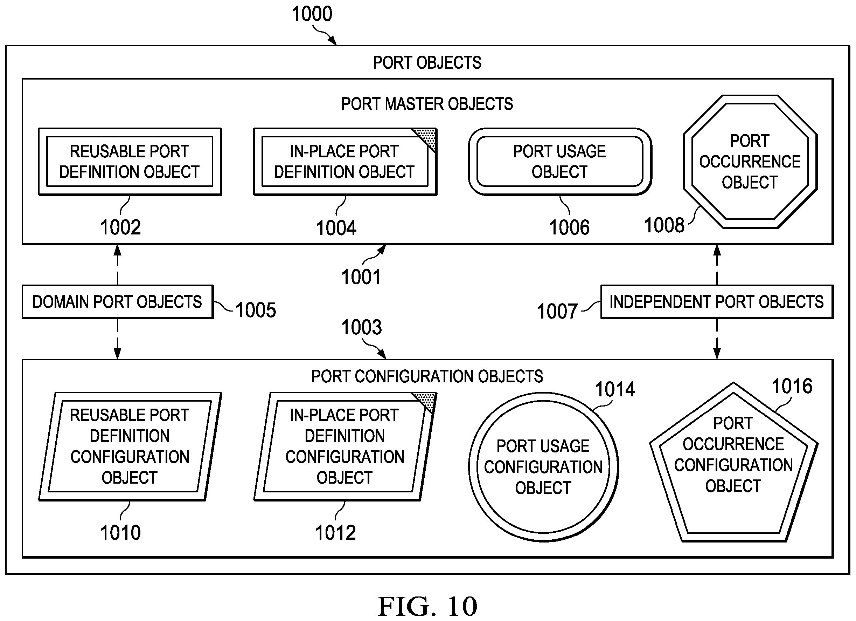

**Figures 10-15** are illustrations of the different types of auxiliary objects that may be used in a model, in the form of block diagrams, depicted in accordance with an illustrative embodiment. In particular, **Figures 10-15** are illustrations of the different types of auxiliary objects that may be present in set of auxiliary objects **127** in model **114** in **Figure 1** in the form of block diagrams.

**Figure 10** is an illustration of port objects in the form of a block diagram depicted in accordance with an illustrative embodiment. Port objects **1000** are examples of auxiliary objects that may be included in set of auxiliary objects **127** in **Figure 1****.** In particular, port objects **1000** are examples of objects belonging to port class **158** in **Figure 1****.**

Port objects **1000** may include port master objects **1001** and port configuration objects **1003.** Port master objects **1001** may be considered either domain port objects **1005** or independent port objects **1007.** Further, port configuration objects **1003** may be considered either domain port objects **1005** or independent port objects **1007.**

Domain port objects **1005** may be port objects belonging to port class **158** in **Figure 1** when port class **158** is derived from one of domain classes **119** in **Figure 1** and thus, derived from the fundamental class from which the domain class is derived. In this manner, domain port objects **1005** may be specific to selected domain **115** represented by domain classes **119** in **Figure 1****.** Independent port objects **1007** may be port objects belonging to port class **158** when port class **158** is derived from one of fundamental classes **121** in **Figure 1****.** In this manner, independent port objects **1007** may be independent of selected domain **115.**

Each of port master objects **1001** may represent a connection point on a product or component of the product. This connection point may be a physical connection point or a logical connection point. For example, a port master object may represent a physical interface, a physical connection element, an outlet, a jack, a connector, a logical interface, a data interface, a virtual data connection, or some other type of connection point. The behavior of the port master object within a model may be based on the fundamental class from which the port master object is derived.

Port master objects **1001** may include reusable port definition object **1002,** in-place port definition object **1004,** port usage object **1006,** and port occurrence object **1008.** Reusable port definition object **1002** may behave in a manner similar to, for example, reusable definition object **200** in **Figure 2****.** In-place port definition object **1004** may behave in a manner similar to, for example, in-place definition object **300** in **Figure 3****.** Port usage object **1006** may behave in a manner similar to, for example, usage object **400** in **Figure 4****.** Port occurrence object **1008** may behave in a manner similar to, for example, occurrence object **500** in **Figure 5****.**

Each of port configuration objects **1003** may correspond to a port master object. The port configuration object may represent a particular configuration for the connection point represented by the particular port master object.

As depicted, port configuration objects **1003** may include reusable port definition configuration object **1010,** in-place port definition configuration object **1012,** port usage configuration object **1014,** and port occurrence configuration object **1016.** Reusable port definition configuration object **1010,** in-place port definition configuration object **1012,** port usage configuration object **1014,** and port occurrence configuration object **1016** may correspond to a reusable port definition object **1002,** an in-place port definition object **1004,** a port usage object **1006,** and a port occurrence object **1008,** respectively.

Reusable port definition configuration object **1010** may behave in a manner similar to, for example, reusable definition configuration object **600** in **Figure 6****.** In-place port definition configuration object **1012** may behave in a manner similar to, for example, in-place definition configuration object **700** in **Figure 7****.** Port usage configuration object **1014** may behave in a manner similar to, for example, usage configuration object **800** in **Figure 8****.** Port occurrence configuration object **1016** may behave in a manner similar to, for example, occurrence configuration object **900** in **Figure 9****.**

When used in a model, such as model **114** in **Figure 1****,** a portion of port objects **1000** may be considered as belonging to a particular category. In other words, one, some, or all of the port objects in a model may belong to one of a plurality of categories. The behavior of a port object within the model may also depend on the category to which that port object belongs. A port master object and a port configuration object corresponding to the port master object may belong to the same category.

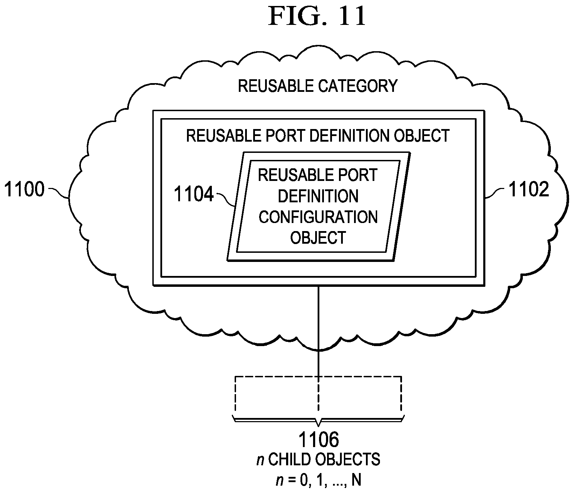

The potential categories to which a port object may belong may include a reusable category, an interface category, and a connectable category. The particular category to which a port object belongs may depend on the location of the port object within the organization of the model and the parent object of the port object. These categories are described in greater detail in **Figures 11-13****.**

**Figure 11** is an illustration of a reusable category for port objects in the form of a block diagram depicted in accordance with an illustrative embodiment. Reusable category **1100** may be an example of a category to which port objects may belong. A port object that belongs to reusable category **1100** may also be referred to as a reusable port definition object in some cases.

As depicted, reusable port definition object **1102** may belong to reusable category **1100.** A reusable port definition object may be the only type of port master object that can belong to reusable category **1100.** Further, reusable port definition configuration object **1104** may correspond to reusable port definition object **1102.** Consequently, reusable port definition configuration object **1104** may also be considered as belonging to reusable category **1100.** A reusable port definition configuration object may be the only type of port configuration object that may belong to reusable category **1100.**

A port object belonging to reusable category **1100** may be reusable. In other words, a port object belonging to reusable category **1100** may be instantiated within a model. In these illustrative examples, a port object belonging to reusable category **1100** may be required to be a root object. In this manner, a root object belonging to reusable category **1100** may not be the child object of any other object. This root object may be the root object for an auxiliary associated structure, such as one of number of auxiliary associated structures **165** in **Figure 1****.**

For example, reusable port definition object 1102 may be a root object for an auxiliary associated structure in a model. Reusable port definition object **1102** may be instantiated as a port usage object that is a child object of an object within a primary hierarchical organization for the model. Consequently, reusable port definition configuration object **1104** corresponding to reusable port definition object **1102** may be instantiated as a port usage configuration object corresponding to the port usage object.

As depicted, reusable port definition object **1102** may have set of child objects **1106.** Set of child objects **1106** may include n child objects. Set of child objects **1106** belonging to reusable port definition object **1102** may not be considered as belonging to reusable category **1100.**

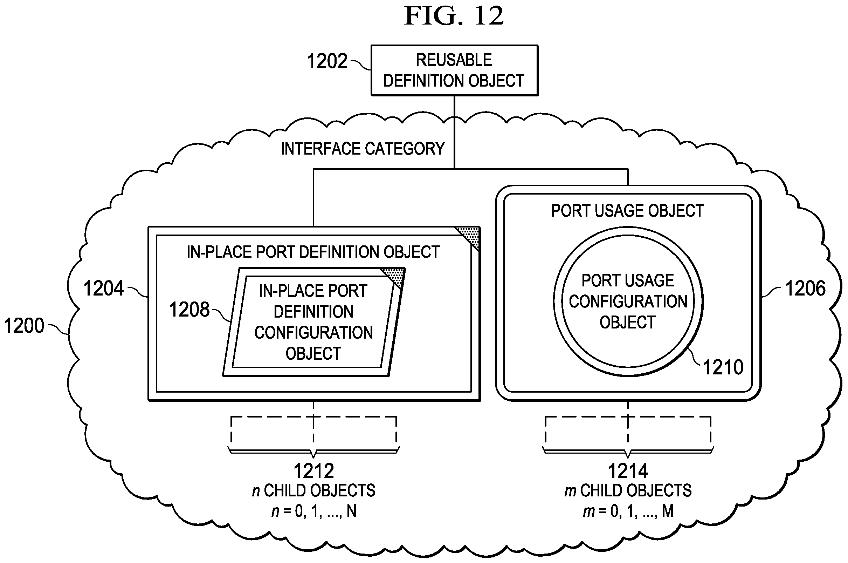

**Figure 12** is an illustration of an interface category for port objects in the form of a block diagram depicted in accordance with an illustrative embodiment. Interface category **1200** may be an example of a category to which port objects belong. A port object that belongs to interface category **1200** may also be referred to as an interface port object in some cases.

A port object that belongs to interface category **1200** may not be reusable. In other words, a port object that belongs to interface category **1200** may not be instantiated by a usage within a model. Further, a port object that belongs to interface category **1200** may not be connectable to any other port object. Rather, another port object that is connectable may be used to implement a port object belonging to interface category **1200.** This connectable port object may then be connected to another connectable port object that is in the same hierarchy as the connectable port object.

In this illustrative example, any port master object that is a child object of a reusable definition object, such as reusable definition object **1202,** may belong to interface category **1200.** In other words, any port master object that is a child object of the root object of a primary hierarchical organization may belong to interface category **1200.**

For example, in-place port definition object **1204** and port usage object **1206** may be child objects of reusable definition object **1202.** Reusable definition object **1202** may be the root object of a primary hierarchical organization.

Further, any port configuration object that corresponds to a port master object belonging to interface category **1200** may also belong to interface category **1200.** For example, in-place port definition configuration object **1208** and port usage configuration objet **1210** may correspond to in-place port definition object **1204** and port usage object **1206,** respectively. Consequently, in-place port definition configuration object **1208** and port usage configuration object **1210** may also belong to interface category **1200.**

In these illustrative examples, any child objects belonging to a port object belonging to interface category **1200** and any child objects within the port substructure formed by this port object may be considered as belonging to interface category **1200.** For example, in-place port definition object **1204** may have set of child objects **1212,** and port usage object **1206** may have set of child objects **1214.** Set of child objects **1212** may include n child objects, while set of child objects **1214** may include m child objects.

In these illustrative examples, both set of child objects **1212** and set of child objects **1214** may be considered part of interface category **1200.** Further, any child objects of these child objects may also be considered part of interface category **1200.**

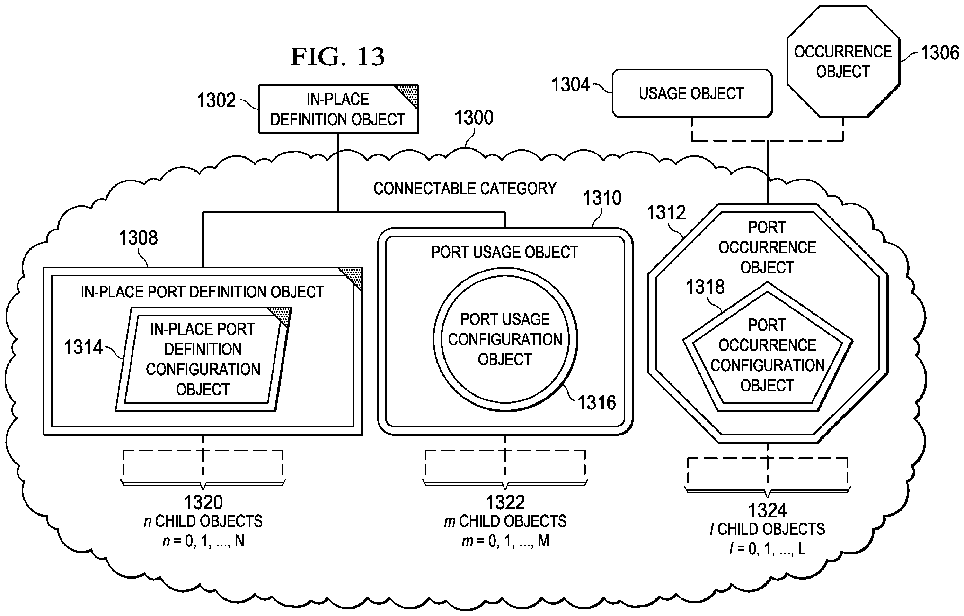

**Figure 13** is an illustration of a connectable category for port objects in the form of a block diagram depicted in accordance with an illustrative embodiment. Connectable category **1300** may be an example of a category to which port objects may belong. A port object that belongs to connectable category **1300** may also be referred to as a connectable port object in some cases.

A port object that belongs to connectable category **1300** may be connected to another port object belonging to connectable category **1300.** Further, a port object belonging to connectable category **1300** may be used to implement a port object belonging to interface category **1200** in **Figure 12****.**

In these illustrative examples, any port master object that is a child object of a master object, which is not a root object, may belong to connectable category **1300.** For example, any port master object that is the child object of in-place definition object **1302,** usage object **1304,** or occurrence object **1306** within a primary hierarchical organization may belong to connectable category **1300.**

For example, in-place port definition object **1308** and port usage object **1310** may be the child objects of in-place definition object **1302.** Port occurrence object **1312** may be the child object of either usage object **1304** or occurrence object **1306.** As depicted, in-place port definition object **1308,** port usage object **1310,** and port occurrence object **1312** may all belong to connectable category **1300.**

Further, any port configuration object corresponding to a port master object that belongs to connectable category **1300** may also belong to connectable category **1300.** In this manner, in-place port definition configuration object **1314** corresponding to in-place port definition object **1308,** port usage configuration object **1316** corresponding to port usage object **1310,** and port occurrence configuration object **1318** corresponding to port occurrence object **1312** may all belong to connectable category **1300.**

Additionally, all child objects of a port object belonging to connectable category **1300** may also be considered as belonging to connectable category **1300.** For example, in-place port definition object **1308** may have set of child objects **1320,** port usage object **1310** may have set of child objects **1322,** and port occurrence object **1312** may have set of child objects **1324.** Set of child objects **1320** may include n child objects, set of child objects **1322** may include *m* child objects, and set of child objects **1324** may include *l* child objects.

Set of child objects **1320,** set of child objects **1322,** and set of child objects **1324** may all belong to connectable category **1300.** Further, any child objects of these child objects may also belong to connectable category **1300.**

Connectable category **1300** in **Figure 13****,** interface category **1200** in **Figure 12****,** and reusable category **1100** in **Figure 11** are examples of categories for port objects. However, in some illustrative examples, not all port objects may belong to one of these categories. In other illustrative examples, other categories may be present.

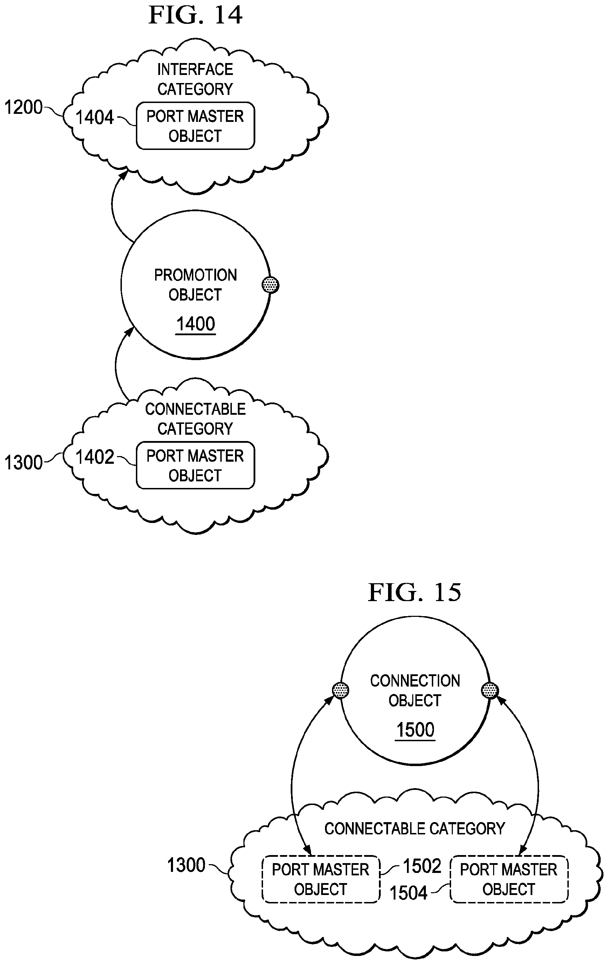

**Figure 14** is an illustration of a promotion object in the form of a block diagram depicted in accordance with an illustrative embodiment. In these illustrative examples, promotion object **1400** may be an example of an object belonging to promotion class **162** in **Figure 1****.**

Promotion object **1400** may be used in a model to indicate that a connectable port object belonging to connectable category **1300** is used to implement an interface port object belonging to interface category **1200.** For example, promotion object **1400** may be connected to both port master object **1402** belonging to connectable category **1300** and port master object **1404** belonging to interface category **1200.** Promotion object **1400** may be used to indicate that port master object **1402** implements port master object **1404.** In other words, promotion object **1400** may promote port master object **1402** to port master object **1404.**

**Figure 15** is an illustration of a connection object in the form of a block diagram depicted in accordance with an illustrative embodiment. In these illustrative examples, connection object **1500** may be an example of an object belonging to connection class **164** in **Figure 1****.**

Connection object **1500** may be used in a model to connect a connectable port object belonging to connectable category **1300** to another port object belonging to connectable category **1300.** For example, connection object **1500** may be connected to both port master object **1502** belonging to connectable category **1300** and port master object **1504** belonging to connectable category **1300.** Connection object **1500** may connect port master object **1502** to port master object **1504.**

The illustrations of reusable definition object **200** in **Figure 2****,** in-place definition object **300** in **Figure 3****,** usage object **400** in **Figure 4****,** occurrence object **500** in **Figure 5****,** reusable definition configuration object **600** in **Figure 6****,** in-place definition configuration object **700** in **Figure 7****,** usage configuration object **800** in **Figure 8****,** occurrence configuration object **900** in **Figure 9****,** port objects **1000** in **Figure 10****,** reusable category **1100** of port objects in **Figure 2****,** interface category **1200** of port objects in **Figure 12****,** connectable category **1300** of port objects in **Figure 13****,** promotion object **1400,** in **Figure 14****,** and connection object **1500** in **Figure 15** are not meant to imply physical or architectural limitations to the manner in which an illustrative embodiment may be implemented. Other components in addition to or in place of the ones illustrated may be used. Some components may be optional.

### MODELING AN EXTENDED GENERIC PRODUCT STRUCTURE

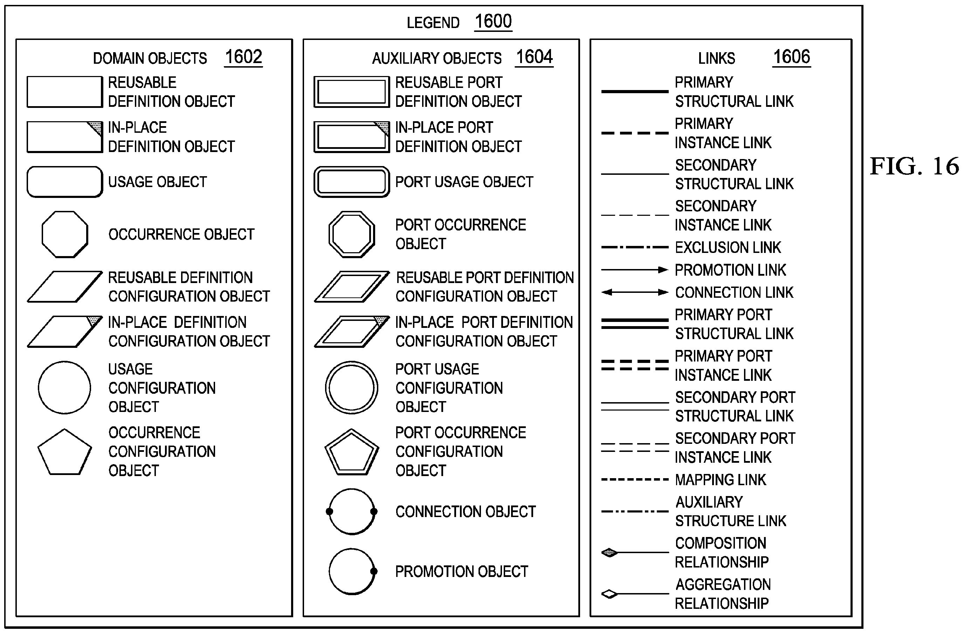

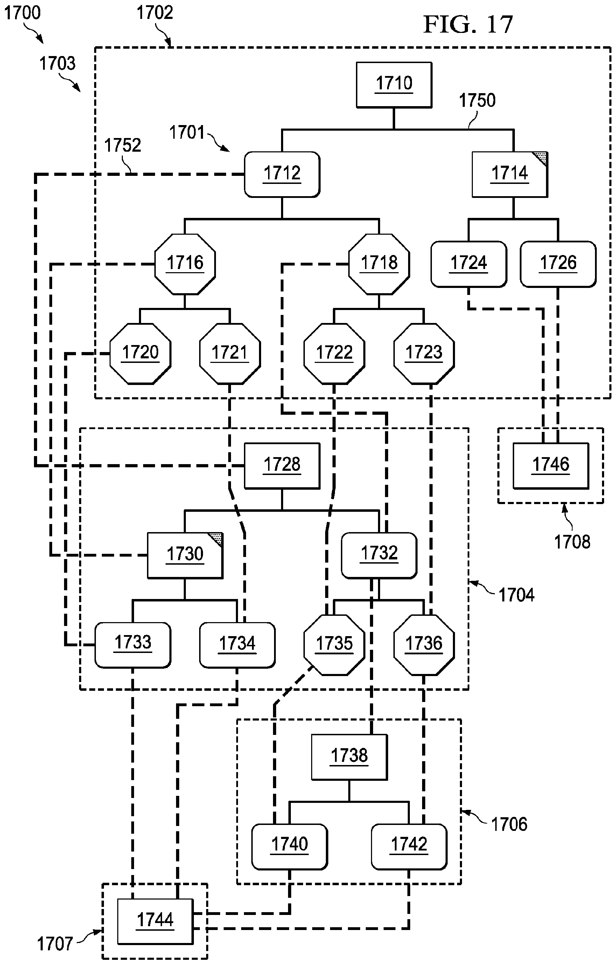

**Figure 16** is an illustration of a legend of objects depicted in accordance with an illustrative embodiment. In **Figure 16****,** legend **1600** includes a listing of domain objects **1602,** auxiliary objects **1604,** and links **1606** that appear in the illustrations of models in **Figures 17-32** below. The models illustrated in **Figures 17-32** may be examples of implementations for model **114** in **Figure 1****.**

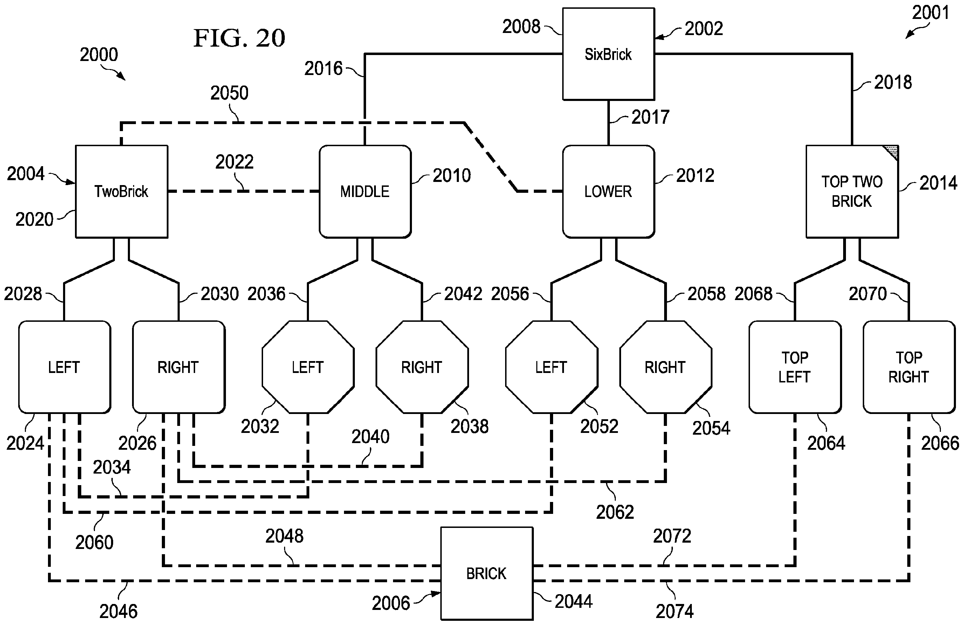

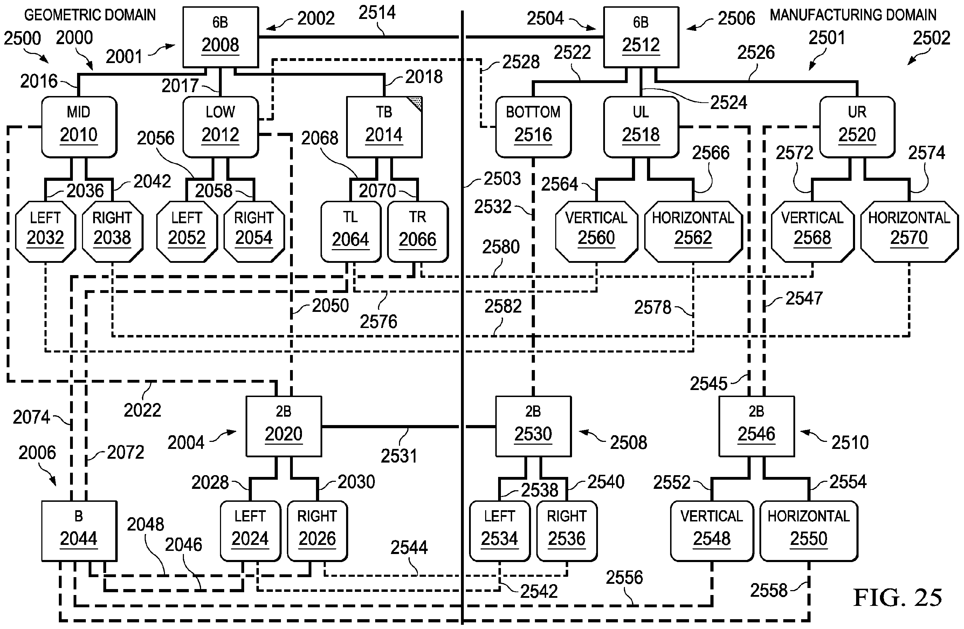

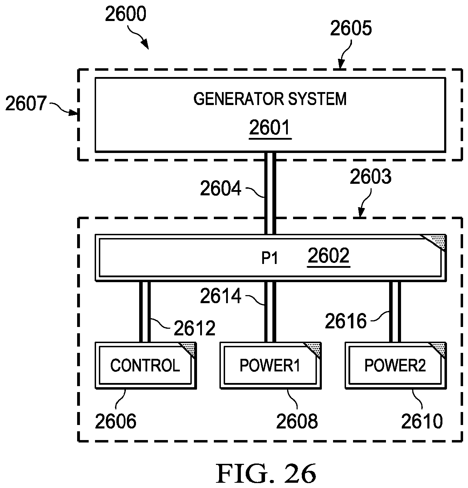

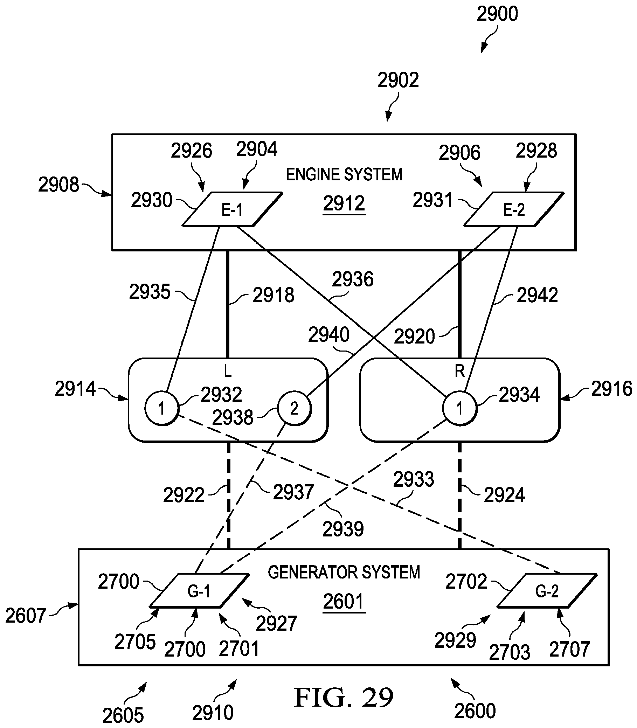

In these illustrative examples, all of the objects in model **1703** in **Figures 17-18****,** model **2000** in **Figures 20-21****,** **Figure 23****,** and **Figure 25****,** model **2501** in **Figure 25** may be domain objects. Further, any object in model **2600** in **Figures 26-28** and model **2900** in **Figures 29-30** that is not a port object, a promotion object, or a connection object may be one of a domain master object and a domain configuration object.

**Figure 17** is an illustration of a primary hierarchical organization depicted in accordance with an illustrative embodiment. In this illustrative example, primary hierarchical organization **1700** is an example of one implementation of primary hierarchical organization **144** in **Figure 1****.**

Primary hierarchical organization **1700** is formed by master objects **1701.** Master objects **1701** may be domain master objects in this illustrative example. In particular, master objects **1701** are examples of objects in group of domain master objects **128** in **Figure 1****.** Primary hierarchical organization **1700** with master objects **1701** may be a part of model **1703.** Model **1703** may be an example of one implementation for model **114** in **Figure 1****.**

As depicted, primary hierarchical organization 1700 includes main structure **1702,** associated structure **1704,** associated structure **1706,** associated structure **1707,** and associated structure **1708.** Main structure **1702** may be an example of one implementation for main structure **146** in primary hierarchical organization **144** in **Figure 1****.** Associated structure **1704,** associated structure **1706,** associated structure **1707,** and associated structure **1708** may be examples of one implementation for number of associated structures **148** in primary hierarchical organization **144** in **Figure 1****.**

In this illustrative example, main structure **1702** may include reusable definition object **1710,** usage object **1712,** in-place definition object **1714,** occurrence object **1716,** occurrence object **1718,** occurrence object **1720,** occurrence object **1721,** occurrence object **1722,** occurrence object **1723,** usage object **1724,** and usage object **1726.** Reusable definition object **1710** may be the root object of main structure **1702.**

Reusable definition object **1710** may represent a product, such as product **102** in **Figure 1****.** In this illustrative example, product **102** is an assembly component. As depicted, reusable definition object **1710** may be the parent object of usage object **1712** and in-place definition object **1714.**

In this illustrative example, usage object **1712** may be an instantiation of reusable definition object **1728.** Reusable definition object **1728** may represent an assembly component. Usage object **1712** may represent the usage of this assembly component in the product represented by reusable definition object **1710.** Reusable definition object **1728** may be the root object of associated structure **1704.**

Associated structure **1704** may be independent from main structure **1702.** Associated structure **1704** may include reusable definition object **1728,** in-place definition object **1730,** usage object **1732,** usage object **1733,** usage object **1734,** occurrence object **1735,** and occurrence object **1736.**

As depicted, reusable definition object **1728** may be the parent object of in-place definition object **1730** and usage object **1732.** Usage object **1732** may be an instantiation of reusable definition object **1738.** Reusable definition object **1738** may represent an assembly component and usage object **1732** may represent the usage of this assembly component in the product represented by reusable definition object **1710.**

Reusable definition object **1738** may be the root object of associated structure **1706.** Associated structure **1706** may be separate from associated structure **1704.** Associated structure **1706** may include reusable definition object **1738,** usage object **1740,** and usage object **1742.**

Both usage object **1740** and usage object **1742** may be child objects of reusable definition object **1738.** Further, both usage object **1740** and usage object **1742** may be instantiations of reusable definition object **1744.** Reusable definition object **1744** is the root object of associated structure **1707.**

Associated structure **1707** may be separate from associated structure **1706.** As depicted, associated structure **1707** may only comprise one hierarchical level in this illustrative example. In other words, reusable definition object **1744** may represent a leaf component. Usage object **1740** and usage object **1742** may represent two usages of this leaf component in the product represented by reusable definition object **1710.**

When reusable definition object **1738** in associated structure **1706** is instantiated as usage object **1732** in associated structure **1704,** all objects in associated structure **1706** under reusable definition object **1738** may be instantiated as occurrence objects under usage object **1732** in associated structure **1704.** For example, when usage object **1732** is created, usage object **1740** may be instantiated as occurrence object **1735,** and usage object **1742** may be instantiated as occurrence object **1736.**

Further, in this illustrative example, in-place definition object **1730** may be the parent object of usage object **1733** and usage object **1734.** Both usage object **1733** and usage object **1734** may be instantiations of reusable definition object **1744.**

When usage object **1712** in main structure **1702** is created, all objects within associated structure **1704** below reusable definition object **1728** may be instantiated as occurrence objects under usage object **1712.** For example, usage object **1712** may be the parent object of occurrence object **1716** and occurrence object **1718.**

In-place definition object **1730** may be instantiated as occurrence object **1716.** Occurrence object **1716** may be the parent object of occurrence object **1720** and occurrence object **1721.** Occurrence object **1720** may be the instantiation of usage object **1733.** Occurrence object **1721** may be the instantiation of usage object **1734.**

Further, usage object **1732** may be instantiated as occurrence object **1718** under usage object **1712.** Occurrence object **1718** may be the parent object of occurrence object **1722,** which may be the instantiation of occurrence object **1735.** Occurrence object **1723** may be the instantiation of occurrence object **1736.**

In this illustrative example, in-place definition object **1714** may be the parent object of usage object **1724** and usage object **1726.** Both usage object **1724** and usage object **1726** may be instantiations of reusable definition object **1746.** Reusable definition object **1746** may be the root object of associated structure **1708.** As depicted, associated structure **1708** comprises only one hierarchical level. In this manner, reusable definition object **1746** may represent a leaf component. Usage object **1724** and usage object **1726** may represent two usages of this leaf component in the product represented by reusable definition object **1710.**

In these illustrative examples, the different master objects that form primary hierarchical organization **1700** are connected to each other by primary structural links **1750.** In particular, the components belonging to a particular hierarchical structure are connected to each other in that hierarchical structure by one or more primary structural links **1750.**

As used herein, a "structural link" may be a link between two objects that indicates that one of the objects is the child object of the other object. A "primary structural link" may be a link between two master objects in a primary hierarchical organization. In these illustrative examples, a primary structural link may not connect a master object in one hierarchical structure with another master object in another hierarchical structure within a primary hierarchical organization.

Further, primary instance links **1752** may also be used in primary hierarchical organization **1700.** As used herein, an "instance link" may be a link between two objects that indicates that one object is the instantiation of the other object. A "primary instance link" may be a link between two master objects in a primary hierarchical organization.

Typically, a primary instance link may begin at a usage object or an occurrence object and end at the master object being instantiated by the usage object or the occurrence object. A primary instance link may cross from one hierarchical structure to another hierarchical structure within a primary hierarchical organization.

For example, a primary instance link may begin at a master object in a main structure and end at a master object in an associated structure. Further, the primary instance link may also indicate that the associated structure is instantiated or represented in the main structure. In this manner, the instantiation of a root object of an associated structure by a master object in the main structure, as indicated by a primary instance link, may mean that all of the objects in that associated structure are represented in the main structure. A primary instance link may not begin and end within a same hierarchical structure.

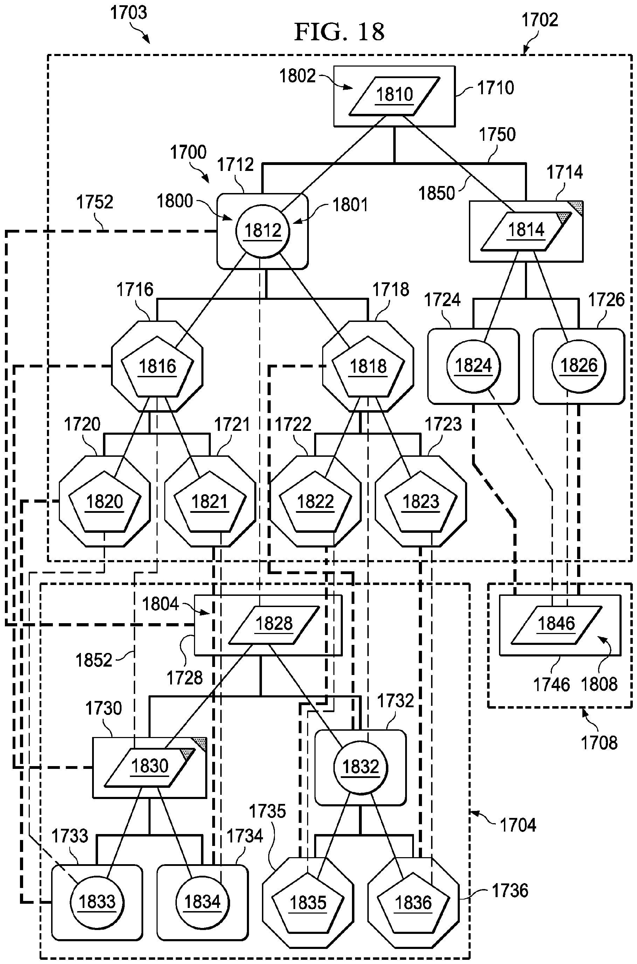

**Figure 18** is an illustration of a portion of a secondary hierarchical organization associated with a portion of a primary hierarchical organization depicted in accordance with an illustrative embodiment. In this illustrative example, secondary hierarchical organization **1800** may be associated with primary hierarchical organization **1700** in **Figure 17****.** Secondary hierarchical organization **1800** may also be part of model **1703.**

Only a portion of primary hierarchical organization **1700** from **Figure 17** is depicted in this example. In particular, main structure **1702,** associated structure **1704,** and associated structure **1708** are depicted. Further, only a portion of secondary hierarchical organization **1800** is depicted in this example.

In this illustrative example, secondary hierarchical organization **1800** may be formed by configuration objects **1801.** Configuration objects **1801** may be examples of domain configuration objects. In particular, configuration objects **1801** are examples of objects in group of domain configuration objects **130** in **Figure 1****.** Each of configuration objects **1801** may correspond to the master object within which the configuration object is located.

As depicted, secondary hierarchical organization **1800** may include main structure **1802** and associated structure **1804.** Main structure **1802** may be associated with main structure **1702** of primary hierarchical organization **1700.** Associated structure **1804** may be associated with associated structure **1704** of primary hierarchical organization **1700.** Associated structure **1808** may be associated with associated structure **1708** of primary hierarchical organization **1700.** Additionally, secondary hierarchical organization **1800** may include an associated structure (not shown) associated with associated structure **1706** in **Figure 17** and an associated structure (not shown) associated with associated structure **1707** in **Figure 17****.**

In this illustrative example, main structure **1802** may include reusable definition configuration object **1810,** usage configuration object **1812,** in-place definition configuration object **1814,** occurrence configuration object **1816,** occurrence configuration object **1818,** occurrence configuration object **1820,** occurrence configuration object **1821,** occurrence configuration object **1822,** occurrence configuration object **1823,** usage configuration object **1824,** and usage configuration object **1826.** Reusable definition configuration object **1810** may be the root object of main structure **1802.**

Reusable definition configuration object **1810** may correspond to reusable definition object **1710.** Reusable definition configuration object **1810** may represent a configuration for the product represented by reusable definition object **1710.** As depicted, reusable definition configuration object **1810** may have usage configuration object **1812** and in-place definition configuration object **1814** as child objects.

In this illustrative example, usage configuration object **1812** may be an instantiation of reusable definition configuration object **1828** corresponding to reusable definition object **1728.** Reusable definition configuration object **1828** may represent a particular configuration for the component represented by reusable definition object **1728.**

Reusable definition configuration object **1828** may be the root object of associated structure **1804.** Associated structure **1804** may include reusable definition configuration object **1828,** in-place definition configuration object **1830,** usage configuration object **1832,** usage configuration object **1833,** usage configuration object **1834,** occurrence configuration object **1835,** and occurrence configuration object **1836.**

As depicted, in-place definition configuration object **1830** and usage configuration object **1832** may be the child objects of reusable definition configuration object **1828.** In this manner, the particular configuration represented by reusable definition configuration object **1828** for the component represented by reusable definition object **1728** may comprise the component, represented by in-place definition object **1730,** having the configuration represented by in-place definition configuration object **1830.**

As depicted, usage configuration object **1833** and usage configuration object **1834** may be child objects of in-place definition configuration object **1830.** Both usage configuration object **1833** and usage configuration object **1834** may be instantiations of a reusable definition configuration object (not shown) for reusable definition object **1744** in **Figure 17****.**

Usage configuration object **1832** may be an instantiation of a reusable definition configuration object (not shown) corresponding to reusable definition object **1738** in **Figure 17****.** Occurrence configuration object **1835** and occurrence configuration object **1836** may be the child objects of usage configuration object **1832.** When usage configuration object **1832** is created, occurrence configuration object **1835** and occurrence configuration object **1836** may also be created.

Occurrence configuration object **1835** may be an instantiation of a usage configuration object (not shown) for usage object **1740** in **Figure 17****.** Occurrence configuration object **1836** may be an instantiation of a usage configuration object (not shown) for usage object **1742** in **Figure 17****.**

Further, when reusable definition configuration object **1828** is instantiated as usage configuration object **1812,** all of the configuration objects under reusable definition configuration object **1828** within associated structure **1804** may be instantiated under usage configuration object **1812.** For example, occurrence configuration object **1816** may be an instantiation of in-place definition configuration object **1830.** Occurrence configuration object **1818** may be an instantiation of usage configuration object **1832.**

Additionally, occurrence configuration object **1820** may be an instantiation of usage configuration object **1833.** Occurrence configuration object **1821** may be an instantiation of usage configuration object **1834.** Occurrence configuration object **1822** may be an instantiation of occurrence configuration object **1835.** Occurrence configuration object **1823** may be an instantiation of occurrence configuration object **1836.**

In this illustrative example, usage configuration object **1824** and usage configuration object **1826** may be the child objects of in-place definition configuration object **1814.** Both usage configuration object **1824** and usage configuration object **1826** may be instantiations of reusable definition configuration object **1846** corresponding to reusable definition object **1746.**

As depicted, the different configuration objects in secondary hierarchical organization **1800** may be connected to each other using secondary structural links **1850.** As used herein, a "secondary structural link" may be a link between two configuration objects in which one of the configuration objects is the parent object of the other configuration object. In these illustrative examples, a secondary structural link may not connect a configuration object in one hierarchical structure with another configuration object in another hierarchical structure within a secondary hierarchical organization.

Further, secondary instance links **1852** may also be present in secondary hierarchical organization **1800.** As used herein, a "secondary instance link" may be a link between two configuration objects in which one of the configuration objects is an instantiation of the other configuration object.

Typically, a secondary instance link may begin at a usage configuration object or an occurrence configuration object and end at the configuration object being instantiated by the usage configuration object or the occurrence configuration object. A secondary instance link may cross from one hierarchical structure to another hierarchical structure within a secondary hierarchical organization. However, a secondary instance link may not begin and end within a same hierarchical structure.

The illustrations of primary hierarchical organization **1700** in **Figure 17** and secondary hierarchical organization in **Figure 18** are not meant to imply physical or architectural limitations to the manner in which an illustrative embodiment may be implemented. Other components in addition to or in place of the ones illustrated may be used. Some components may be optional.

In some illustrative examples, one or more additional secondary hierarchical organizations may be associated with primary hierarchical organization **1700** in model **1703** in **Figures 17** and **18****.** For example, when a variant for the product represented by reusable definition object **1710** is to be added to model **1703,** an additional reusable definition configuration object may be added within reusable definition object **1710.**

This reusable definition configuration object may be the root object for the additional secondary hierarchical organization. The additional reusable definition configuration object may share one or more of the same child objects as reusable definition configuration object **1810.**

In one illustrative example, the additional reusable definition configuration object may have a new usage configuration object corresponding to usage object **1712** as a child object instead of usage configuration object **1812.** In this particular example, the additional reusable definition configuration object may still have in-place definition configuration object **1814** as a child object.

The different variations that may be possible within a product structure for the product represented by reusable definition object **1710** may be represented in model **1703** using different configuration objects and various secondary structural links and secondary instance links. Model **1703** may allow different variants of the product represented by reusable definition object **1710** to be represented in model **1703** without more redundant data than desired.

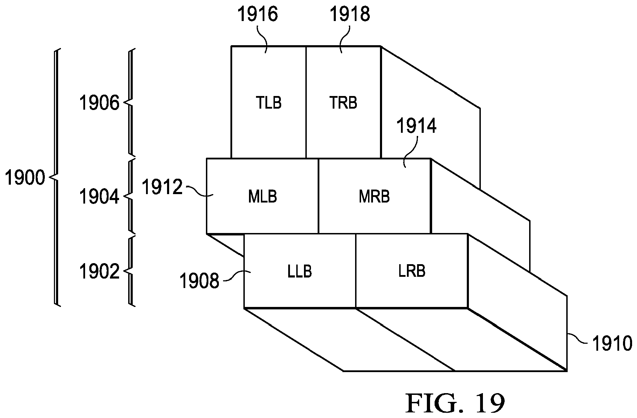

**Figure 19** is an illustration of a six-brick assembly depicted in accordance with an illustrative embodiment. Six-brick assembly **1900** may be an example of one implementation for product **102** in **Figure 1****.** In this illustrative example, six-brick assembly **1900** is an example of one implementation for tangible product **104** in **Figure 1****.** As depicted in **Figure 19****,** six-brick assembly **1900** may be made up of six physical bricks. The illustrative embodiment shown in **Figures 19-21** may be used to demonstrate the illustrative embodiments described with respect to **Figures 1-9****.** In other words, the illustrative embodiment shown in **Figures 19-21** illustrates one example of how to use the representation schemes described herein to represent a relatively simple assembly of physical objects in the form of a model.

While the illustrative embodiments described in **Figures 19-****21** may appear to represent six-brick assembly **1900** in a more complex manner than a simple description of the six bricks shown, the illustrative embodiments may minimize the amount of data needed to store all possible variations of six-brick assembly **1900.** For example, if the size or position of any given brick in six-brick assembly **1900** changes, then the illustrative embodiments allow for the minimum amount of data needed to store all possible variations of six-brick assembly **1900.**

If six-brick assembly **1900** were to be replaced by an aircraft model comprising 500,000 components, each of which may vary in different individual aircraft models, then the illustrative embodiments may provide a very substantial savings in both storage space for storing all such representations and also save processing overhead used to process such different representations. The illustrative embodiments shown in **Figures 19-21** do not serve to limit the claimed invention.

In this illustrative example, six-brick assembly **1900** may comprise lower two-brick assembly **1902,** middle two-brick assembly **1904,** and top two-brick assembly **1906.** Lower two-brick assembly **1902** may comprise brick **1908** and brick **1910.** Middle two-brick assembly **1904** may comprise brick **1912** and brick **1914.** Top two-brick assembly **1906** may comprise brick **1916** and brick **1918.** Bricks **1908, 1910, 1912, 1914, 1916,** and **1918** may be different usages of a particular type of brick.

**Figure 20** is an illustration of a model of a six-brick assembly depicted in accordance with an illustrative embodiment. Model **2000** may be an example of one manner in which a product structure for six-brick assembly **1900** in **Figure 19** may be modeled. Model **2000** may be an example of one implementation for model **114** in **Figure 1****.** In these illustrative examples, model **2000** for six-brick assembly **1900** may be a model of the product structure for six-brick assembly **1900** with respect to a geometric domain.

As depicted, model **2000** comprises primary hierarchical organization **2001.** The objects that form primary hierarchical organization **2001** may be domain master objects. Primary hierarchical organization **2001** may include main structure **2002,** associated structure **2004,** and associated structure **2006.** As depicted, reusable definition object **2008** may represent six-brick assembly **1900** in **Figure 19****.** Usage object **2010,** usage object **2012,** and in-place definition object **2014** may be child objects of reusable definition object **2008,** as indicated by primary structural link **2016,** primary structural link **2017,** and primary structural link **2018,** respectively.

Usage object **2010** may be an instantiation of reusable definition object **2020,** as indicated by primary instance link **2022.** Reusable definition object **2020** may represent a two-brick assembly.

In this illustrative example, usage object **2024** and usage object **2026** may be the child objects of reusable definition object **2020,** as indicated by primary structural link **2028** and primary structural link **2030,** respectively. When usage object **2010** is created in model **2000** to instantiate reusable definition object **2020,** usage object **2024** may be instantiated as occurrence object **2032,** as indicated by primary instance link **2034.** Occurrence object **2032** may be a child object of usage object **2010,** as indicated by primary structural link **2036.** Occurrence object **2032** may represent brick **1912** in middle two-brick assembly **1904** in **Figure 19****.**

Further, usage object **2026** may be instantiated as occurrence object **2038,** as indicated by primary instance link **2040.** Occurrence object **2038** may be a child object of usage object **2010,** as indicated by primary structural link **2042.** Occurrence object **2038** may represent brick **1914** in middle two-brick assembly **1904** in **Figure 19****.** In this manner, all child objects of reusable definition object **2020** may be instantiated as occurrence objects that are child objects of usage object **2010** when usage object **2010** is created.

Usage object **2024** and usage object **2026** may both be instantiations of reusable definition object **2044,** as indicated by primary instance link **2046** and primary instance link **2048,** respectively. Reusable definition object **2044** may represent a brick. Usage object **2024** may represent a left brick in a two-brick assembly and usage object **2026** may represent a right brick in a two-brick assembly. Further, usage object **2010** may represent middle two-brick assembly **1904** in **Figure 2****.**

Similarly, usage object **2012** may also be an instantiation of reusable definition object **2020,** as indicated by primary instance link **2050.** Usage object **2012** may represent lower two-brick assembly **1902** in **Figure 2****.** As depicted, occurrence object **2052** and occurrence object **2054** may be child objects of usage object **2012,** as indicated by primary structural link **2056** and primary structural link **2058,** respectively.

Occurrence object **2052** may be an instantiation of usage object **2024,** as indicated by primary instance link **2060.** Further, occurrence object **2052** may represent brick **1908** in lower two-brick assembly **1902** in **Figure 19****.** Occurrence object **2054** may be an instantiation of usage object **2026,** as indicated by primary instance link **2062.** Further, occurrence object **2054** may represent brick **1910** in lower two-brick assembly **1902** in **Figure 19****.**

In this illustrative example, in-place definition object **2014** may represent top two-brick assembly **1906** in **Figure 19****.** Usage object **2064** and usage object **2066** may be child objects of in-place definition object **2014,** as indicated by primary structural link **2068** and primary structural link **2070,** respectively.

Both usage object **2064** and usage object **2066** may be instantiations of reusable definition object **2044,** as indicated by primary instance link **2072** and primary instance link **2074,** respectively. Usage object **2064** may represent brick **1916** in top two-brick assembly **1906** in **Figure 19****.** Usage object **2066** may represent brick **1918** in top two-brick assembly **1906** in **Figure 19****.**

In this manner, associated structure **2006** may comprise reusable definition object **2044.** Associated structure **2004** may comprise reusable definition object **2020,** usage object **2024,** and usage object **2026.** Further, main structure **2002** may include reusable definition object **2008,** usage object **2010,** usage object **2012,** in-place definition object **2014,** occurrence object **2032,** occurrence object **2038,** occurrence object **2052,** occurrence object **2054,** usage object **2064,** and usage object **2066.**

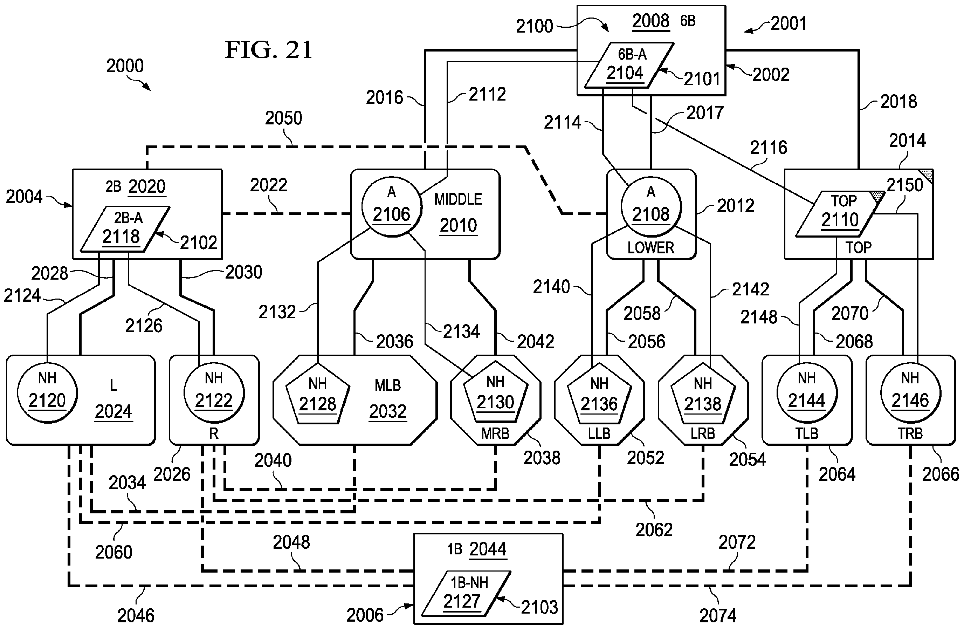

**Figure 21** is an illustration of a model of a six-brick assembly depicted in accordance with an illustrative embodiment. In this illustrative example, secondary hierarchical organization **2100** has been added to model **2000.** Secondary hierarchical organization **2100** may be associated with primary hierarchical organization **2001.** The objects that form secondary hierarchical organization **2100** may be domain configuration objects.

Secondary hierarchical organization **2100** may be added to represent a standard configuration for six-brick assembly **1900** in **Figure 19****.** As one illustrative example, secondary hierarchical organization **2100** may represent the standard configuration for six-brick assembly **1900** in which none of the bricks in six-brick assembly **1900** in **Figure 19** have any holes.

In this illustrative example, an initial secondary hierarchical organization, such as secondary hierarchical organization **2100,** that is to be associated with primary hierarchical organization **2001** may be created in a manner such that secondary hierarchical organization **2100** comprises at least one configuration object associated with each master object in primary hierarchical organization **2001.** Consequently, secondary hierarchical organization **2100** may be similar to primary hierarchical organization **2001.**

Secondary hierarchical organization **2100** may include main structure **2101,** associated structure **2102,** and associated structure **2103.** In these illustrative examples, adding and associating secondary hierarchical organization **2100** with primary hierarchical organization **2001** may include adding and associating main structure **2101** with main structure **2002,** associated structure **2102** with associated structure **2004,** and associated structure **2103** with associated structure **2006.**

Reusable definition configuration object **2104** may be added to reusable definition object **2008** to represent the standard configuration for six-brick assembly **1900** in **Figure 19** in which none of the bricks have holes. Reusable definition configuration object **2104** may be the root object for main structure **2101** in secondary hierarchical organization **2100.**

Usage configuration object **2106,** usage configuration object **2108,** and in-place definition configuration object **2110** may be the child objects of reusable definition configuration object **2104,** as indicated by secondary structural link **2112,** secondary structural link **2114,** and secondary structural link **2116,** respectively.

Usage configuration object **2106** may be an instantiation of reusable definition configuration object **2118** corresponding to reusable definition object **2020.** In **Figure 21****,** secondary instance links that are present in model **2000** are not shown in **Figure 21****.** For example, in model **2000,** a secondary instance link (not shown) may be present between usage configuration object **2106** and reusable definition configuration object **2118.**

Usage configuration object **2120** and usage configuration object **2122** may be child objects of reusable definition configuration object **2118,** as indicated by secondary structural link **2124** and secondary structural link **2126,** respectively. Reusable definition configuration object **2118** may be the root object of associated structure **2102.**

Further, as depicted, usage configuration object **2120** and usage configuration object **2122** may both be instantiations of reusable definition configuration object **2127.** Reusable definition configuration object **2127** may be the root object of associated structure **2006.** Reusable definition configuration object **2127** may be the only object in associated structure **2006.**

Occurrence configuration object **2128** and occurrence configuration object **2130** may be instantiations of usage configuration object **2120** and usage configuration object **2122,** respectively. Occurrence configuration object **2128** and occurrence configuration object **2130** may be child objects of usage configuration object **2106,** as indicated by secondary structural link **2132** and secondary structural link **2134,** respectively.

Usage configuration object **2108** may also be an instantiation of reusable definition configuration object **2118.** Occurrence configuration object **2136** and occurrence configuration object **2138** may be child objects of usage configuration object **2108,** as indicated by secondary structural link **2140** and secondary structural link **2142,** respectively. Further, occurrence configuration object **2136** and occurrence configuration object **2138** may be instantiations of usage configuration object **2120** and usage configuration object **2122,** respectively. Additionally, usage configuration object **2144** and usage configuration object **2146** may be child objects of in-place definition configuration object **2110,** as indicated by secondary structural link **2148** and secondary structural link **2150,** respectfully.

In this manner, associated structure **2103** may comprise reusable definition configuration object **2127.** Associated structure **2102** may comprise reusable definition configuration object **2118,** usage configuration object **2120,** and usage configuration object **2122.** Further, main structure **2101** may comprise reusable definition configuration object **2104,** usage configuration object **2106,** usage configuration object **2108,** in-place definition configuration object **2110,** occurrence configuration object **2128,** occurrence configuration object **2130,** occurrence configuration object **2136,** occurrence configuration object **2138,** usage configuration object **2144,** and usage configuration object **2146.**

In this manner, secondary hierarchical organization **2100** in model **2000** may represent the logical decomposition of the product structure for the standard configuration for six-brick assembly **1900** in **Figure 19****.** With secondary hierarchical organization **2100** in place, additional secondary hierarchical organizations may be added to model **2000** to represent variants of six-brick assembly **1900** that vary from this standard configuration.

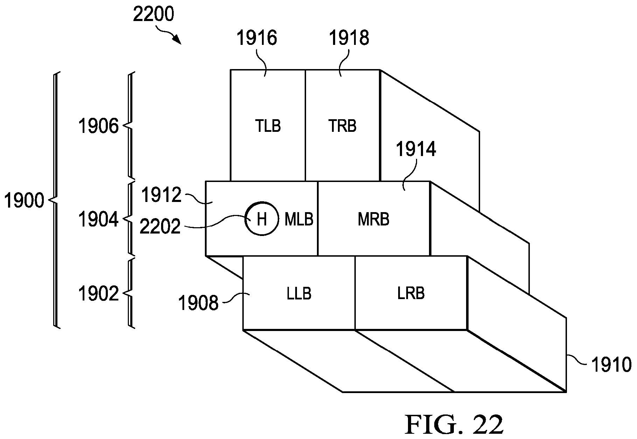

**Figure 22** is an illustration of a variant of a six-brick assembly depicted in accordance with an illustrative embodiment. In **Figure 22****,** variant **2200** of six-brick assembly **1900** may be depicted. Variant **2200** of six-brick assembly **1900** in **Figure 22** may differ from six-brick assembly **1900** in **Figure 19** by having hole **2202** in brick **1912** in middle two-brick assembly **1904.**

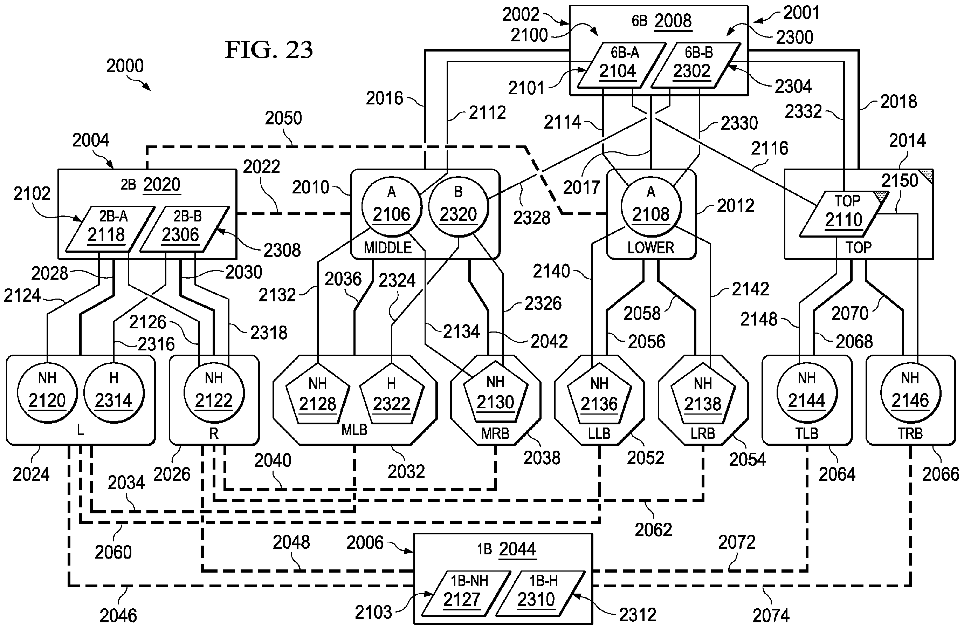

**Figure 23** is an illustration of a model representing two variants of a six-brick assembly depicted in accordance with an illustrative embodiment. In this illustrative example, a representation of variant **2200** of six-brick assembly **1900** in **Figure 22** may be added to model **2000.** In this manner, model **2000** in **Figure 23** may represent two variants of six-brick assembly **1900.**

In particular, secondary hierarchical organization **2300** may be added to model **2000.** The objects that form secondary hierarchical organization **2300** may be domain configuration objects. Adding an additional secondary hierarchical organization, such as secondary hierarchical organization **2300,** to model **2000** after an initial secondary hierarchical organization, such as secondary hierarchical organization **2100,** has already been created may not require adding an additional configuration object to each master object in primary hierarchical organization **2001.**

Instead, secondary hierarchical organization **2300** may be created such that secondary hierarchical organization **2300** shares a number of configuration objects with secondary hierarchical organization **2100.** Thus, data storage space and processing power used in representing both secondary hierarchical organization **2300** and primary hierarchical organization **2001** may be conserved.

In this illustrative example, adding a representation of variant **2200** of six-brick assembly **1900** in **Figure 22** to model **2000** may include adding reusable definition configuration object **2302** to reusable definition object **2008** to represent variant **2200** of six-brick assembly **1900** having hole **2202** in **Figure 22****.** Reusable definition configuration object **2302** may be the root object of main structure **2304** for secondary hierarchical organization **2300.**

Adding a representation of variant **2200** of six-brick assembly **1900** to model **2000** may also include adding reusable definition configuration object **2306** to reusable definition object **2020** to represent hole **2202** in middle two-brick assembly **1904.** Reusable definition configuration object **2306** may be the root object of associated structure **2308** for secondary hierarchical organization **2300.**

Further, adding a representation of variant **2200** of six-brick assembly **1900** to model **2000** may include adding reusable definition configuration object **2310** to reusable definition object **2044** to represent hole **2202** in brick **1912** in **Figure 22****.** Reusable definition configuration object **2310** may be the root object of associated structure **2312** for secondary hierarchical organization **2300.** Associated structure **2312** may only comprise reusable definition configuration object **2310.**

Usage configuration object **2314** may be an instantiation of reusable definition configuration object **2310.** In **Figure 23****,** secondary instance links present in model **2000** may not be shown. Usage configuration object **2314** may be added to usage object **2024** as the child object of reusable definition configuration object **2306,** as indicated by secondary structural link **2316.**

Further, secondary structural link **2318** may indicate that reusable definition configuration object **2306** shares usage configuration object **2122** with reusable definition configuration object **2118** as a child object as indicated by secondary structural link **2126 .** In this manner, associated structure **2308** may comprise reusable definition configuration object **2306,** usage configuration object **2314,** and usage configuration object **2122.**

Usage configuration object **2320** may be added to usage object **2010** as an instantiation of reusable definition configuration object **2306.** When usage configuration object **2320** is created, occurrence configuration object **2322** may be added to occurrence object **2032** as an instantiation of usage configuration object **2314.**

Usage configuration object **2320** may be the parent object of occurrence configuration object **2322,** as indicated by secondary structural link **2324.** Further, secondary structural link **2326** may indicate that usage configuration object **2320** shares occurrence configuration object **2130** with usage configuration object **2106** as a child object.

Usage configuration object **2320** may be the child object of reusable definition configuration object **2302,** as indicated by secondary structural link **2328.** Further, reusable definition configuration object **2302** may share usage configuration object **2108** and in-place definition configuration object **2110** with reusable definition configuration object **2104** as child objects, as indicated by secondary structural link **2330** and secondary structural link **2332,** respectively.

In this manner, main structure **2304** may comprise reusable definition configuration object **2302,** usage configuration object **2320,** usage configuration object **2108,** in-place definition configuration object **2110,** occurrence configuration object **2128,** occurrence configuration object **2322,** occurrence configuration object **2130,** occurrence configuration object **2136,** occurrence configuration object **2138,** usage configuration object **2144,** and usage configuration object **2146.** Hole **2202** in brick **1912** of middle two-brick assembly **1904** in six-brick assembly **1900** may be represented by occurrence configuration object **2322** in main structure **2304.**

The illustrations of six-brick assembly **1900** in **Figure 19****,** variant **2200** of six-brick assembly **1900** in **Figure 22****,** and model **2000** in **Figures 20****,** **21****,** and **23** are not meant to imply physical or architectural limitations to the manner in which an illustrative embodiment may be implemented. Other components in addition to or in place of the ones illustrated may be used. Some components may be optional.

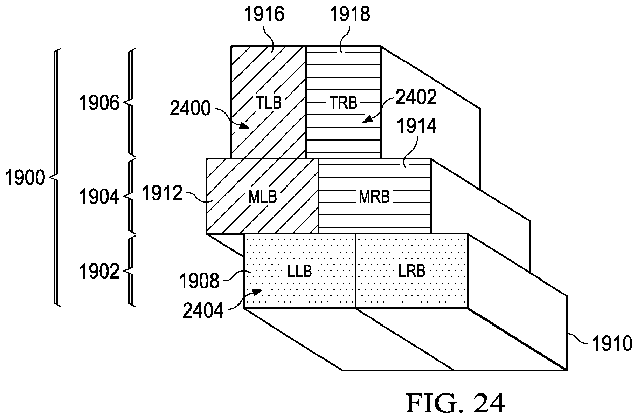

**Figure 24** is an illustration of a breakdown of sequences for assembly a six-brick assembly depicted in accordance with an illustrative embodiment. As depicted, six-brick assembly **1900** may be manufactured using sequence **2400,** sequence **2402,** and sequence **2404.** These sequences may be manufacturing sequences. Sequence **2400** may comprise the assembly of brick **1912** and brick **1916.** Sequence **2402** may comprise the assembly of brick **1914** and brick **1918.** Further, sequence **2404** may comprise the sequence of brick **1908** and brick **1910.**

**Figure 25** is an illustration of a mapping between models for two domains depicted in accordance with an illustrative embodiment. As depicted, model **2000** from **Figure 20** is a model for six-brick assembly **1900** created with respect to geometric domain **2500** for six-brick assembly **1900.** In **Figure 25****,** model **2501** is a model for six-brick assembly **1900** created with respect to manufacturing domain **2502.** Model **2501** is another example of one implementation for model **114** in **Figure 1****.** The objects in model **2501** are domain master objects.

Manufacturing domain **2502** and geometric domain **2500** are examples of domains that may be included in group of domains **117** in **Figure 1****.** Definition objects within model **2000** may represent parts and assemblies of parts for six-brick assembly **1900** in **Figure 19****.** Further, definition objects within model **2501** may represent the manufacturing sequences used to form assemblies of parts to form six-brick assembly **1900** in **Figure 24****.** In **Figure 25****,** one or more structural links and instance links in model **2000** and model **2501** are not shown.

Models for different domains may be mapped across these domains in some cases. For example, model 2501 may be mapped to model **2000.** Boundary **2503** may indicate the boundary between geometric domain **2500** and manufacturing domain **2502.** Model **2501** may comprise primary hierarchical organization **2504.** Primary hierarchical organization **2504** comprises main structure **2506,** associated structure **2508,** and associated structure **2510.**

As depicted, reusable definition object **2512** is the root object of main structure **2506.** Reusable definition object **2512** may represent the overall manufacturing sequence used to form six-brick assembly **1900** in **Figure 19****.** Reusable definition object **2512** in model **2501** may map to reusable definition object **2008** in model **2000** as indicated by mapping link **2514.**

As used herein, a "mapping link" is a link between two objects in two different models. A mapping link maps an object in one model to an object in another model. Typically, a mapping link maps two objects that are of the same type. For example, a mapping link may map a reusable definition object to a reusable definition object, an occurrence object to an occurrence object, and a usage object to a usage object.

Being in manufacturing domain **2502,** reusable definition object **2512** may also be referred to as a reusable sequence definition object. Being in geometric domain **2500,** reusable definition object **2008** may be referred to as a reusable part definition object. Consequently, the mapping between these two definition objects may indicate that the sequence represented by the reusable sequence definition object is used to form the part represented by the reusable part definition object.

Further, usage object **2516,** usage object **2518,** and usage object **2520** may be the child objects of reusable definition object **2512,** as indicated by primary structural link **2522,** primary structural link **2524,** and primary structural link **2526,** respectively. In this illustrative example, usage object **2516** may represent sequence **2404** in **Figure 24****.** Usage object **2518** may represent sequence **2400** in **Figure 24** and usage object **2520** may represent sequence **2402** in **Figure 24****.**

Usage object **2516** in model **2501** may map to usage object **2012** in model **2000** as indicated by mapping link **2528.** In other words, sequence **2404** represented by usage object **2516** may be used to form lower two-brick assembly **1902** represented by usage object **2012.**

Usage object **2516** may be an instantiation of reusable definition object **2530,** as indicated by primary instance link **2532.** Reusable definition object **2530** may be the root object of associated structure **2508.** In this illustrative example, reusable definition object **2530** may represent a manufacturing sequence for assembling a left brick and a right brick to form a two-brick assembly. Reusable definition object **2530** in model **2501** may map to reusable definition object **2020** in model **2000,** as indicated by mapping link **2531.**

Further, usage object **2534** and usage object **2536** may be the child objects of reusable definition object **2530,** as indicated by primary structural link **2538** and primary structural link **2540,** respectively. Usage object **2534** and usage object **2536** in model **2501** may map to usage object **2024** and usage object **2026,** respectively, in model **2000,** as indicated by mapping link **2542** and mapping link **2544,** respectively. In this manner, associated structure **2508** in model **2501** may map to associated structure **2004** in model **2000** indicating that the sequence represented by reusable definition object **2530** in model **2501** may be used to form the two-brick assembly represented by reusable definition object **2020** in model **2000.**

Further, usage object **2024** and usage object **2026** may be instantiations of reusable definition object **2044** from model **2000.** In this manner, reusable definition object **2044** representing a single brick may be used in more than one model for more than one domain. In particular, reusable definition object **2044** used in model **2000** for geometric domain **2500** may be also used in model **2501** for manufacturing domain **2502** even though reusable definition object **2044** is depicted on the side of boundary **2503** for geometric domain **2500.**

In this illustrative example, usage object **2518** and usage object **2520** may be instantiations of reusable definition object **2546,** as indicated by primary instance link **2545** and primary instance link **2547,** respectively. Reusable definition object **2546** may represent a sequence for assembling a vertical brick and a horizontal brick to form a two-brick assembly.

Usage object **2548** and usage object **2550** may be the child objects of reusable definition object **2546,** as indicated by primary structural link **2552** and primary structural link **2554,** respectively. Usage object **2548** and usage object **2550** may be instantiations of reusable definition object **2044,** as indicated by primary instance link **2556** and primary instance link **2558,** respectively.

Occurrence object **2560** and occurrence object **2562** may be the child objects of usage object **2518,** as indicated by primary structural link **2564** and primary structural link **2566,** respectively. In particular, occurrence object **2560** and occurrence object **2562** may be instantiations of usage object **2548** and usage object **2550,** respectively.

Additionally, occurrence object **2568** and occurrence object **2570** may be the child objects of usage object **2520,** as indicated by primary structural link **2572** and **2574,** respectively. In particular, occurrence object **2568** and occurrence object **2570** may be instantiations of usage object **2548** and usage object **2550,** respectively.

In this illustrative example, occurrence object **2560** may map to usage object **2064** as indicated by mapping link **2576,** while occurrence object **2562** may map to occurrence object **2032** as indicated by mapping link **2578.** In this manner, the sequence represented by usage object **2518** may be the sequence used to assemble brick **1916** represented by usage object **2064** and brick **1912** represented by occurrence object **2032** together.

Similarly, occurrence object **2568** may map to usage object **2066** as indicated by mapping link **2580,** while occurrence object **2570** may map to usage object **2038** as indicated by mapping link **2582.** In this manner, the sequence represented by usage object **2520** may be the sequence used to assemble brick **1918** represented by usage object **2066** and brick **1914** represented by occurrence object **2038.**

**Figure 26** is an illustration of a model for a generator system depicted in accordance with an illustrative embodiment. In this illustrative example, model **2600** may be a model of the product structure for a generator system. Model **2600** may be an example of one implementation for model **114** in **Figure 1****.** Model **2600** includes reusable definition object **2601.**

Reusable definition object **2601** may represent the generator system. Reusable definition object **2601** may be the root object of main structure **2607** of primary hierarchical organization **2605** for model **2600.**

In-place port definition object **2602** may be a child object of reusable definition object **2601,** as indicated by primary port structural link **2604.** In-place port definition object **2602** may represent a physical port on the generator system represented by reusable definition object **2601.** In this illustrative example, in-place port definition object **2602** may belong to interface category **1200** in **Figure 12****.** In other words, in-place port definition object **2602** may not be connectable to another port master object.

As used herein, a "port structural link" may be a link between a port object and another object in a model. A "primary port structural link" may be a link between a port master object and another port master object or a different master object in the model.

Although in-place port definition object **2602** is connected to reusable definition object **2601,** in-place port definition object **2602** may not be considered part of primary hierarchical organization **2605.** In-place port definition object **2606,** in-place port definition object **2608,** and in-place port definition object **2610** may be child objects of in-place port definition object **2602,** as indicated by primary port structural link **2612,** primary port structural link **2614,** and primary port structural link **2616,** respectively.

Consequently, in-place port definition object **2606,** in-place port definition object **2608,** and in-place port definition object **2610** also belong to interface category **1200** in **Figure 12****.** In this manner, these in-place port definition objects may not be connectable to other port master objects.

In this illustrative example, in-place port definition object **2606,** in-place port definition object **2608,** and in-place port definition object **2610** may represent a control port, a first power port, and a second power port, respectively, on the generator system represented by reusable definition object **2601.** These ports may be physical ports or physical connection points on the generator system.

In-place port definition object **2602,** in-place port definition object **2606,** in-place port definition object **2608,** and in-place port definition object **2610** may form port substructure **2603** in model **2600.** Port substructure **2603** may be considered connected to but not part of primary hierarchical organization **2605.**

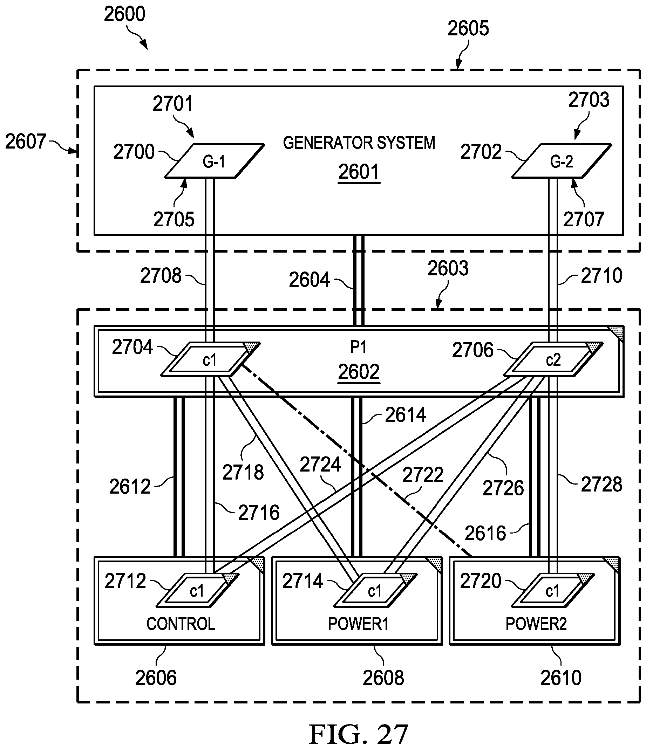

**Figure 27** is an illustration of a model for a generator system depicted in accordance with an illustrative embodiment. In this illustrative example, secondary hierarchical organization **2701** and secondary hierarchical organization **2703** have been added to model **2600** from **Figure 26****.** Reusable definition configuration object **2700** may be the root object of main structure **2705** of secondary hierarchical organization **2701.** Reusable definition configuration object **2702** may be the root object of main structure **2707** of secondary hierarchical organization **2703.**

Reusable definition configuration object **2700** and reusable definition configuration object **2702** may correspond to reusable definition object **2601.** In particular, reusable definition configuration object **2700** and reusable definition configuration object **2702** may each represent a particular configuration for the generator system represented by reusable definition object **2601.**

In-place port definition configuration object **2704** and in-place port definition configuration object **2706** may correspond to in-place port definition object **2602.** Each of these port configuration objects may represent a particular configuration for the port represented by in-place port definition object **2602.**

In-place port definition configuration object **2704** and in-place port definition configuration object **2706** may be the child objects of reusable definition configuration object **2700** and reusable definition configuration object **2702,** respectively, as indicated by secondary port structural link **2708** and secondary port structural link **2710,** respectively. As used herein, a "secondary port structural link" may be a link between a port configuration object and another port configuration object or a different configuration object in a model.

In-place port definition configuration object **2712** may correspond to in-place port definition object **2606.** In-place port definition configuration object **2714** may correspond to in-place port definition object **2608.** In-place port definition configuration object **2712** and in-place port definition configuration object **2714** may be the child objects of in-place port definition configuration object **2704,** as indicated by secondary port structural link **2716** and secondary port structural link **2718,** respectively.

Further, in-place port definition configuration object **2720** may correspond to in-place port definition object **2610.** Exclusion link **2722** indicates that in-place port definition configuration object **2704** may not include any configuration of in-place port definition object **2610.**

In-place port definition configuration object **2712,** in-place port definition configuration object **2714,** and in-place port definition configuration object **2720** may all be child objects of in-place port definition object **2706,** as indicated by secondary port structural link **2724,** secondary port structural link **2726,** and secondary port structural link **2728,** respectively. In this manner, the configuration for the port represented by in-place port definition object **2704** may only include the control port and the first power port. However, the configuration for the port represented by in-place port definition configuration object **2706** may include the control port, the first power port, and the second power port.

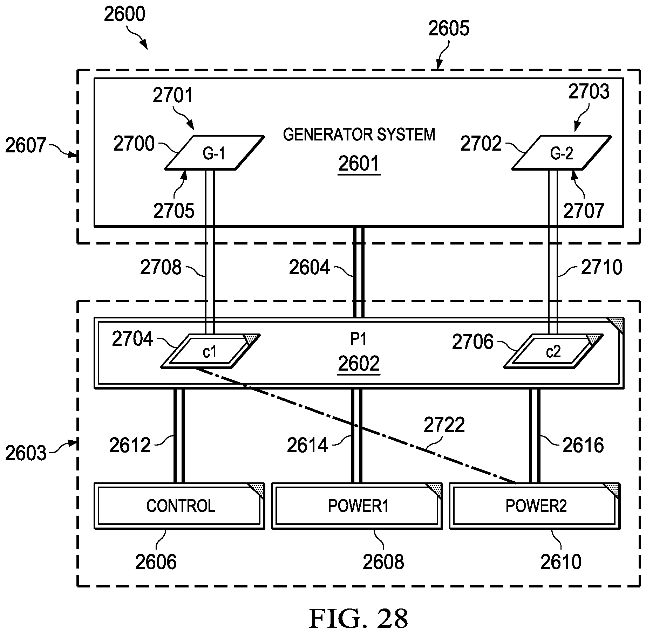

**Figure 28** is another illustration of a model for a generator system depicted in accordance with an illustrative embodiment. In this illustrative example, model **2600** from **Figure 27** is shown in a simplified manner. In particular, secondary port structural link **2716,** secondary port structural link **2718,** and secondary port structural link **2724,** secondary port structural link **2726,** and secondary port structural link **2728** have been excluded.

Since the configuration represented by in-place port definition configuration object **2706** includes all ports represented by in-place port definition object **2606,** in-place port definition object **2608,** and in-place port definition object **2610,** the corresponding secondary port structural links have been omitted. Since the configuration represented by in-place port definition configuration object **2706** excludes only the port represented by in-place port definition object **2610,** exclusion link **2722** has been used to indicate this exclusion and the corresponding secondary port structural links for the other ports have been omitted. Omitting these different secondary port structural links may simplify the depiction of model **2600.**

**Figure 29** is an illustration of a model for an engine system depicted in accordance with an illustrative embodiment. In this illustrative example, model **2900** may be a model of the product structure for an engine system. In particular, model **2900** may be a simplified model in which a number of links and objects have been omitted. Model **2900** may be an example of one implementation for model **114** in **Figure 1****.**

As depicted, model **2900** may comprise primary hierarchical organization **2902,** secondary hierarchical organization **2904,** and secondary hierarchical organization **2906.** Primary hierarchical organization **2902** may comprise main structure **2908** and associated structure **2910.** In this illustrative example, associated structure **2910** may be main structure **2607 of** primary hierarchical organization **2605** from model **2600** in **Figure 28****.**

Reusable definition object **2912** may be the root object of main structure **2908** of primary hierarchical organization **2902.** Reusable definition object **2912** may represent an engine system. Usage object **2914** and usage object **2916** may be the child objects of reusable definition object **2912,** as indicated by primary structural link **2918** and primary structural link **2920,** respectively.

Both usage object **2914** and usage object **2916** may be instantiations of reusable definition object **2601,** as indicated by primary instance link **2922** and primary instance link **2924,** respectively. In particular, usage object **2914** may represent a left generator system for the engine system and usage object **2916** may represent a right generator system for the engine system.

Secondary hierarchical organization **2904** may include main structure **2926** and secondary associated structure **2927.** Secondary associated structure **2927** may be main structure **2705** of secondary hierarchical organization **2701.** Further, secondary hierarchical organization **2904** may include main structure **2928** and secondary associated structure **2929.** Secondary associated structure **2929** may be main structure **2707** of secondary hierarchical organization **2703.**

Reusable definition configuration object **2930** may be the root object of secondary hierarchical organization **2904.** Usage configuration object **2932** and usage configuration object **2934** may be the child objects of reusable definition configuration object **2930,** as indicated by secondary structural link **2935** and secondary structural link **2936,** respectively.

Usage configuration object **2932** may be an instantiation of reusable definition configuration object **2702,** as indicated by secondary instance link **2933.** Usage configuration object **2934** may be an instantiation of reusable definition configuration object **2700,** as indicated by secondary instance link **2939.**

Reusable definition configuration object **2931** may be the root object of secondary hierarchical organization **2904.** Usage configuration object **2938** and usage configuration object **2934** may be the child objects of reusable definition configuration object **2931,** as indicated by secondary structural link **2940** and secondary structural link **2942,** respectively. Usage configuration object **2938** may be an instantiation of reusable definition configuration object **2700,** as indicated by secondary instance link **2937.**

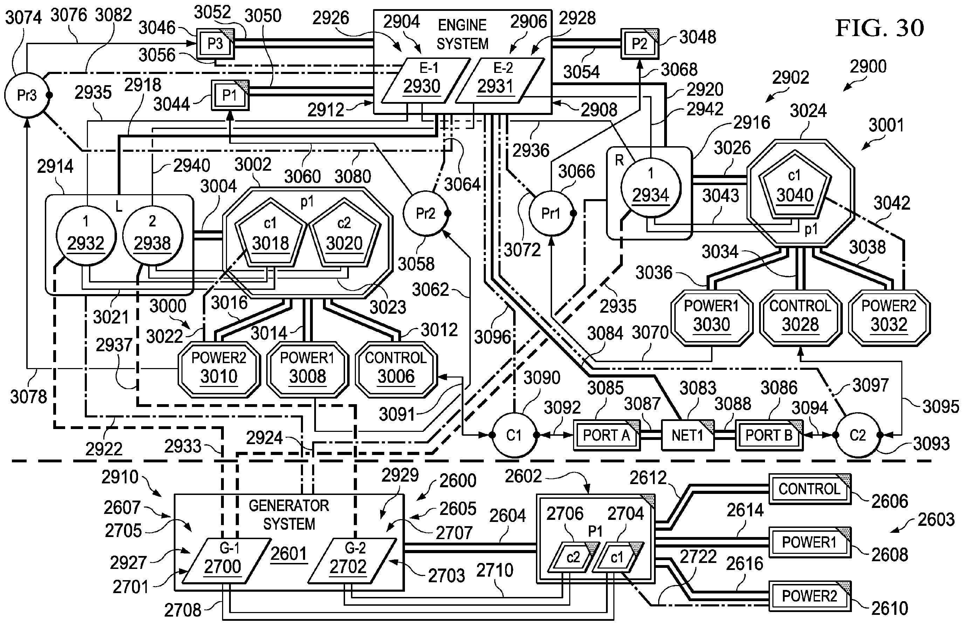

**Figure 30** is an illustration of a more detailed model of an engine system depicted in accordance with an illustrative embodiment. In **Figure 30****,** model **2900** is depicted in greater detail as compared to model **2900** in **Figure 29****.** In this illustrative example, port substructure **3000** may be connected to usage object **2914** in main structure **2908** of primary hierarchical organization **2902.** Further, port substructure **3001** may be connected to usage object **2916** in main structure **2908** of primary hierarchical organization **2902.**

However, neither port substructure **3000** nor port substructure **3001** may be considered part of primary hierarchical organization **2902.** Port substructure **3000** and port substructure **3001** may be instantiations of port substructure **2603** connected to main structure **2607** in primary hierarchical organization **2605.**

In this illustrative example, each of the port master objects in port substructure **3000** and port substructure **3001** may belong to connectable category **1300** in **Figure 13****.** In other words, each of the port master objects in port substructure **3000** and port substructure **3001** may be connectable to another port master object.

Port substructure **3000** may include port occurrence object **3002,** port occurrence object **3006,** port occurrence object **3008,** and port occurrence object **3010.** Port occurrence object **3002** may be a child object of usage object **2914,** as indicated by primary port structural link **3004.** Port occurrence object **3002** may be an instantiation of in-place port definition object **2602.** A primary port instance link indicating this relationship is omitted in this example.

Further, port occurrence object **3006,** port occurrence object **3008,** and port occurrence object **3010** may be child objects of port occurrence object **3002,** as indicated by primary port structural link **3012,** primary port structural link **3014,** and primary port structural link **3016.** Port occurrence object **3006,** port occurrence object **3008,** and port occurrence object **3010** may be instantiations of in-place port definition object **2606,** in-place port definition object **2608,** and in-place port definition object **2610,** respectively. Primary port instance links indicating these relationships have been omitted in this example.

In this illustrative example, port occurrence configuration object **3018** and port occurrence configuration object **3020** may correspond to port occurrence object **3002.** Port occurrence configuration object **3018** and port occurrence configuration object **3020** may be instantiations of in-place port definition configuration object **2704** and in-place port definition configuration object **2706,** respectively. The secondary port instance links indicating these relationships have been omitted.

Port occurrence configuration object **3018** and port occurrence configuration object **3020** may be child objects of usage configuration object **2932** and usage configuration object **2938,** respectively, as indicated by secondary port structural link **3021** and secondary port structural link **3023,** respectively. Exclusion link **3022** may indicate that the configuration represented by port occurrence configuration object **3018** does not include the port represented by port occurrence object **3010.**

Port substructure **3001** may include port occurrence object **3024,** port occurrence object **3028,** port occurrence object **3030,** and port occurrence object **3032.** Port occurrence object **3024** may be a child object of usage object **2916,** as indicated by primary port structural link **3026.** Port occurrence object **3024** may be an instantiation of in-place port definition object **2602.** A primary port instance link indicating this relationship is omitted in this example.

Further, port occurrence object **3028,** port occurrence object **3030,** and port occurrence object **3032** may be child objects of port occurrence object **3024,** as indicated by primary port structural link **3034,** primary port structural link **3036,** and primary port structural link **3038.** Port occurrence object **3028,** port occurrence object **3030,** and port occurrence object **3032** may be instantiations of in-place port definition object **2606,** in-place port definition object **2608,** and in-place port definition object **2610,** respectively. Primary port instance links indicating these relationships have been omitted in this example.

In this illustrative example, port occurrence configuration object **3040** may correspond to port occurrence object **3024.** Port occurrence configuration object **3040** may be an instantiation of in-place port definition configuration object **2704.** The secondary port instance links indicating this relationship has been omitted.

Port occurrence configuration object **3040** may be a child object of usage configuration object **2934,** as indicated by secondary port structural link **3043.** Exclusion link **3042** may indicate that the configuration represented by port occurrence configuration object **3040** does not include the port represented by port occurrence object **3032.**

Additionally, in this illustrative example, in-place port definition object **3044,** in-place port definition object **3046,** and in-place port definition object **3048** may be child objects of reusable definition object **2912,** as indicated by primary port structural link **3050,** primary port structural link **3052,** and primary port structural link **3054,** respectively. However, in-place port definition object **3044,** in-place port definition object **3046,** and in-place port definition object **3048** may not be considered part of primary hierarchical organization **2902.**

In-place port definition object **3044,** in-place port definition object **3046,** and in-place port definition object **3048** may belong to interface category **1200** in **Figure 12****.** In other words, these in-place port definition configuration objects may not be connectable to other port master objects and may need to be implemented by connectable port master objects.

Exclusion link **3056** may indicate that the configuration for the engine system represented by reusable definition configuration object **2930** does not include the port represented by in-place port definition object **3046.** However, the configuration for the engine system represented by reusable definition configuration object **2931** may include all three ports represented by in-place port definition object **3044,** in-place port definition object **3046,** and in-place port definition object **3048.**

In this illustrative example, promotion object **3058** may be used to indicate that the port represented by port occurrence object **3008** is used to implement the role of the port represented by in-place port definition object **3044.** In other words, promotion object **3058** may promote a connectable port object to the role of an interface port object.

In particular, promotion link **3060** between promotion object **3058** and in-place port definition object **3044** may indicate than an object is promoted to the role of in-place port definition object **3044** by promotion object **3058.** Further, promotion link **3062** between promotion object **3058** and port occurrence object **3008** may indicate that port occurrence object **3008** is the object that is promoted to the role of in-place port definition object **3044.**

Promotion object **3058** may be a child object of reusable definition object **2912,** as indicated by auxiliary structural link **3064.** As used herein, an "auxiliary structural link" may be a link between an auxiliary object and a domain object. However, promotion object **3058** may not be considered part of primary hierarchical organization **2902.**

In a similar manner, promotion object **3066** may be used to indicate that the port represented by port occurrence object **3030** is used to implement the role of the port represented by in-place port definition object **3048.** Promotion link **3068** may indicate that a connectable port object is being promoted to the role of in-place port definition object **3048.** Further, promotion link **3070** may indicate that port occurrence object **3030** is the connectable port object being promoted.

Further, promotion object **3066** may also be a child object of reusable definition object **2912,** as indicated by auxiliary structural link **3072.** However, promotion object **3066** may not be considered part of primary hierarchical organization **2902.**

Further, promotion object **3074** may be used to indicate that the port represented by port occurrence object **3010** is used to implement the role of the port represented by in-place port definition object **3046.** Promotion link **3076** may indicate that a connectable port object is being promoted to the role of in-place port definition object **3046.** Further, promotion link **3078** may indicate that port occurrence object **3010** is the connectable port object being promoted.

Promotion object **3074** may also be a child object of reusable definition object **2912,** as indicated by auxiliary structural link **3080.** However, promotion object **3074** may not be considered part of primary hierarchical organization **2902.** Further, exclusion link **3082** may indicate that reusable definition configuration object **2930** does not include promotion object **3074** as a child object.

In this illustrative example, in-place definition object **3083** may be a child object of reusable definition object **2912,** as indicated by primary structural link **3084.** In-place definition object **3083** may be considered part of primary hierarchical organization **2902** in this example.

In-place definition object **3083** may represent a connection member such as, for example, without limitation, a net, a wire, a tube, a logical transport net, or some other type of physical or logical connection member having two ends. Each of these ends may be considered a connection point, or a port.
In this manner, in-place definition object **3083** may have in-place port definition object **3085** and in-place port definition object **3086** as child objects, as indicated by primary port structural link **3087** and primary port structural link **3088,** respectively. In-place port definition object **3085** and in-place port definition object **3086** may not be considered part of primary hierarchical organization **2902.** In-place port definition object **3085** and in-place port definition object **3086** may belong to connectable category **1300** in **Figure 13****.**

As depicted, connection object **3090** and connection object **3093** may be child objects of reusable definition object **2912,** as indicated by auxiliary structural link **3096** and auxiliary structural link **3097,** respectively. However, these connection objects may not be considered part of primary hierarchical organization **2902.**

Connection object **3090** along with connection link **3091** and connection link **3092** may be used to indicate that the port represented by in-place port definition object **3085** may be connected to the port represented by port occurrence object 3006. Further, connection object **3093** along with connection link **3094** and connection link **3095** may be used to indicate that the port represented by in-place port definition object **3086** may be connected to the port represented by port occurrence object **3028.**

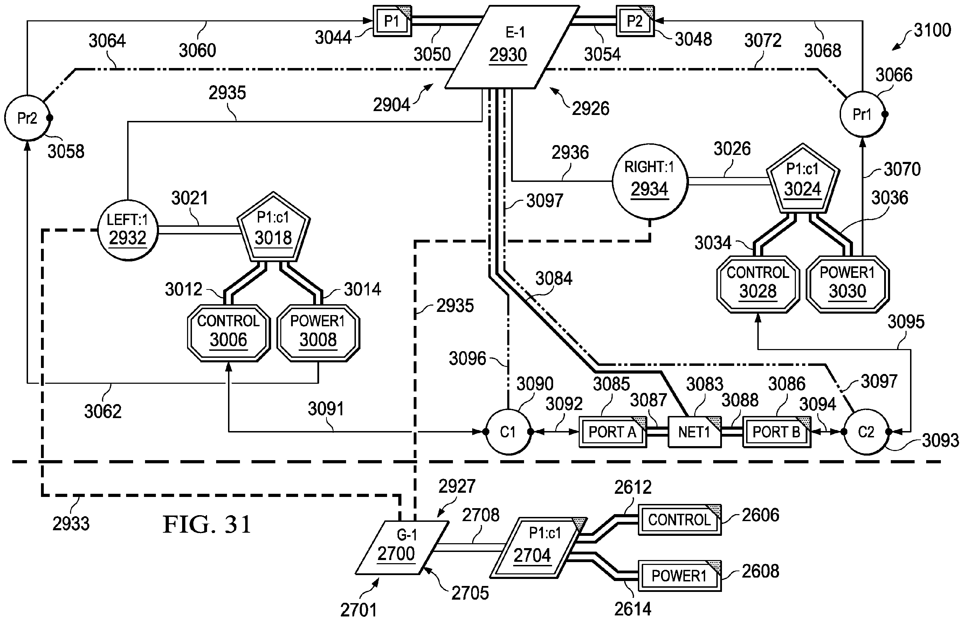

**Figure 31** is an illustration of a projection of a configuration for an engine system depicted in accordance with an illustrative embodiment. In this illustrative example, projection **3100** may be a projection of the configuration for the engine system represented by reusable definition configuration object **2930.** As depicted, secondary hierarchical organization **2906** is depicted along with the various auxiliary objects that are part of the configuration.

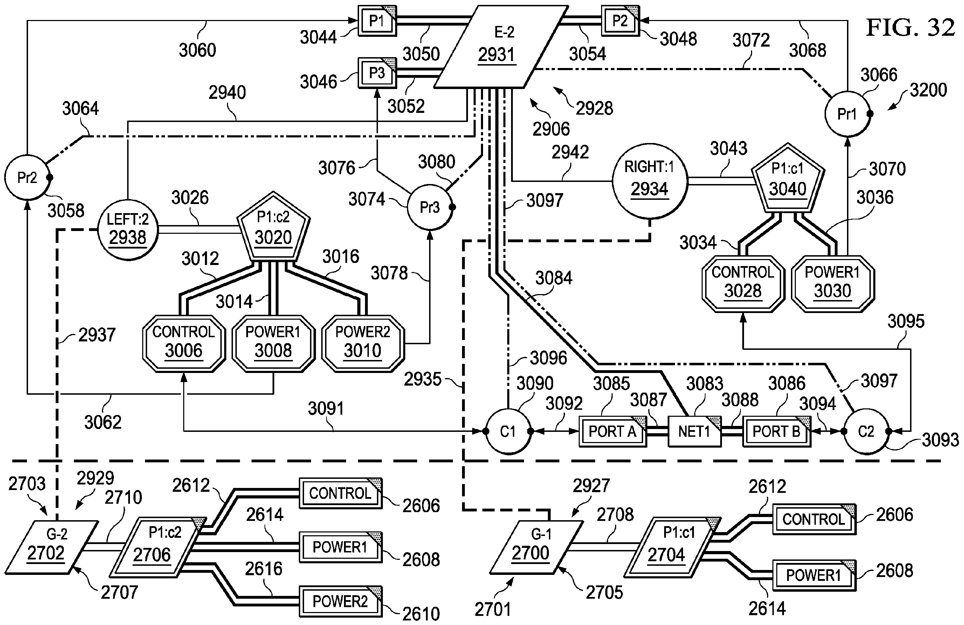

**Figure 32** is an illustration of a projection of a configuration for an engine system depicted in accordance with an illustrative embodiment. In this illustrative example, projection **3200** may be a projection of the configuration for the engine system represented by reusable definition configuration object **2931.** As depicted, secondary hierarchical organization **2906** is depicted along with the various auxiliary objects that are part of the configuration.

The illustrations of model **1703** in **Figures 17-18****,** six-brick assembly **1900** in **Figures 19****,** **22****,** and **24****,** model **2000** in **Figures 20****,** **21****,** **23****,** and **25****,** model **2501** in **Figure 25****,** model **2600** in **Figures 26-28****,** model **2900** in **Figures 29-30****,** projection **3100** in **Figure 31****,** and projection **3200** in **Figure 32** **are** not meant to imply physical or architectural limitations to the manner in which an illustrative embodiment may be implemented. Other components in addition to or in place of the ones illustrated may be used. Some components may be optional.

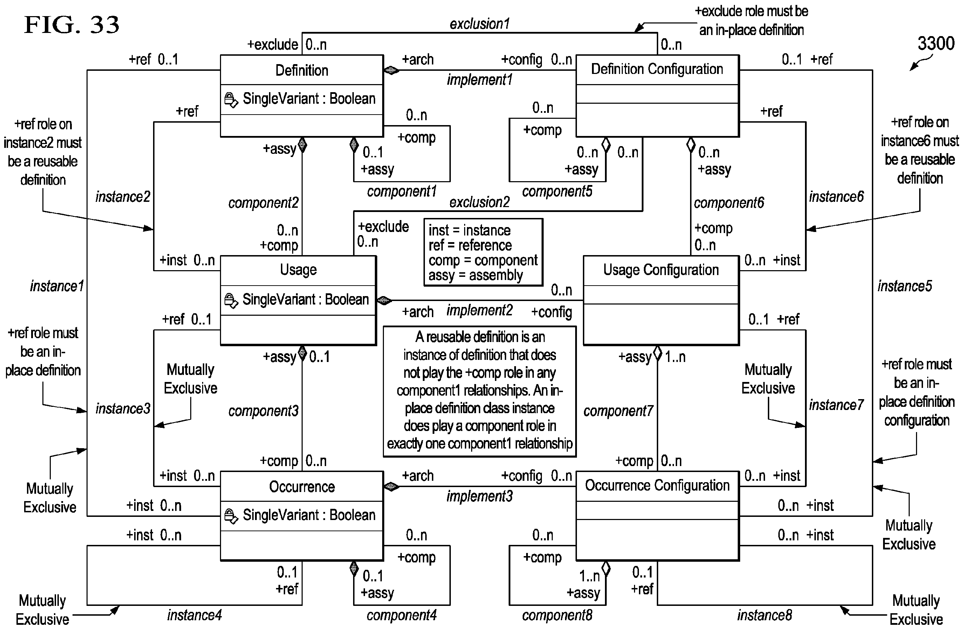

**Figure 33** is an illustration of a data model depicted in accordance with an illustrative embodiment. In this illustrative example, data model **3300** is an example of one manner in which model **114** in **Figure 1** may be implemented using the Unified Modeling Language (UML).

### MANAGING CHANGES TO THE DESIGN DATA FOR A PRODUCT STRUCTURE

The illustrative embodiments recognize and take into account that it may be desirable to have a modeling environment that enables multiple operators, designers, engineers, programmers, or technicians to independently make changes to the model of a product structure at the same time without having to combine their work until they decide it is a good time to do so. For example, it may be desirable to have a model that allows changes to be independently made to different variants of product structure elements that make up the product structure. The illustrative embodiments recognize and take into account that it may be desirable to have a model of a product structure that provides efficient organization of the design data for the product structure and that is capable of capturing and tracking changes to the design of the various product structure elements that make up the product structure as these changes are made over time.

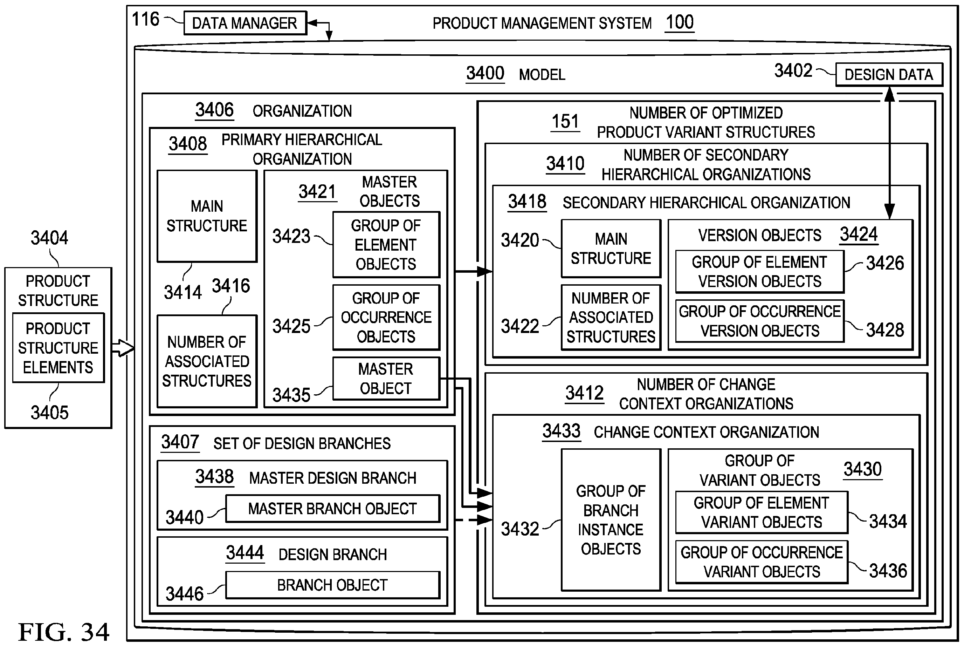

**Figure 34** is an illustration of a product management system in the form of a block diagram depicted in accordance with an illustrative embodiment. In this illustrative example, product management system **100** from **Figure 1** may be used to build and manage model **3400.** Model **3400** includes design data **3402** for product structure **3404.** In one illustrative example, model **3400,** with all of design data **3402** for product structure **3404,** is stored in a data store.

In this illustrative example, product structure **3404** is similar to product structure **112** in **Figure 1****.** Product structure **3404** represents a product, such as product **102** described in **Figure 1****,** and all variants of that particular product. In other words, product structure **3404** represents all variants of product **102.** In some cases, the one or more variants of a product is collectively referred to as a product family. In this illustrative example, product structure **3404** is a logical decomposition of a product. Product structure **3404** is comprised of product structure elements **3405.** A product structure element in product structure elements **3405** represents the product itself, an assembly component that makes up the product, a leaf component that makes up the product, or some other type of component that makes up the product.

Model **3400** may be similar to but not the same as model **114** described in **Figure 1****.** Model **3400** provides even greater flexibility and efficiency in the organization and management of design data for product structure **3404.** In these illustrative examples, model **3400** builds on the concepts used to create model **114** in **Figure 1** and adds the option for managing design data **3402** for product structure **3404** in independent design branches. In particular, design data **3402** for multiple variants of different product structure elements **3405** may be managed in independent design branches.

As used herein, a design branch is a sequence or collection of design changes to model **3400** relative to a particular start state for that design branch. For example, a team of engineers may make changes to design data **3402** in model **3400** along a first design branch, while another team of engineers makes changes to design data **3402** in model **3400** along a second design branch. Model **3400** is created and managed by data manager **116** such that the changes made along the first design branch are managed independently of the changes made along the second design branch. Depending on the implementation, any number of design branches may be independently worked on simultaneously. As one illustrative example, set of design branches **3407** may be worked on independently. Set of design branches **3407** may include one or more design branches.

Model **3400** has organization **3406** that captures product structure **3404** and allows modifications to the design of product structure **3404** through set of design branches **3407.** Organization **3406** includes primary hierarchical organization **3408,** number of secondary hierarchical organizations **3410,** and number of change context organizations **3412.** Primary hierarchical organization **3408** and number of secondary hierarchical organizations **3410** may be implemented in a manner similar to primary hierarchical organization **144** and number of secondary hierarchical organizations **150** in **Figure 1****.**

In this illustrative example, primary hierarchical organization **3408** includes main structure **3414** and number of associated structures **3416.** Main structure **3414** is implemented in a manner similar to main structure **146 in** **Figure 1****.** Number of associated structures **3416** is implemented in a manner similar to number of associated structures **148** in **Figure 1****.**

Secondary hierarchical organization **3418** is an example of one of number of secondary hierarchical organizations **3410.** Secondary hierarchical organization **3418** includes main structure **3420** and number of associated structures **3422.** Main structure **3420** is implemented in a manner similar to main structure **154** in **Figure 1****.** Number of associated structures **3422** is implemented in a manner similar to number of associated structures **156** in **Figure 1****.**

As depicted, primary hierarchical organization **3408** is an organization of master objects **3421.** Master objects **3421** include group of element objects **3423** and group of occurrence objects **3425.** In this illustrative example, an element object in group of element objects **3423** represents a product structure element that makes up product structure **3404.** An element object may function in model **3400** in a same manner as a definition object derived from definition class **132** functions in model **114** in **Figure 1****.** In other illustrative examples, an element object may also be referred to as a product structure element object. In this manner, group of element objects **3423** may also be referred to as a group of product structure element objects. In these illustrative examples, the term "element object" is used for simplicity.

An occurrence object in group of occurrence objects **3425** represents a usage of a product structure element in the makeup of another product structure element. A product structure element that is in the makeup of another product structure may be a component of or comprise the product structure. For example, without limitation, an occurrence object may be an instantiation of an element object that represents a reference product structure element. The occurrence object represents a usage of that reference product structure element in the makeup of another product structure element. In other illustrative examples, the occurrence object may be an instantiation of another occurrence object.

In model **3400,** an occurrence object may function in a manner that combines the functions of a usage object derived from usage class **134** in **Figure 1** and the functions of an occurrence object derived from occurrence class **136** in **Figure 1****.** In this manner, primary hierarchical organization **3408** may be made up of only two different types of master objects as compared to primary hierarchical organization **144** in **Figure 1****,** which may be made up of three different types of master objects.

In **Figure 34****,** each of number of secondary hierarchical organizations **3410** is an organization of version objects. As one illustrative example, secondary hierarchical organization **3418** is an organization of version objects **3424.** Each of a particular variant of a product structure element in product structure **3404** may be implemented in a manner similar to the implementation for secondary hierarchical organization **3418** described below.

Version objects **3424** may be nested within corresponding master objects. For example, each version object of version objects **3424** corresponds to one of master objects **3421.** In particular, each version object represents a version of what is represented by a corresponding master object.

Version objects **3424** may include group of element version objects **3426** and group of occurrence version objects **3428.** In this illustrative example, an element version object in group of element version objects **3426** is a version object that is nested within a corresponding element object of group of element objects **3423.** The element version object represents a version of a particular variant of the product structure element in product structure **3404** that is represented by the corresponding element object. More specifically, the element version object includes the design data for that version of the particular variant of the corresponding product structure element. In this manner, an element version object functions in a same manner as a definition configuration object derived from definition configuration class **138** in **Figure 1****.**

Further, an occurrence version object in group of occurrence version objects **3428** is a version object that is nested within a corresponding occurrence object of group of occurrence objects **3425.** The occurrence version object is an instantiation of either an element version object or another occurrence version object.

When the occurrence version object is an instantiation of an element version object, the occurrence version object represents a usage of the version of the particular variant of a corresponding product structure element in product structure **3404** that is represented by the element version object. When the occurrence version object is an instantiation of another occurrence version object, the occurrence version object represents a usage of the particular usage that is represented by the other occurrence version object.

In this manner, an occurrence version object may function in a manner that combines the functions of a usage configuration object derived from usage configuration class **140** in **Figure 1** and the functions of an occurrence configuration object derived from occurrence configuration class **142** in **Figure 1****.** In particular, the occurrence version object may be an instantiation or "lightweight" copy of a corresponding element version object or another occurrence version object.

Each one of number of change context organizations **3412** may be used to organize version objects with respect to a particular master object. For example, change context organization **3433** in number of change context organizations **3412** is used to organize version objects with respect to master object **3435** of master objects **3421** in primary hierarchical organization **3408.**

Change context organization **3433** is an organization of group of variant objects **3430** and group of branch instance objects **3432.** Each variant object in group of variant objects **3430** is owned by, or contained within, master object **3435.** When master object **3435** takes the form of an element object, group of variant objects **3430** may be referred to as group of element variant objects **3434.** When master object **3435** takes the form of an occurrence object, group of variant objects **3430** may be referred to as group of occurrence variant objects **3436.**

Each branch instance object in group of branch instance objects **3432** is owned by, or contained within, a corresponding variant object in group of variant objects **3430.** Further, each branch instance object in group of branch instance objects **3432** contains one or more version objects. In particular, a branch instance object in group of branch instance objects **3432** tracks a sequence of version objects with respect to a particular design branch in set of design branches **3407.** In other words, a branch instance object in group of branch instance objects **3432** tracks version changes with respect to a particular design branch.

Set of design branches **3407** includes at least one design branch in which each design branch is defined by a branch object. In one illustrative example, set of design branches **3407** includes a design branch that is named master. For example, set of design branches **3407** may include master design branch **3438** and may include zero, one, two, five, or some other number of design branches. Set of design branches **3407** may have an organization comparable to that of a tree, with master design branch **3438** comparable to the trunk of that tree.
Master design branch **3438** is the original design branch for design data **3402.** In model **3400,** master design branch **3438** is defined using master branch object **3440.** Master branch object **3440** has a start state that corresponds to the null set of master objects.

A first new design branch may be defined by creating a new branch object relative to master branch object **3440,** similar to the way a branch of a tree branches of the trunk of the tree. A second new design branch may be defined by creating a new branch object that is relative to master branch object **3440** or the previously created branch object. Thus, a new design branch may be defined by creating a new branch object that has an empty starting context or by creating a new branch object that is relative to another branch object and has a start state that is a selected state of the other branch object.

For example, without limitation, branch object **3442** may be created to define design branch **3444.** Branch object **3442** may be created relative to master branch object **3440.** Prior to the creation of branch object **3442,** a selected state of design data **3402** with respect to master branch object **3440** is remembered by data manager **116.** The selected state is either a current state or a previous state. The selected state of an existing design branch may be a state in which all version objects in that existing design branch are immutable. When the selected state is a current state but one or more of the version objects in the design branch is mutable, all mutable version objects in the existing design branch must be made immutable in order for the current state to be used to create a new design branch.

The selected state establishes a start state for branch object **3442,** and thereby design branch **3444.** When the selected state is a current state of master branch object **3440,** the most recent version object contained within each branch instance object that is linked to master branch object **3440** is remembered to establish the start state for branch object **3442.** Branch object **3442** is then created with reference to this start state.

When a change is to be made to the design data for a particular version of a particular variant of a product structure element within design branch **3444,** a new branch instance object is created within the appropriate variant object. The new branch instance object is linked to branch object **3442.** A new version object is created within the new branch instance object. The new version object may be created independently, may be copied from another version object in model **3400,** or may be created by merging together the design data in two or more version objects.

In this manner, any new changes made to model **3400** within design branch **3444** may be tracked within one or more branch instance objects that are linked to branch object **3442.** Thus, changes corresponding to design branch **3444** are tracked independently of other design branches in set of design branches **3407.** For example, at any point in time, the current state of branch object **3442** captures all changes to model **3400** within the corresponding design branch **3444** relative to the start state of branch object **3442.** These changes are tracked independently of any changes captured by master branch object **3440** for master design branch **3438.**

Master branch object **3440** and the zero or more branch objects that define set of design branches **3407** allow data manager **116** to independently and efficiently manage different design branches at the same time, different times, or both. For example, without limitation, different teams of design engineers or other types of operators may independently work on design data **3402** in model **3400** within the context of different design branches at the same time.

Data manager **116** may control at least one of the design or manufacturing of product **102** in **Figure 1** using model **3400** of product structure **3404** in **Figure 1****.** Further, using model **3400** for product structure **3404** may reduce an amount of redundant data, thereby reducing communications bandwidth required to communicate model **3400** and reducing the storage capacity required for the data repository needed to store model **3400.** In one illustrative example, model **3400** is electronically stored engineering data model that may be stored in an electronic engineering data repository.

The illustration of product management system **100** in **Figure 34** is not meant to imply physical or architectural limitations to the manner in which an illustrative embodiment may be implemented. Other components in addition to or in place of the ones illustrated may be used. Some components may be optional. Also, the blocks are presented to illustrate some functional components. One or more of these blocks may be combined, divided, or combined and divided into different blocks when implemented in an illustrative embodiment.

In other illustrative examples, model **3400** may also include auxiliary objects. For example, model **3400** may include a set of auxiliary objects, similar to set of auxiliary objects **127** described in **Figure 1****.** Further, although not described in **Figure 34****,** data manager **116** and visualizer **166** in **Figure 1** may be configured to display model **3400,** a portion of model **3400,** information about model **3400** in graphical user interface **168** on display system **170** in **Figure 1****,** or a combination thereof.

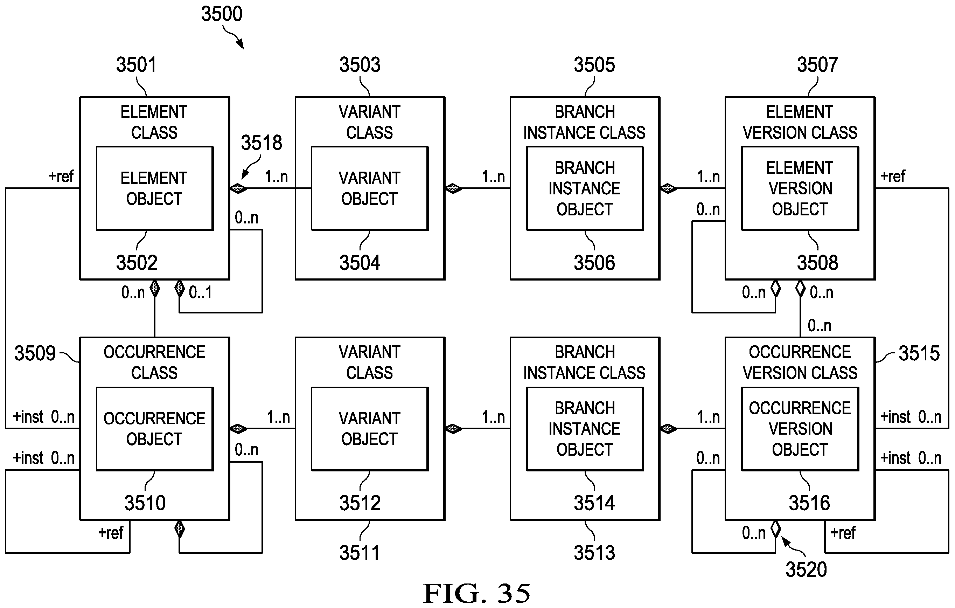

**Figure 35** is an illustration of a modeling scheme in accordance with an illustrative embodiment. In this illustrative example, modeling scheme **3500** describes the relationships between the different types of objects that may be included in a model, such as model **3400** in **Figure 34****.** In one illustrative example, modeling scheme **3500** is based on the Unified Modeling Language^{®} (UMLO).

As depicted, modeling scheme **3500** includes element class **3501,** variant class **3503,** branch instance class **3505,** element version class **3507,** occurrence class **3509,** variant class **3511,** branch instance class **3513,** and occurrence version class **3515.** In one illustrative example, variant class **3503** and variant class **3511** are the same class and branch instance class **3505** and branch instance class **3513** are the same class.

Modeling scheme **3500** may also include objects of these classes. In particular, each of element object 3502, variant object **3504,** branch instance object **3506,** element version object **3508,** occurrence object **3510,** variant object **3512,** branch instance object **3514,** and occurrence version object **3516** is a representative example of an object that belongs to element class **3501,** variant class **3503,** branch instance class **3505,** element version class **3507,** occurrence class **3509,** variant class **3511,** branch instance class **3513,** and occurrence version class **3515,** respectively. These objects are examples of the different types of objects that may be included in a model, such as model **3400** in **Figure 34****.**

In modeling scheme **3500,** composition relationships **3518** between two classes indicate that one class is owned by and therefore dependent on the other class. This same relationship applies to the objects of these classes. For example, variant class **3503** is owned by, and therefore dependent on, element class **3501.** Consequently, a deletion of element object **3502** in a model would result in the deletion of variant object **3504** owned by element object **3502.**

In modeling scheme **3500,** aggregation relationships **3520** between two classes indicate that one class is associated with but not dependent on the other class. This same relationship applies to the objects of these classes. For example, occurrence version class **3515** is associated with but not dependent on element version class **3507.** In other words, element version object **3508** is not necessarily the exclusive container of occurrence version object **3516.** Consequently, a deletion of element version object **3508** in a model does not result in the deletion of occurrence version object **3516.**

Element object **3502** represents a product structure element that makes up a product structure for a product. The product may be, for example, without limitation, an aircraft, a spacecraft, a satellite, an engine system, or some other type of product. A product structure element may represent the product itself, an assembly component that makes up the product, a leaf component that makes up the product, or some other type of component of the product.

As depicted, element object **3502** owns at least one variant object **3504.** Variant object **3504** represents a variant of the product structure element that is represented by element object **3502.** Further, variant object **3504** owns at least one branch instance object **3506.** In this manner, element object **3502** indirectly owns branch instance object **3506** through variant object **3504.** Branch instance object **3506** references a particular branch object (not shown) that corresponds to a particular design branch.

Branch instance object **3506** owns at least one element version object **3508.** In this manner, both element object **3502** and variant object **3504** may be considered as indirectly owning element version object **3508.** Element version object **3508** contains the design data for a particular version of the variant of the product structure element represented by variant object **3504.** Branch instance object **3506** is linked to a branch object (not shown) that defines the particular design branch to which element version object **3508** belongs.

In this illustrative example, element version object **3508** may be associated with zero, one, two, or some other number of version objects. For example, without limitation, element version object **3508** may be the parent of another element version object at a lower level in the secondary hierarchical organization to which these two element version objects belong.

As depicted, element object **3502** may be the parent of zero, one, two, three, or some other number of other element objects. For example, without limitation, element object **3502** may represent an assembly component that is comprised of two leaf components. Each of these two leaf components may be represented by element objects, similar to element object **3502.**

Further, element object **3502** may be the parent of zero, one, two, three, or some other number of occurrence objects, such as occurrence object **3510.** Depending on the implementation, occurrence object **3510** may represent a usage of either some other corresponding element object or some other occurrence object. The other corresponding element object may be referred to as a reference element object, while the other occurrence object may be referred to as reference occurrence object.

In one illustrative case, occurrence object **3510** is an instantiation of a reference element object in which the instantiation becomes the child of element object **3502** instead of the reference element object being the child of element object **3502.** In another illustrative case, occurrence object **3510** is an instantiation of a reference occurrence object in which the instantiation becomes the child of element object **3502** instead of the reference occurrence object or the reference element object instantiated by the reference occurrence object.

Occurrence object **3510** owns at least one variant object **3512.** Variant object **3512** represents a usage of a particular variant of the product structure element indirectly referenced by occurrence object **3510.** For example, when occurrence object **3510** instantiates a reference element object, variant object **3512** represents a usage of a particular variant of the product structure element represented by the reference element object. In other words, variant object **3512** represents a variant of the instantiation of the reference element object. Further, when occurrence object **3510** instantiates a reference occurrence object, variant object **3512** represents a usage of a particular variant of the product structure element that is represented by the reference element object that is instantiated by the reference occurrence object. In other words, variant object **3512** represents a variant of the instantiation of the reference occurrence object.

When variant class **3503** and variant class **3511** are the same variant class, variant object **3504** and variant object **3512** are objects belonging to the same variant class. However, variant object **3504** owned by element object **3502** may also be referred to as an element variant object. Variant object **3512** owned by occurrence object **3510** may also be referred to as an occurrence variant object.

Variant object **3512** owns at least one branch instance object **3514.** In this manner, occurrence object **3510** indirectly owns branch instance object **3514** through variant object **3512.** Branch instance object **3514** is linked to a branch object (not shown) that defines a particular design branch.

Branch instance object **3514** owns at least one occurrence version object **3516.** In this manner, both occurrence object **3510** and variant object **3512** may be considered as indirectly owning occurrence version object **3516.** Branch instance object **3514** is linked to a branch object that defined the particular design branch to which occurrence version object **3516** belongs. Occurrence version object **3516** contains a "lightweight" copy of the design data for a particular version of the variant of the product structure occurrence represented by variant object **3512.**

As one illustrative example, without limitation, occurrence version object **3516** may be an instantiation of element version object **3508.** In this example, occurrence version object **3516** contains a reduced amount of design data for the version of the variant of the product structure element represented by element version object **3508** as compared to element version object **3508.** In another illustrative example, occurrence version object **3516** may be an instantiation of another occurrence version object.

As depicted, occurrence version object **3516** may be associated with zero, one, two, or some other number of occurrence version objects. For example, without limitation, occurrence version object **3516** may be the parent of another occurrence version object at a lower level in the secondary hierarchical organization to which these two occurrence version objects belong.

Any number of the different types of objects shown in modeling scheme **3500** may be used to build a model that represents a product structure in a form that is substantially comprehensive, comprehensible, and flexible. The flexibility provided by these objects enables multiple design branches to be independently worked on simultaneously and at different times.

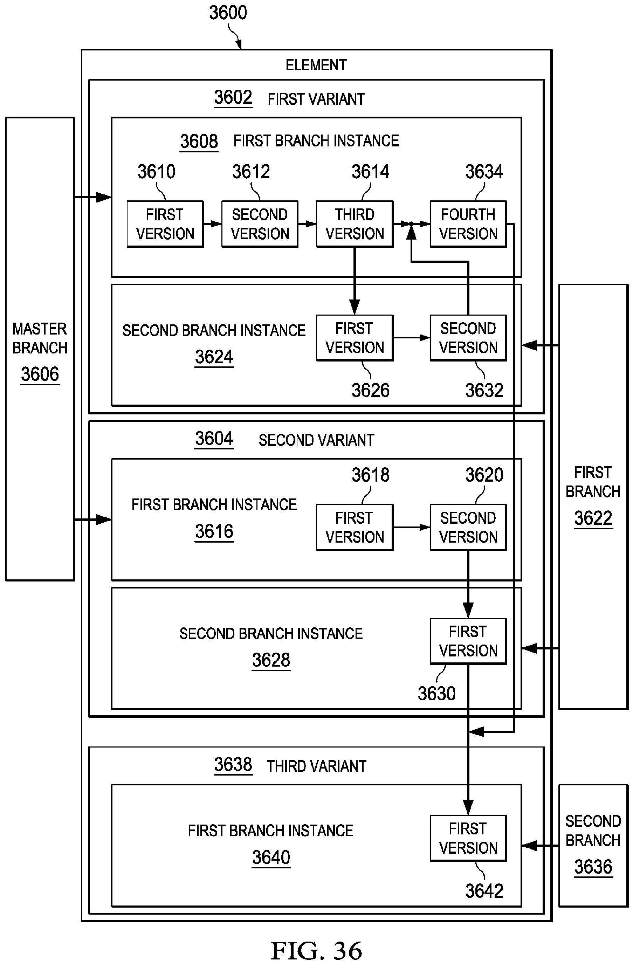

**Figure 36** is an illustration of an element object in accordance with an illustrative embodiment. In this illustrative example, element object **3600** may be an example of one implementation for an element object in group of element objects **3423** in **Figure 34****.** Further, element object **3600** may be an example of one implementation for element object **3502** in **Figure 35****.**

Element object **3600** represents a product structure element. As one illustrative example, the product structure element may be an engine for an aircraft. The engine may have one configuration when used on the left side of the aircraft and another configuration when used on the right side of the aircraft. In other words, the engine may have two possible variants.

As depicted, element object **3600** owns first variant object **3602** and second variant object **3604.** First variant object **3602** and second variant object **3604** are examples of implementations for variant objects in group of variant objects **3430** in **Figure 34****.** Further, first variant object **3602** and second variant object **3604** may be examples of implementations for variant object **3504** in **Figure 35****.**

First variant object **3602** and second variant object **3604** each represent a variant of the product structure element represented by element object **3600.** For example, first variant object **3602** may represent the left variant of the engine and second variant object **3604** may represent the right variant of the engine.

Master branch object **3606** defines a master design branch. Master branch object **3606** is an example of one implementation for master branch object **3440** in **Figure 34****.** The master design branch may also be referred to as the design trunk. The master design branch reflects the evolution of the design data over time from the beginning.

In one illustrative example, when designing in the context of the master design branch, the creation of element object **3600** to represent a new product structure element in a model results in the creation of first variant object **3602,** first branch instance object **3608,** and first version object **3610.** Element object **3600** owns first variant object **3602,** which owns first branch instance object **3608,** which owns first version object **3610.**

First version object **3610** contains the design data for the first variant of the new product structure element. First branch instance object **3608** is linked to master branch object **3606,** thereby indicating that first version object **3610** belongs to the master design branch.

In one illustrative example, first version object **3610** is associated with a timestamp object (not shown). Associating the timestamp object with first version object **3610** makes first version object **3610** immutable. The timestamp object identifies the time at which first version object **3610** is made immutable. In some cases, the timestamp object may include other information. This other information may include, for example, without limitation, a user identifier, a session identifier, a comment, a note, some other type of information, or a combination thereof.

First version object **3610** is immutable with respect to the point in time identified by the timestamp object. In other words, the version of the design data contained within first version object **3610** is locked as of the point in time identified by the timestamp object.

Over time, one or more rounds of design changes may be made to the design data contained in first version object **3610.** As one illustrative example, when a round of design changes needs to be made to the design data contained in first version object **3610,** second version object **3612** may be created. While the design changes are not finalized, second version object **3612** is considered mutable. When the round of design changes becomes finalized, a timestamp object (not shown) is associated with second version object **3612,** making second version object **3612** immutable. In other words, the version of the design data contained within second version object **3612** is locked as of the point in time identified by the timestamp object.

Third version object **3614** may be created within first branch instance object **3608** in a manner similar to second version object **3612.** First branch instance object **3608** tracks the sequence of versions of the first variant of the product structure element represented by first version object **3610,** second version object **3612,** and third version object **3614.**

Design data for the second variant of the product structure element may be added to element object **3600** in different ways within with the context of the master design branch. In one illustrative example, second variant object **3604** is created to represent this second variant. In this example, the creation of second variant object **3604** results in the creation of first branch instance object **3616** within second variant object **3604** and first version object **3618** within first branch instance object **3616.** First branch instance object **3616** is linked to master branch object **3606.** In other illustrative examples, a version object from within first branch instance object **3608** in first variant object **3602** may be copied to create first version object **3618.**

As design changes are made to the design data contained within first version object **3618** within the context of the master design branch, new version objects are created. For example, second version object **3620** represents the latest version of the second variant of the product structure element represented by element object **3600.** In this illustrative example, first branch instance object **3616** tracks this sequence of versions within the context of the master design branch.

At some point in time, a group of engineers may desire to work on the design for the product structure element represented by element 3**600** independently of the work being done in the context of the master design branch. A new design branch off of the master design branch is initiated.

In particular, the selected state of the design data with respect to the master design branch is remembered to establish a start state for the new design branch. In other words, the latest version object in each branch instance object that is linked to master branch object **3606** is identified and used to establish a start state for the new design branch. First branch object **3622** is created having this start state to thereby define the new design branch.

If the design data for the variant represented by first variant object **3602** needs to be changed along the new design branch represented by first branch object **3622,** second branch instance object **3624** is created. The latest immutable version object in first variant object **3602** along the master design branch is identified based on the start state for first branch object **3622.** In this example, third version object **3614** was the latest immutable version object captured by the start state.

Thus, third version object **3614** is copied to form first version object **3626** of second branch instance object **3624,** which links to first branch object **3622.** At some later point in time, second branch instance object **3628** is created within second variant object **3604.** Second branch instance object **3628** links to first branch object **3622.** As depicted, first version object **3630** may be created within second branch instance object **3628.** First version object **3630** is independently created from scratch in this illustrative example.

At a later point in time, first version object **3618** is made immutable by associating a timestamp object (not shown) with first version object **3618.** First version object **3618** is then copied to form second version object **3620.** Changes may then be made to the design data in second version object **3620,** independently of first version object **3618.** In this manner, the state of the design data in first version object **3618** at the time identified by the timestamp object associated with first version object **3618** is preserved.

Further, first version object **3626** may be made immutable and copied to form second version object **3632.** In some cases, the design data in second version object **3632** may be merged with the design data in third version object **3614** to create fourth version object **3634** within first branch instance object **3608.** In this manner, the design data from one design branch may be merged with the design data from another design branch. In some cases, the design data from one design branch may be merged with the design data from another design branch to create a new version object in yet another design branch.

In some cases, a team may desire to create a third variant of the product structure element in another design branch that is based off of the selected state of first branch object **3622.** The design data for this third variant may be added to element object **3600** by creating second branch object **3636** to define this new design branch. Third variant object **3638** is created within element object **3600** in the context of the new design branch defined by second branch object **3636.** First branch instance object **3640** is created within third variant object **3638** and is linked to second branch object **3636.**

In this illustrative example, fourth version object **3634** in first branch instance object **3608** of first variant **3602** and second version object **3620** in first branch instance object **3616** in second variant object **3604** are merged. These two version objects are merged to form first version object **3642.** In any merge, such as the merging of these two version objects, any conflicts that arise in the design data between the two version objects may need to be resolved. For example, without limitation, the design team or engineering team may be able to decide how to resolve these conflicts in the creation of the new version object.

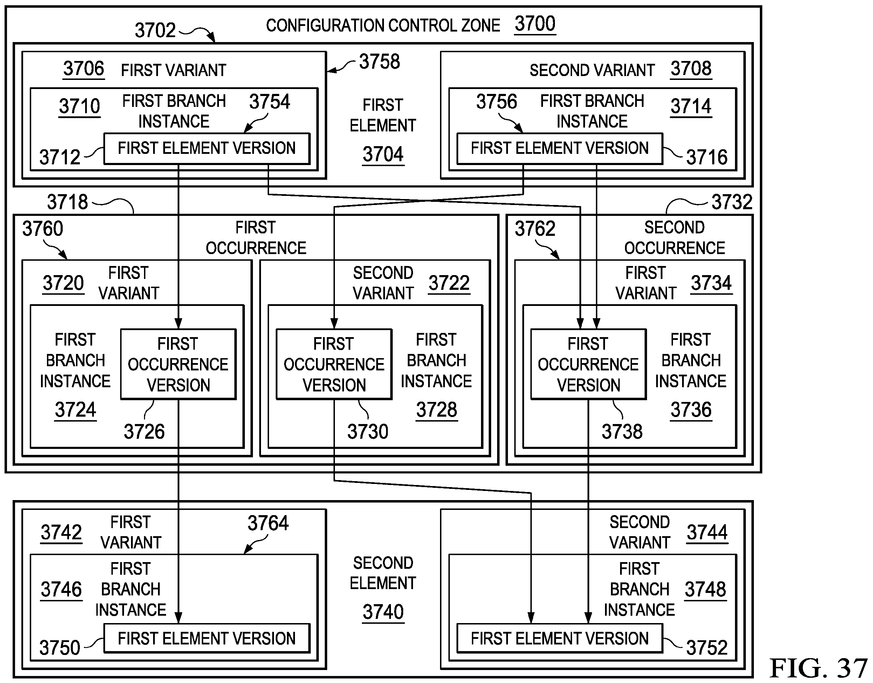

**Figure 37** is an illustration of a configuration control zone in accordance with an illustrative embodiment. In this illustrative example, configuration control zone **3700** establishes the collection of objects that may be modified based on the selection of first element object **3704.** In this illustrative example, first element object **3704** is the root of the main structure of primary hierarchical organization **3702.** Primary hierarchical organization **3702** may be an example of one implementation for primary hierarchical organization **3408** in **Figure 34****.**

First element object **3704** owns first variant object **3706** and second variant object **3708.** First variant object **3706** owns first branch instance object **3710,** which owns first element version object **3712.** Second variant object **3708** owns first branch instance object **3714,** which owns first element version object **3716.**

Primary hierarchical organization **3702** also includes first occurrence object **3718** and second occurrence object **3732.** In this illustrative example, first occurrence object **3718** and second occurrence object **3732** are the child objects of first element object **3704.**

First occurrence object **3718** owns first variant object **3720** and second variant object **3722.** First variant object **3720** owns first branch instance object **3724,** which owns first occurrence version object **3726.** Second variant object **3722** owns first branch instance object **3728,** which owns first occurrence version object **3730.** Second occurrence object **3732** owns first variant object **3734.** First variant object **3734** owns first branch instance object **3736,** which owns first occurrence version object **3738.**

In this illustrative example, primary hierarchical organization **3702** also includes second element object **3740,** which is the reference element object that is instantiated by each of first occurrence object **3718** and second occurrence object **3732.** Second element object **3740** includes first variant object **3742** and second variant object **3744.** First variant object **3742** includes first branch instance object **3746,** which owns first element version object **3750.** Second variant object **3744** includes first branch instance object **3748,** which owns first element version object **3752.**

In this illustrative example, secondary hierarchical organization **3754** and secondary hierarchical organization **3756** are associated with primary hierarchical organization **3702.** First element version object **3712** and first element version object **3716** are the root objects of secondary hierarchical organization **3754** and secondary hierarchical organization **3756,** respectively.

Secondary hierarchical organization **3754** includes first element version object **3712,** first occurrence version object **3726,** first occurrence version object **3738,** first element version object **3750,** and first element version object **3752.** Secondary hierarchical organization **3756** includes first element version object **3716,** first occurrence version object **3730,** first occurrence version object **3738,** first element version object **3750,** and first element version object **3752.**

Each master object in primary hierarchical organization **3702** has a change context organization. For example, first element object **3704** has change context organization **3758,** which includes first variant object **3706,** first branch instance object **3710,** second variant object **3708,** and second branch instance object **3714.** First occurrence object **3718** has change context organization **3760,** which includes first variant object **3720,** first branch instance object **3724,** second variant object **3722,** and second branch instance object **3728.**

Further, second occurrence object **3732** has change context organization **3762,** which includes first variant object **3734** and first branch instance object **3736.** Second element object **3740** has change context organization **3764,** which includes first variant object **3742,** first branch instance object **3746,** second variant object **3744,** and second branch instance object **3748.** Each of change context organization **3758,** change context organization **3760,** change context organization **3762,** and change context organization **3764** is an example of one implementation for change context organization **3433** in **Figure 34****.**

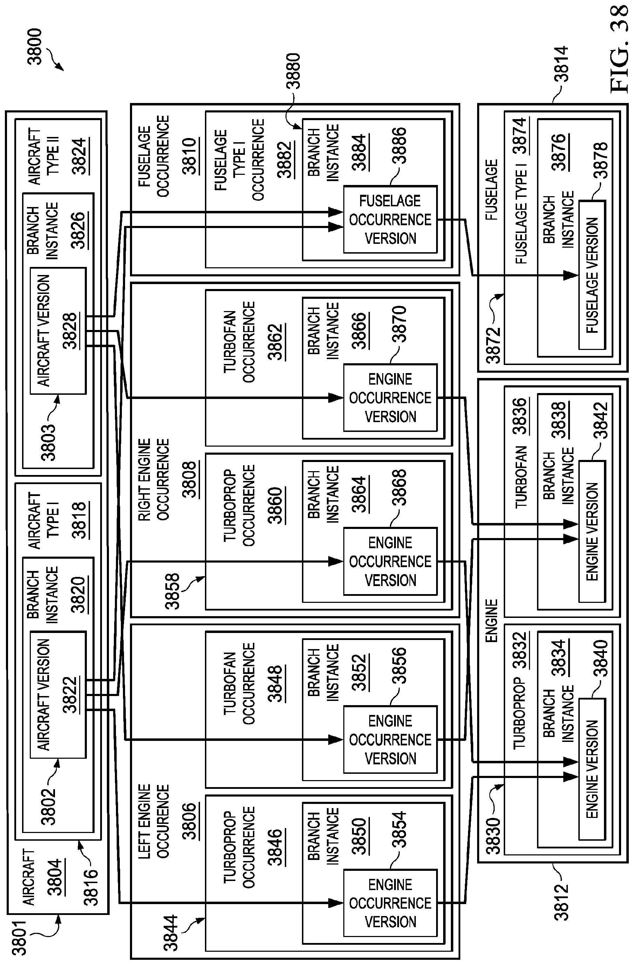

**Figure 38** is an illustration of a model for an aircraft product structure in accordance with an illustrative embodiment. In this illustrative example, model **3800** is a simplified model of an aircraft product structure. Model **3800** of this aircraft product structure is an example of one implementation for model **3400** of product structure **3404** in **Figure 34****.**

In this illustrative example, model **3800** includes primary hierarchical organization **3801,** secondary hierarchical organization **3802,** and secondary hierarchical organization **3803.** As depicted, primary hierarchical organization **3802** includes the master objects of aircraft object **3804,** left engine occurrence object **3806,** right engine occurrence object **3808,** fuselage occurrence object **3810,** engine object **3812,** and fuselage object **3814.** Aircraft object **3804,** engine object **3812,** and fuselage object **3814** are element objects that represent aircraft product structure elements in the aircraft product structure. Left engine occurrence object **3806,** right engine occurrence object **3808,** and fuselage occurrence object **3810** are occurrence objects that represent usages of aircraft product structure elements in the makeup of a particular aircraft product structure.

Aircraft object **3804,** left engine occurrence object **3806,** right engine occurrence object **3808,** and fuselage occurrence object **3810** form the main structure of primary hierarchical organization **3801.** Each of engine object **3812** and fuselage object **3814** forms an associated structure of primary hierarchical organization **3801.** Aircraft object **3804** is an element object that represents an aircraft, which is a product structure element of the aircraft product structure.

Aircraft object **3084** has change context organization **3816.** Change context organization **3816** includes aircraft type I object **3818** and branch instance object **3820.** Branch instance object **3820** owns aircraft version object **3822,** which belongs to secondary hierarchical organization **3802.** Aircraft version object **3822** is an element version object that contains design data for a version of the aircraft product structure that corresponds to a type I aircraft. Branch instance object **3820** is linked to a branch object (not shown) that defines the particular design branch to which aircraft version object **3822** belongs.

Change context organization **3816** also includes aircraft type II object **3824** and branch instance object **3826.** Branch instance object **3826** owns aircraft version object **3828,** which belongs to secondary hierarchical organization **3803.** Aircraft version object **3828** is an element version object that contains design data for a version of the aircraft product structure that corresponds to a type II aircraft. Branch instance object **3826** is linked to a branch object (not shown) that defines the particular design branch to which aircraft version object **3828** belongs.

Left engine occurrence object **3806** and right engine occurrence object **3808** are instantiations of engine object **3812.** In other words, left engine occurrence object **3806** and right engine occurrence object **3808** represent usages of the engine represented by engine object **3812** in the makeup of the aircraft represented by aircraft object **3804.**

Engine object **3812** has change context organization **3830.** Change context organization **3830** includes turboprop object **3832,** branch instance object **3834,** turbofan object **3836,** and branch instance object **3838.** Turboprop object **3832** and turbofan object **3836** are element variant objects. Branch instance object **3834** owns engine version object **3840** and branch instance object **3838** owns engine version object **3842.**

Left engine occurrence object **3806** is an instantiation of engine object **3812** that has change context organization **3844.** Change context organization **3844** includes turboprop occurrence **3846,** turbofan occurrence **3848,** branch instance object **3850,** and branch instance object **3852.** Turboprop occurrence **3846** and turbofan occurrence **3848** are occurrence variant objects. Branch instance object **3850** owns engine occurrence version object **3854** and branch instance object **3852** owns engine occurrence version object **3856.**

Right engine occurrence object **3808** is an instantiation of engine object **3812** that has change context organization **3858.** Change context organization **3858** includes turboprop occurrence **3860,** turbofan occurrence **3862,** branch instance object **3864,** and branch instance object **3866.** Turboprop occurrence **3860** and turbofan occurrence **3862** are occurrence variant objects. Branch instance object **3864** owns engine occurrence version object **3868** and branch instance object **3866** owns engine occurrence version object **3870.**

Fuselage object **3814** has change context organization **3872.** Change context organization **3872** includes fuselage type I object **3874** and branch instance object **3876.** Fuselage type I object **3874** is an element variant object. Branch instance object **3876** includes fuselage version object **3878,** which includes design data for a version of a fuselage for the aircraft product structure that corresponds to a type I fuselage.

Fuselage occurrence object **3810** is an instantiation of fuselage object **3814.** Fuselage occurrence object **3810** has change context organization **3880.** Change context organization **3880** includes fuselage type I occurrence object **3882** and branch instance object **3884.** Fuselage type I occurrence object **3882** is an occurrence variant object. Branch instance object **3884** includes fuselage occurrence version object **3886.**

Together, aircraft version object **3822,** engine occurrence version object **3854,** engine occurrence version object **3868,** and fuselage occurrence version object **3886** form the main structure of secondary hierarchical organization **3802.** Similarly, aircraft version object **3828,** engine occurrence version object **3856,** engine occurrence version object **3870,** and fuselage occurrence version object **3886** together form the main structure of secondary hierarchical organization **3803.**

### FLOWCHARTS

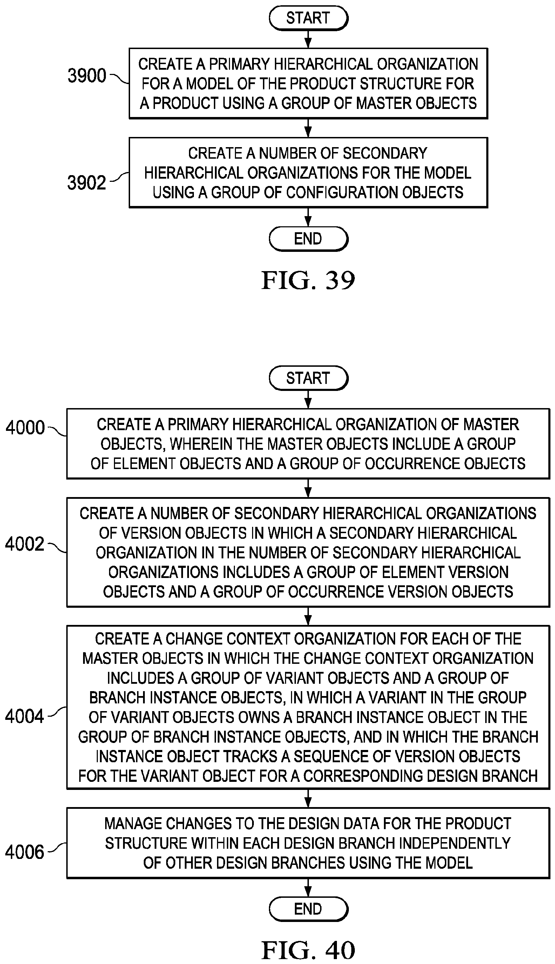

**Figure 39** is an illustration of a process for managing variations in a product structure for a product in the form of a flowchart depicted in accordance with an illustrative embodiment. The process described in **Figure 39** may be implemented using data manager **116** and visualizer **166** in **Figure 1****.**

Additionally, the process illustrated in **Figure 39** may be implemented using one or more processors, possibly in a networked or distributed environment, such as, but not limited to, data processing system **4300** in **Figure 43** below. As used herein, the terms "data manager" and "visualizer" are not limited to data manager **116** or visualizer **166** in **Figure 1** but may also include any processor or set of processors used together with a computer readable medium in order to effectuate the operations described herein. The process illustrated in **Figure 39** may be implemented using software, hardware, or a combination thereof.

The process may begin by creating a primary hierarchical organization for a model of a product structure for a product using a group of master domain objects (operation **3900**). The model created in operation **3900** may be, for example, model **114** in **Figure 1****.** The primary hierarchical organization may be primary hierarchical organization **144** in **Figure 1****.**

Thereafter, a number of secondary hierarchical organizations for the model may be created using a group of domain configuration objects (operation **3902),** with the process terminating thereafter. Each secondary hierarchical organization in the number of secondary hierarchical organizations may be associated with the primary hierarchical organization. Further, each secondary hierarchical organization may be configured to represent a variant of the product. A number of configuration objects in each secondary hierarchical organization may represent a number of variations in the product structure for the product.

In this illustrative example, when a representation of a new variant of the product is to be added to the model, a new secondary hierarchical organization may be added to the model. The new secondary hierarchical organization may be associated with the primary hierarchical organization and may share at least one configuration object with another secondary hierarchical organization in the number of secondary hierarchical organizations in the model. In this manner, the new secondary hierarchical organization may be optimized. In particular, the new secondary hierarchical organization may be an optimized product variant structure.

**Figure 40** is an illustration of a process for managing a model of a product structure in the form of a flowchart in accordance with an illustrative embodiment. This process may be used to manage, for example, without limitation, model **3400** in **Figure 34****.**

The process may begin by creating a primary hierarchal organization of master objects, wherein the master objects include a group of element objects and a group of occurrence objects (operation **4000**). Next, a number of secondary hierarchical organizations of version objects is created (operation **4002**). In operation **4002,** a secondary hierarchical organization in the number of secondary hierarchical organizations may include a group of element version objects and a group of occurrence version objects.

Thereafter, a change context organization is created for each of the master objects in which the change context organization includes a group of variant objects and a group of branch instance objects and in which a branch instance object in the group of branch objects tracks a sequence of version objects for a corresponding design branch (operation **4004**). Changes to the design data for the product structure within each design branch are managed independently of other design branches using the model (operation **4006**), with the process terminating thereafter.

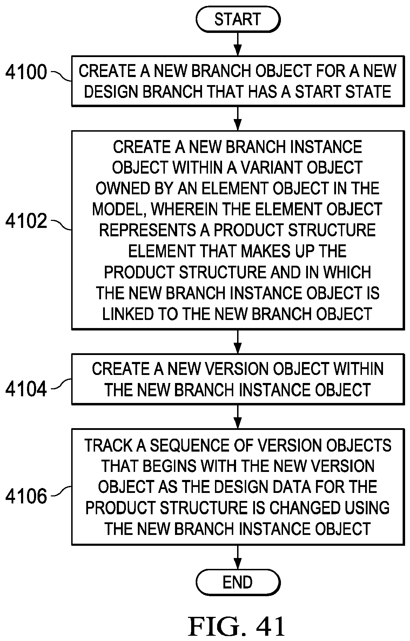

**Figure 41** is an illustration of a process for changing design data for a product structure in the form of a flowchart in accordance with an illustrative embodiment. This process may be used to change, for example, without limitation, design data **3402** in model **3400** for product structure **3404** in **Figure 34****.**

The process may begin by creating a new branch object off of an existing branch object in which a start state for the new branch object captures a selected state of the existing branch object (operation **4100**). A new branch instance object is created within a variant object owned by an element object in the model in which the element object represents a product structure element that makes up the product structure and in which the new branch instance object is linked to the new branch object (operation **4102**).

Thereafter, a new version object is created within the new branch instance object (operation **4104**). Operation **4104** may be performed in different ways. In one illustrative example, a version object located within a different branch instance object may be copied to form the new version object. In another illustrative example, at least two version objects located within different branch instance objects are merged to form the new version object. A sequence of version objects that begins with the new version object is tracked as the design data for the product structure is changed using the new branch instance object (operation **4106**), with the process terminating thereafter.

The flowchart and block diagrams in the different depicted embodiments illustrate the architecture, functionality, and operation of some possible implementations of apparatuses and methods in an illustrative embodiment. In this regard, each block in the flowchart or block diagrams may represent a module, segment, function, and/or a portion of an operation or step.

For example, one or more of the blocks may be implemented as program code, in hardware, or a combination of the program code and hardware. When implemented in hardware, the hardware may, for example, take the form of integrated circuits that are manufactured or configured to perform one or more operations in the flowchart or block diagrams.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

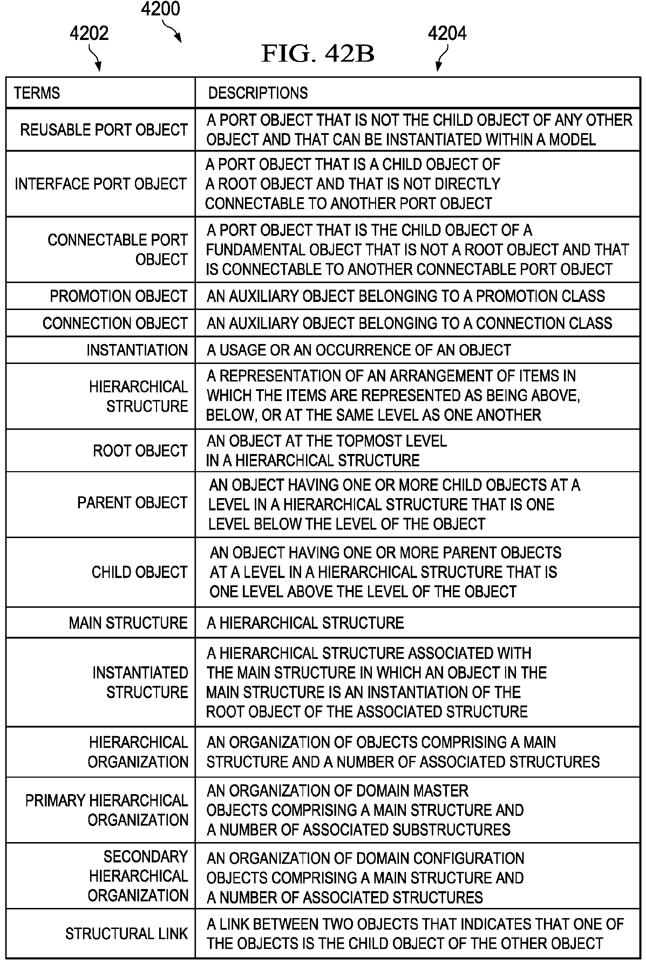

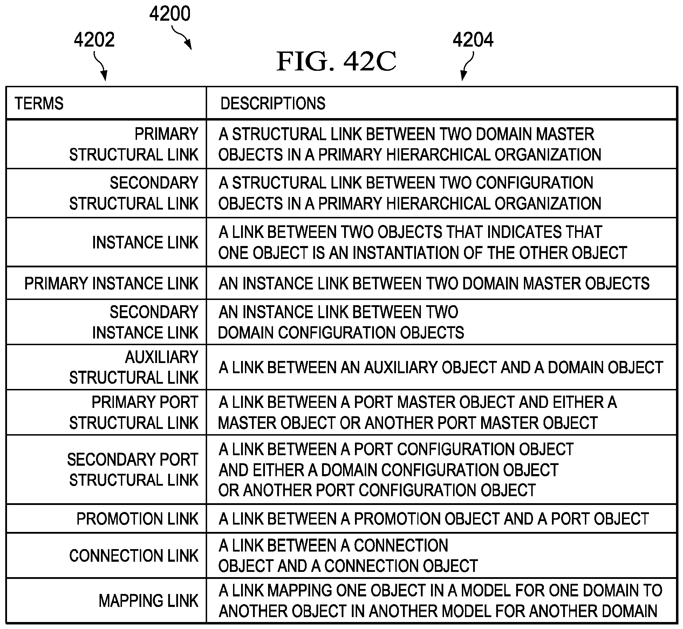

**Figure 42A****,** **Figure 42B****,** and **Figure 42C** form a table of terms and descriptions for these terms depicted in accordance with an illustrative embodiment. In this illustrative example, table **4200** includes terms **4202** and descriptions **4204.** Terms **4202** may comprise terms related to the different illustrative embodiments as described in **Figures 1-32** above. Further, descriptions **4204** are illustrative examples of the definitions for the terms included in terms **4202** in accordance with the usage of these terms in **Figures 1-32****.**

**Figure 43** is an illustration of a data processing system in the form of a block diagram depicted in accordance with an illustrative embodiment. In this illustrative example, data processing system **4300** may be used to implement one or more computers in computer system **118** in **Figure 1****.** In particular, data manager **116** from **Figure 1** may be implemented in data processing system 43**00**. As depicted, data processing system **4300** includes communications framework **4302,** which provides communications between processor unit **4304,** memory **4306,** persistent storage **4308,** communications unit **4310,** input/output unit **4312,** and display **4314.**

Processor unit **4304** serves to run instructions for software that may be loaded into memory **4306.** Processor unit **4304** may be a number of processors, a multi-processor core, or some other type of processor, depending on the particular implementation.

Memory **4306** and persistent storage **4308** are examples of storage devices **4316.** A storage device is any piece of hardware that is capable of storing information, such as, for example, without limitation, data, program code in functional form, and/or other suitable information either on a temporary basis and/or a permanent basis. Storage devices **4316** also may be referred to as computer readable storage devices or non-transitory storage devices in these examples.

Memory **4306,** in these examples, may be, for example, a random access memory or any other suitable volatile or nonvolatile storage device. In some cases, memory 4306 may take the form of associative memory. Depending on the implementation, model **114** from **Figure 1** may be stored in memory 43**06**.

Persistent storage **4308** may take various forms, depending on the particular implementation. For example, persistent storage **4308** may contain one or more components or devices. For example, persistent storage **4308** may be a hard drive, a flash memory, a rewritable optical disk, a rewritable magnetic tape, or some combination of the above.

Communications unit **4310,** in these examples, provides for communications with other data processing systems or devices. In these examples, communications unit **4310** is a network interface card that may provide communications through the use of physical and/or wireless communications links.

Input/output unit **4312** allows for input and output of data between data processing system 4300 and other devices. For example, input/output unit **4312** may provide a connection for user input through a keyboard, a mouse, a printer, and/or some other suitable input device. Display **4314** provides a mechanism to display information to a user.

Instructions for the operating system, applications, and/or programs may be located in storage devices **4316,** which are in communication with the processor unit **4304** through communications framework **4302.** In these illustrative examples, the instructions are in a functional form on persistent storage **4308.** These instructions may be loaded into memory **4306** for execution by processor unit **4304.** The processes of the different embodiments may be performed by processor unit **4304** using computer-implemented instructions, which may be located in a memory, such as memory **4306.**

These instructions are referred to as program code, computer usable program code, or computer readable program code that may be read and executed by a processor in processor unit **4304.** The program code in the different embodiments may be embodied on different physical or computer readable storage media, such as memory **4306** or persistent storage **4308.**

For example, data manager **116** from **Figure 1** may be implemented as program code. In some cases, data manager **116** may be implemented as a software layer on top of an existing database structure stored in memory 43**06** or persistent storage 43**08**. Further, data manager **116** from **Figure 1** may be implemented in program code in the form of software tools such as, for example, without limitation, authoring software, text-based software, database management software, artificial intelligence software, and/or other types of software.

Program code **4318** is located in a functional form on computer readable media **4320** that is selectively removable and may be loaded onto or transferred to data processing system **4300** for execution by processor unit **4304.** Program code **4318** and computer readable media **4320** form computer program product **4322** in these examples. In one example, computer readable media **4320** may be computer readable storage media **4324** or computer readable signal media **4326.**

Computer readable storage media **4324** may include, for example, an optical or magnetic disk that is inserted or placed into a drive or other device that is part of persistent storage **4308** for transfer onto a storage device, such as a hard drive, that is part of persistent storage **4308.** Computer readable storage media **4324** also may take the form of a persistent storage, such as a hard drive, a thumb drive, or a flash memory, that is connected to data processing system **4300.**

In these examples, computer readable storage media **4324** is a physical or tangible storage device used to store program code **4318** rather than a medium that propagates or transmits program code **4318.** Alternatively, program code **4318** may be transferred to data processing system **4300** using computer readable signal media **4326.** Computer readable signal media **4326** may be, for example, a propagated data signal containing program code **4318.** For example, computer readable signal media **4326** may be an electromagnetic signal, an optical signal, and/or any other suitable type of signal.

The different components illustrated for data processing system **4300** are not meant to provide architectural limitations to the manner in which different embodiments may be implemented. The different illustrative embodiments may be implemented in a data processing system including components in addition to or in place of those illustrated for data processing system **4300.** Other components shown in **Figure 43** can be varied from the illustrative examples shown. The different embodiments may be implemented using any hardware device or system capable of running program code.

In another illustrative example, processor unit **4304** may take the form of a hardware unit that has circuits that are manufactured or configured for a particular use. This type of hardware may perform operations without needing program code to be loaded into a memory from a storage device to be configured to perform the operations.

For example, when processor unit **4304** takes the form of a hardware unit, processor unit **4304** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a field programmable logic array, a field programmable gate array, and other suitable hardware devices. With this type of implementation, program code **4318** may be omitted

In still another illustrative example, processor unit **4304** may be implemented using a combination of processors found in computers and hardware units. Processor unit **4304** may have a number of hardware units and a number of processors that are configured to run program code **4318.** With this depicted example, some of the processes may be implemented in the number of hardware units, while other processes may be implemented in the number of processors. In some cases, processor unit **4304** may be part of an artificial intelligence system.

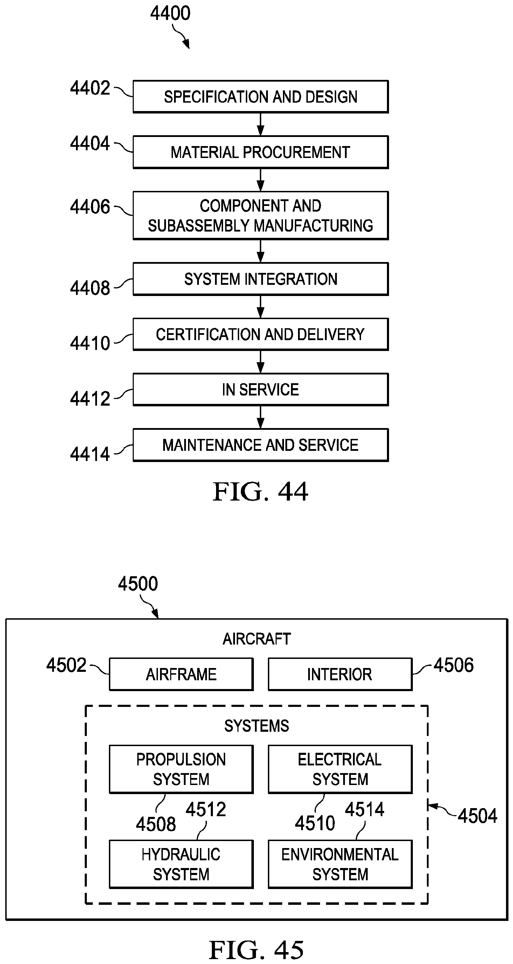

Illustrative embodiments of the disclosure may be described in the context of aircraft manufacturing and service method **4400** as shown in **Figure 44** and aircraft **4500** as shown in **Figure 45****.** Turning first to **Figure 44****,** an illustration of an aircraft manufacturing and service method in the form of a block diagram is depicted in accordance with an illustrative embodiment. During pre-production, aircraft manufacturing and service method **4400** may include specification and design **4402** of aircraft **4500** in **Figure 45** and material procurement **4404.**

During production, component and subassembly manufacturing **4406** and system integration **4408** of aircraft **4500** in **Figure 45** take place. Thereafter, aircraft **4500** in **Figure 45** may go through certification and delivery **4410** in order to be placed in service **4412.** While in service **4412** by a customer, aircraft **4500** in **Figure 45** is scheduled for routine maintenance and service **4414,** which may include modification, reconfiguration, refurbishment, and other maintenance or service.

Each of the processes of aircraft manufacturing and service method **4400** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 45****,** an illustration of an aircraft in the form of a block diagram is depicted in which an illustrative embodiment may be implemented. In this example, aircraft **4500** is produced by aircraft manufacturing and service method **4400** in **Figure 44** and may include airframe **4502** with plurality of systems **4504** and interior **4506.** Examples of plurality of systems **4504** include one or more of propulsion system **4508,** electrical system **4510,** hydraulic system **4512,** and environmental system **4514.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **4400** in **Figure 44****.** In particular, product management system **100** from **Figure 1** and **Figure 34** may be used to manage design changes to design data for one or more product structures during any one of the stages of aircraft manufacturing and service method **4400.** For example, without limitation, product management system **100** from **Figures 1** and **34** may be used to manage the model of an aircraft product structure for aircraft **4500** during at least one of component and subassembly manufacturing **4406,** system integration **4408,** routine maintenance and service **4414,** or some other stage of aircraft manufacturing and service method **4400.**

In one illustrative example, components or subassemblies produced in component and subassembly manufacturing **4406** in **Figure 44** may be fabricated or manufactured in a manner similar to components or subassemblies produced while aircraft **4500** is in service **4412** in **Figure 44****.** As yet another example, one or more apparatus embodiments, method embodiments, or a combination thereof may be utilized during production stages, such as component and subassembly manufacturing **4406** and system integration **4408** in **Figure 44****.** One or more apparatus embodiments, method embodiments, or a combination thereof may be utilized while aircraft **4500** is in service **4412** and/or during maintenance and service **4414** in **Figure 44****.** The use of a number of the different illustrative embodiments may substantially expedite the assembly of and/or reduce the cost of aircraft **4500.**

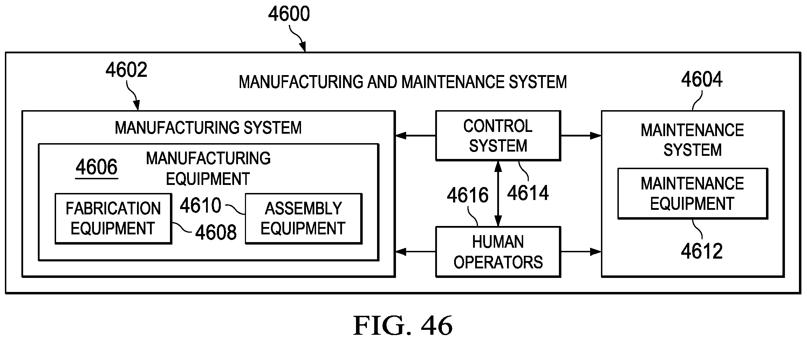

Turning now to **Figure 46****,** an illustration of a manufacturing and maintenance system in the form of a block diagram is depicted in accordance with an illustrative embodiment. Manufacturing and maintenance system **4600** is a physical hardware system. In this illustrative example, manufacturing and maintenance system **4600** may include at least one of manufacturing system **4602** or maintenance system **4604.**

Manufacturing system **4602** is configured to manufacture products, such as aircraft **4500** in **Figure 45****.** As depicted, manufacturing system **4602** includes manufacturing equipment **4606.** Manufacturing equipment **4606** includes at least one of fabrication equipment **4608** or assembly equipment **4610.**

Fabrication equipment **4608** is equipment that may be used to fabricate components for parts used to form aircraft **4500.** For example, fabrication equipment **4608** may include machines and tools. These machines and tools may be at least one of a drill, a hydraulic press, a furnace, a mold, a composite tape laying machine, a vacuum system, a lathe, or other suitable types of equipment. Fabrication equipment **4608** may be used to fabricate at least one of metal parts, composite parts, semiconductors, circuits, fasteners, ribs, skin panels, spars, antennas, or other suitable types of parts.

Assembly equipment **4610** is equipment used to assemble parts to form aircraft **4500.** In particular, assembly equipment **4610** may be used to assemble components and parts to form aircraft **4500.** Assembly equipment **4610** also may include machines and tools. These machines and tools may be at least one of a robotic arm, a crawler, a faster installation system, a rail-based drilling system, or a robot. Assembly equipment **4610** may be used to assemble parts such as seats, horizontal stabilizers, wings, engines, engine housings, landing gear systems, and other parts for aircraft **4500.**

In this illustrative example, maintenance system **4604** includes maintenance equipment **4612.** Maintenance equipment **4612** may include any equipment needed to perform maintenance on aircraft **4500.** Maintenance equipment **4612** may include tools for performing different operations on parts on aircraft **4500.** These operations may include at least one of disassembling parts, refurbishing parts, inspecting parts, reworking parts, manufacturing replacement parts, or other operations for performing maintenance on aircraft **4500.** These operations may be for routine maintenance, inspections, upgrades, refurbishment, or other types of maintenance operations.

In the illustrative example, maintenance equipment **4612** may include ultrasonic inspection devices, x-ray imaging systems, vision systems, drills, crawlers, and other suitable device. In some cases, maintenance equipment **4612** may include fabrication equipment **4608,** assembly equipment **4610,** or both to produce and assemble parts that may be needed for maintenance.

Manufacturing and maintenance system **4600** also includes control system **4614.** Control system **4614** is a hardware system and may also include software or other types of components. Control system **4614** is configured to control the operation of at least one of manufacturing system **4602** or maintenance system **4604.** In particular, control system **4614** may control the operation of at least one of fabrication equipment **4608,** assembly equipment **4610,** or maintenance equipment **4612.**

The hardware in control system **4614** may include computers, circuits, networks, and other types of equipment. The control may take the form of direct control of manufacturing equipment **4606.** For example, robots, computer-controlled machines, and other equipment may be controlled by control system **4614.** In other illustrative examples, control system **4614** may manage operations performed by human operators **4616** in manufacturing or performing maintenance on aircraft **4500.** For example, control system **4614** may assign tasks, provide instructions, display models, or perform other operations to manage operations performed by human operators **4616.**

In these illustrative examples, control system **4614** may be in communication with a product management system, such as product management system **100** described in **Figure 34** to manage at least one of the manufacturing or maintenance of aircraft **4500** in **Figure 45****.** For example, without limitation, control system **4614** may access model **3400** managed by product management system **100** in **Figure 34** to assign tasks, provide instructions, display models, or perform other operations related to at least one of the manufacturing or maintenance of aircraft **4500** in **Figure 45****.**

In the different illustrative examples, human operators **4616** may operate or interact with at least one of manufacturing equipment **4606,** maintenance equipment **4612,** or control system **4614.** This interaction may be performed to manufacture aircraft **4500.**

Of course, manufacturing and maintenance system **4600** may be configured to manage products other than aircraft **4500.** Although manufacturing and maintenance system **4600** has been described with respect to manufacturing in the aerospace industry, manufacturing and maintenance system **4600** may be configured to manage products for other industries. For example, manufacturing and maintenance system **4600** may be configured to manufacture products for the automotive industry, as well as any other suitable industries.

Thus, the different illustrative embodiments may provide a method and apparatus for managing variations in a product structure for a product using a model for the product structure. In one illustrative embodiment, a product management system for managing variations in a product structure for a product comprises a model and a data manager. The model comprises a primary hierarchical organization and a number of optimized product variant structures. The primary hierarchical organization comprises a group of domain master objects. The number of optimized product variant structures comprises a group of domain configuration objects in which each domain configuration object in the group of domain configuration objects represents a configuration for a component represented by a corresponding domain master object in the group of domain master objects. The data manager is configured to manage the variations in the product structure using the model.

The different illustrative embodiments provide a method and apparatus for managing the different possible variations in a produce that reduces using a model comprising objects belonging to classes derived from fundamental classes, such as fundamental classes **121** in **Figure 1****.** In particular, different variants of a product may be represented within a single model. In some illustrative examples, using optimized product variant structures within the model may reduce the amount of data storage needed to capture the different variations in the product structure for a product from, for example, gigabytes, to, for example, kilobytes. In some cases, the data storage needed may be reduced from terabytes to megabytes or kilobytes.

With this type of model, minor variations to a few components in a product comprising billions or trillions of components may be represented without needing to duplicate the model or portions of the model. New variations to a product structure for a product that form a new variant of the product may be captured in the model using a new optimized product variant structure. The new optimized product variant structure may comprise a number of new configuration objects that represent the different variations to the product structure as well as a number of shared configuration objects. The number of shared configuration objects may be shared with at least one of other optimized product variant structure in the model. In this manner, the overall data footprint of the model may be optimized.

In one illustrative embodiment, a product engineering modeling and data management system is provided that comprises at least one processor coupled to an electronic engineering data repository, an electronically stored engineering data model in communication with the engineering data repository, and a data manager coupled to the at least one processor and electronic engineering data repository. The engineering data model includes design data for an electronically represented product structure for a product.

In this illustrative example, the engineering data model comprises a primary hierarchal organization of master objects, a number of secondary hierarchical organizations of version objects, and a change context organization for each of the master objects. The master objects include a group of element objects and a group of occurrence objects. A secondary hierarchical organization in the number of secondary hierarchical organizations includes a group of element version objects and a group of occurrence version objects. The change context organization includes a group of variant objects and a group of branch instance objects. A variant object in the group of variant objects owns a branch instance object in the group of branch instance objects. The branch instance object collects a sequence of version objects for the variant object for a corresponding design branch. The data manager manages changes to the design data for the product structure within each design branch independently of other design branches using the model to reduce redundant data instances, thereby reducing communications bandwidth required to communicate the electronically stored engineering data model, and reducing storage capacity required for the engineering data repository.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A product management system (100) comprising a computer system (118) comprising a data manager (116) adapted to manage a product structure (112), (3404) for a product (102) using a model (3400) that includes design data (3402) for the product structure (112), (3404) for the product (102), wherein data manager is adapted to create:
a primary hierarchical organization (3408) of master objects (3421), wherein the master objects (3421) include a group of element objects (3423) and a group of occurrence objects (3425), wherein an element object (3502, 3600) in the group of the element objects (3423) represents a product structure element (3405) that makes up a product structure (3404), wherein the occurrence object in the group of occurrence objects (3425) represents a usage of a product structure element in the makeup of another product structure element;
the data manager is adapted to create a number of secondary hierarchical organizations (3410) of version objects (3424), wherein a secondary hierarchical organization (3418) in the number of secondary hierarchical organizations (3410) includes a group of element version objects (3426) and a group of occurrence version objects (3428), wherein each version object of the version objects (3424) represents a version of what is represented by a corresponding master object (3421), wherein an element version object of the group of element version objects represents a version of a particular variant of the product structure element in the product structure (3404) that is represented by the corresponding element object, wherein an occurrence version object (3516) of the group of occurrence version objects is an instantiation of the element version object and the occurrence version object represents an usage of the version of the particular variant of a corresponding product structure element in the product structure (3404) that is represented by the element version object; and
the data manager is adapted to create a change context organization (3433) for each of the master objects (3421) the change context organization is configured to organize version objects with respect to the master objects in the primary hierarchical organization,
wherein the change context organization (3433) includes a group of variant objects (3430) and a group of branch instance objects (3432),
wherein a variant object in the group of variant objects is owned by a master object of the master objects in the primary hierarchical organization, wherein the variant object owns a branch instance object (3506, 3514) in the group of branch instance objects (3434) and represents a variant of the product structure element that is represented by element object (3502),
wherein a branch instance object (3506, 3514) in the group of branch instance objects (3432) owns at least one element version object and tracks a sequence of the at least one version objects (3424) for the variant object (3504, 3512) for a corresponding design branch (3444), wherein the branch instance object in the group of branch instance objects (3432) tracks version changes with respect to a particular design branch; and
wherein the data manager is adapted to manage changes to the design data (3402) for the product structure (3404) within each design branch (3444) independently of other design branches using the model(3400), enabling design and manufacturing of the product (102) with increased efficiency using the model (3400).

2. The product management system (100) of claim 1, wherein the element object (3502, 3600) in the group of element objects (3423) represents the product structure element (3405) that makes up the product structure (3404) in which the product structure element (3405) represents one of a product (102), an assembly component that makes up the product (102), and a leaf component that makes up the product (102).

3. The product management system (100) of claim 2, wherein the group of variant objects (3430) comprises:
an element variant object that is contained within the element object (3502, 3600) and that represents a variant of the product structure element (3405) represented by the element object (3502, 3600).

4. The product management system (100) of any of claims 1-3, wherein the occurrence object (3510) in the group of occurrence objects (3425) is an instantiation of a master object (3435) that is either an element object (3502, 3600) or a different occurrence object (3510).

5. The product management system (100) of claim 4, wherein the group of variant objects (3430) comprises:
an occurrence variant object that is contained within the occurrence object (3510) and represents a variant of the instantiation of the master object (3435).

6. The product management system (100) of any of claims 1-5, wherein the group of element version objects (3426) comprises:
an element version object (3508) that represents a version of a variant of a product structure element (3405) in the product structure (3404).

7. The product management system (100) of any of claims 1-6, wherein the branch instance object (3506, 3514) in the group of branch instance objects (3432) is linked to a branch object (3446) that defines the corresponding design branch (3444).

8. A method for managing a model (3400) of a product structure (3404) for a product (102) for use in a data manager (116) implemented in a computer system (118) of a product management system (100), the method comprising, by the data manager (116):
creating (4000) a primary hierarchical organization (3408) of master objects (3421), wherein the master objects (3421) include a group of element objects (3423) and a group of occurrence objects (3425), wherein the an element object in the group of element objects (3423) represents a product structure element that makes up a product structure (3404), wherein the occurrence object in group of occurrence objects (3425) represents a usage of a product structure element in the makeup of another product structure element;
creating (4002) a number of secondary hierarchical organizations (3410) of version objects (3424), wherein a secondary hierarchical organization (3418) in the number of secondary hierarchical organizations (3410) includes a group of element version objects (3426) and a group of occurrence version objects (3428), wherein each version object of the version objects (3424) represents a version of what is represented by a corresponding master object (3421), wherein an element version object of the group of element version objects represents a version of a particular variant of the product structure element in product structure (3404) that is represented by the corresponding element object, wherein an occurrence version object (3516) of the group of occurrence version objects is an instantiation of the element version object and the occurrence version object represents an usage of the version of the particular variant of a corresponding product structure element in product structure (3404) that is represented by the element version object;
creating (4004) a change context organization (3433) for each of the master objects (3421) and organizing version objects with respect to the master objects in the primary hierarchical organization,
wherein the change context organization (3433) includes a group of variant objects (3430) and a group of branch instance objects (3432),
wherein a variant object in the group of variant objects is owned by a master object of the master objects in the primary hierarchical organization, the variant object (3504, 3512) in the group of variant objects (3430) owns a branch instance object (3506, 3514) in the group of branch instance objects (3434) and the variant object represents a variant of the product structure element that is represented by element object (3502), wherein a branch instance object (3506, 3514) in the group of branch instance objects owns at least one element version object and tracks a sequence of the at least one version objects (3424) for the variant object (3504, 3512) for a corresponding design branch (3444), wherein the branch instance object in group of branch instance objects (3432) tracks version changes with respect to a particular design branch; and
managing (4006) by the data manager (116) changes to design data (3402) for the product structure (3404) within each design branch (3444) independently of other design branches using the model (3400), enabling manufacturing of the product (102) with increased efficiency using the model (3400).

9. The method of claim 8, wherein creating (4000) the primary hierarchical organization (3408) comprises:
creating an element object (3502, 3600) in the group of element objects (3423) that represents a product structure element (3405) that makes up the product structure (3404) in which the product structure element (3405) represents one of a product (102), an assembly component that makes up the product (102), and a leaf component that makes up the product (102); and
creating an occurrence object (3510) in the group of occurrence objects (3425) that is an instantiation of a master object (3435) that is either a particular element object (3502, 3600) or a different occurrence object (3510).

10. The method of claim 9, wherein creating (4002) the number of secondary hierarchical organizations (3410) comprises:
creating an element variant object that is contained within the element object (3502, 3600) and that represents a variant of the product structure element (3405) represented by the element object (3502, 3600); and
creating an occurrence variant object that is contained within the occurrence object (3510) and that is a variant of an instantiation of the master object (3435).

11. The method of any of claims 8-10, wherein managing (4006) the changes to the design data (3402) comprises:
changing a first version object in a first branch instance object (3608, 3616, 3640) linked to a first branch object (3622) independently of a second version object in a second branch instance object (3624, 3628) linked to a second branch object (3636).

12. The method of any of claims 8-11, further comprising:
creating a new branch object (3466) that has a start state to define a new design branch (3444), wherein the new branch object (3446) captures changes made to the design data (3402) for the new design branch (3444) relative to the start state.

13. The method of any of claims 8-12, further comprising:
making a version object in the branch instance object (3506, 3514) immutable.

## Patentansprüche

1. Produktverwaltungssystem (100) aufweisend ein Computersystem (118) mit einem Datenverwalter (116), der angepasst ist, eine Produktstruktur (112), (3404) für ein Produkt (102) unter Verwendung eines Modells (3400), das Designdaten (3402) für die Produktstruktur (112), (3404) für das Produkt (102) aufweist, zu verwalten, wobei
der Datenverwalter angepasst ist, eine primäre hierarchische Organisation (3408) von Masterobjekten (3421) zu erzeugen, wobei die Masterobjekte (3421) eine Gruppe von Elementobjekten (3423) und eine Gruppe von Ereignisobjekten (3425) aufweisen, wobei ein Elementobjekt (3502, 3600) in der Gruppe von Elementobjekten (3423) ein Produktstrukturelement (3405) repräsentiert, das eine Produktstruktur (3404) bildet, wobei das Ereignisobjekt in der Gruppe von Ereignisobjekten (3425) einen Gebrauch eines Produktstrukturelements beim Bilden eines anderen Produktstrukturelements repräsentiert;
der Datenverwalter angepasst ist, mehrere sekundäre hierarchische Organisationen (3410) von Versionsobjekten (3424) zu erzeugen, wobei eine sekundäre hierarchische Organisation (3418) in den mehreren sekundären hierarchischen Organisationen (3410) eine Gruppe von Elementversionsobjekten (3426) und eine Gruppe von Ereignisversionsobjekten (3428) aufweist, wobei jedes Versionsobjekt der Versionsobjekte (3424) eine Version dessen repräsentiert, was von einem entsprechenden Masterobjekt (3421) repräsentiert wird, wobei ein Elementversionsobjekt der Gruppe von Elementversionsobjekten eine Version einer speziellen Variante des Produktstrukturelements in der Produktstruktur (3404) repräsentiert, das von dem entsprechenden Elementobjekt repräsentiert wird, wobei ein Ereignisversionsobjekt (3516) der Gruppe von Ereignisversionsobjekten eine Instanziierung des Elementversionsobjekts ist und das Ereignisversionsobjekt einen Gebrauch der Version der speziellen Variante eines entsprechenden Produktstrukturelements in der Produktstruktur (3404) repräsentiert, die von dem Elementversionsobjekt repräsentiert wird; und
der Datenverwalter angepasst ist, eine Änderungskontextorganisation (3433) für jedes der Masterobjekte (3421) zu erzeugen, wobei die Änderungskontextorganisation konfiguriert ist, Versionsobjekte mit Bezug auf die Masterobjekte in der primären hierarchischen Organisation zu organisieren,
wobei die Änderungskontextorganisation (3433) eine Gruppe von Variantenobjekten (3430) und eine Gruppe von Zweiginstanzobjekten (3432) aufweist,
wobei ein Variantenobjekt in der Gruppe von Variantenobjekten zu einem Masterobjekt der Masterobjekte in der primären hierarchischen Organisation gehört, wobei das Variantenobjekt ein Zweiginstanzobjekt (3506, 3514) in der Gruppe von Zweiginstanzobjekten (3434) besitzt und eine Variante des Produktstrukturelements repräsentiert, das von dem Elementobjekt (3502) repräsentiert wird,
wobei ein Zweiginstanzobjekt (3506, 3514) in der Gruppe von Zweiginstanzobjekten (3432) mindestens ein Elementversionsobjekt besitzt und eine Sequenz des mindestens einen Versionsobjekts (3424) für das Variantenobjekt (3504, 3512) für einen entsprechenden Designzweig (3444) verfolgt, wobei das Zweiginstanzobjekt in der Gruppe von Zweiginstanzobjekten (3432) Versionsänderungen mit Bezug auf einen speziellen Designzweig verfolgt; und
wobei der Datenverwalter angepasst ist, unter Verwendung des Modells (3400) Änderungen an den Designdaten (3402) für die Produktstruktur (3404) innerhalb jedes Designzweigs (3444) unabhängig von anderen Designzweigen zu verwalten, um dadurch unter Verwendung des Modells (3400) Design und Fertigung des Produkts (102) mit erhöhter Effizienz zu ermöglichen.

2. Produktverwaltungssystem (100) nach Anspruch 1, wobei das Elementobjekt (3502, 3600) in der Gruppe von Elementobjekten (3423) das Produktstrukturelement (3405) repräsentiert, das die Produktstruktur (3404) bildet, wobei das Produktstrukturelement (3405) ein Produkt (102) oder eine Zusammenbaukomponente, die das Produkt (102) bildet, oder eine Einzelkomponente, die das Produkt (102) bildet, repräsentiert.

3. Produktverwaltungssystem (100) nach Anspruch 2, wobei die Gruppe von Variantenobjekten (3430) aufweist:
ein Elementvariantenobjekt, das in dem Elementobjekt (3502, 3600) enthalten ist und das eine Variante des von dem Elementobjekt (3502, 3600) repräsentierten Produktstrukturelements (3405) repräsentiert.

4. Produktverwaltungssystem (100) nach einem der Ansprüche 1 bis 3, wobei das Ereignisobjekt (3510) in der Gruppe von Ereignisobjekten (3425) eine Instanziierung eines Masterobjekts (3435) ist, das entweder ein Elementobjekt (3502) oder ein anderes Ereignisobjekt (3510) ist.

5. Produktverwaltungssystem (100) nach Anspruch 4, wobei die Gruppe von Variantenobjekten (3430) aufweist:
ein Ereignisvariantenobjekt, das in dem Ereignisobjekt (3510) enthalten ist und eine Variante der Instanziierung des Masterobjekts (3435) repräsentiert.

6. Produktverwaltungssystem (100) nach einem der Ansprüche 1 bis 5, wobei die Gruppe von Elementversionsobjekten (3426) aufweist: ein Elementversionsobjekt (3508), das eine Version einer Variante eines Produktstrukturelements (3405) in der Produktstruktur (3404) repräsentiert.

7. Produktverwaltungssystem (100) nach einem der Ansprüche 1 bis 6, wobei das Zweiginstanzobjekt (3506, 3514) in der Gruppe von Zweiginstanzobjekten (3432) mit einem Zweigobjekt (3446) verknüpft ist, das den entsprechenden Designzweig (3444) definiert.

8. Verfahren zum Verwalten eines Modells (3400) einer Produktstruktur (3404) für ein Produkt (102) zur Verwendung in einem Datenverwalter (116), der in einem Computersystem (118) eines Produktverwaltungssystems (100) implementiert ist, wobei das Verfahren folgende von dem Datenverwalter (116) durchgeführte Schritte aufweist:
Erzeugen (4000) einer primären hierarchischen Organisation (3408) von Masterobjekten (3421), wobei die Masterobjekte (3421) eine Gruppe von Elementobjekten (3423) und eine Gruppe von Ereignisobjekten (3425) aufweisen, wobei ein Elementobjekt in der Gruppe von Elementobjekten (3423) ein Produktstrukturelement repräsentiert, das eine Produktstruktur (3404) bildet, wobei das Ereignisobjekt in der Gruppe von Ereignisobjekten (3425) einen Gebrauch eines Produktstrukturelements beim Bilden eines anderen Produktstrukturelements repräsentiert;
Erzeugen (4002) von mehreren sekundären hierarchischen Organisationen (3410) von Versionsobjekten (3424), wobei eine sekundäre hierarchische Organisation (3418) in den mehreren sekundären hierarchischen Organisationen (3410) eine Gruppe von Elementversionsobjekten (3426) und eine Gruppe von Ereignisversionsobjekten (3428) aufweist, wobei jedes Versionsobjekt der Versionsobjekte (3424) eine Version dessen repräsentiert, was von einem entsprechenden Masterobjekt (3421) repräsentiert wird, wobei ein Elementversionsobjekt der Gruppe von Elementversionsobjekten eine Version einer speziellen Variante des Produktstrukturelements in der Produktstruktur (3404) repräsentiert, das von dem entsprechenden Elementobjekt repräsentiert wird, wobei ein Ereignisversionsobjekt (3516) der Gruppe von Ereignisversionsobjekten eine Instanziierung des Elementversionsobjekts ist und das Ereignisversionsobjekt einen Gebrauch der Version der speziellen Variante eines entsprechenden Produktstrukturelements in der Produktstruktur (3404) repräsentiert, die von dem Elementversionsobjekt repräsentiert wird;
Erzeugen (4004) einer Änderungskontextorganisation (3433) für jedes der Masterobjekte (3421) und Organisieren von Versionsobjekten mit Bezug auf die Masterobjekte in der primären hierarchischen Organisation,
wobei die Änderungskontextorganisation (3433) eine Gruppe von Variantenobjekten (3430) und eine Gruppe von Zweiginstanzobjekten (3432) aufweist,
wobei ein Variantenobjekt in der Gruppe von Variantenobjekten zu einem Masterobjekt der Masterobjekte in der primären hierarchischen Organisation gehört, das Variantenobjekt (3504, 3512) in der Gruppe von Variantenobjekten (3430) ein Zweiginstanzobjekt (3506, 3514) in der Gruppe von Zweiginstanzobjekten (3434) besitzt und das Variantenobjekt eine Variante des Produktstrukturelements repräsentiert, das von dem Elementobjekt (3502) repräsentiert wird,
wobei ein Zweiginstanzobjekt (3506, 3514) in der Gruppe von Zweiginstanzobjekten mindestens ein Elementversionsobjekt besitzt und eine Sequenz des mindestens einen Versionsobjekts (3424) für das Variantenobjekt (3504, 3512) für einen entsprechenden Designzweig (3444) verfolgt, wobei das Zweiginstanzobjekt in der Gruppe von Zweiginstanzobjekten (3432) Versionsänderungen mit Bezug auf einen speziellen Designzweig verfolgt; und
Verwalten (4006) von Änderungen an Designdaten (3402) für die Produktstruktur (3404) innerhalb jedes Designzweigs (3444) unabhängig von anderen Designzweigen unter Verwendung des Modells (3400), um dadurch unter Verwendung des Modells (3400) Fertigung des Produkts (102) mit erhöhter Effizienz zu ermöglichen.

9. Verfahren nach Anspruch 8, wobei Erzeugen (4000) der primären hierarchischen Organisation (3408) aufweist:
Erzeugen eines Elementobjekts (3502, 3600) in der Gruppe von Elementobjekten (3423), das ein Produktstrukturelement (3405) repräsentiert, das die Produktstruktur (3404) bildet, wobei das Produktstrukturelement (3405) ein Produkt (102) oder eine Zusammenbaukomponente, die das Produkt (102) bildet, oder eine Einzelkomponente, die das Produkt (102) bildet, repräsentiert; und
Erzeugen eines Ereignisobjekts (3510) in der Gruppe von Ereignisobjekten (3425), das eine Instanziierung eines Masterobjekts (3435) ist, das entweder ein spezielles Elementobjekt (3502, 3600) oder ein anderes Ereignisobjekt (3510) ist.

10. Verfahren nach Anspruch 9, wobei Erzeugen (4002) der mehreren sekundären hierarchischen Organisationen (3410) aufweist:
Erzeugen eines Elementvariantenobjekts, das in dem Elementobjekt (3502, 3600) enthalten ist und das eine Variante des von dem Elementobjekt (3502, 3600) repräsentierten Produktstrukturelements (3405) repräsentiert; und
Erzeugen eines Ereignisvariantenobjekts, das in dem Ereignisobjekt (3510) enthalten ist und das eine Variante einer Instanziierung des Masterobjekts (3435) ist.

11. Verfahren nach einem der Ansprüche 8 bis 10, wobei Verwalten (4006) der Änderungen an den Designdaten (3402) aufweist:
Ändern eines ersten Versionsobjekts in einem ersten Zweiginstanzobjekt (3608, 3616, 3640), das mit einem ersten Zweigobjekt (3622) verknüpft ist, unabhängig von einem zweiten Versionsobjekt in einem zweiten Zweiginstanzobjekt (3624, 3628), das mit einem zweiten Zweigobjekt (3636) verknüpft ist.

12. Verfahren nach einem der Ansprüche 8 bis 11, ferner aufweisend:
Erzeugen eines neuen Zweigobjekts (3466), das einen Startzustand hat, um einen neuen Designzweig (3444) zu definieren, wobei das neue Zweigobjekt (3446) Änderungen festhält, die an den Designdaten (3402) für den neuen Designzweig (3444) relativ zu dem Startzustand vorgenommen worden sind.

13. Verfahren nach einem der Ansprüche 8 bis 12, ferner aufweisend:
Machen eines Versionsobjekts in dem Zweiginstanzobjekt (3506, 3514) unveränderbar.

## Revendications

1. Système de gestion de produit (100) comprenant un système informatique (118) comprenant un gestionnaire de données (116) apte à gérer une structure de produit (112), (3404) pour un produit (102) en utilisant un modèle (3400) qui inclut des données de conception (3402) pour la structure de produit (112), (3404) pour le produit (102), dans lequel le gestionnaire de données est apte à créer :
une organisation hiérarchique primaire (3408) d'objets maîtres (3421), dans lequel les objets maîtres (3421) incluent un groupe d'objets d'élément (3423) et un groupe d'objets d'occurrence (3425), dans lequel un objet d'élément (3502, 3600) dans le groupe d'objets d'élément (3423) représente un élément de structure de produit (3405) qui constitue une structure de produit (3404), dans lequel l'objet d'occurrence dans le groupe d'objets d'occurrence (3425) représente une utilisation d'un élément de structure de produit dans la constitution d'un autre élément de structure de produit ;
le gestionnaire de données est apte à créer un nombre d'organisations hiérarchiques secondaires (3410) d'objets de version (3424), dans lequel une organisation hiérarchique secondaire (3418) parmi le nombre d'organisations hiérarchiques secondaires (3410) inclut un groupe d'objets de version d'élément (3426) et un groupe d'objets de version d'occurrence (3428), dans lequel chaque objet de version parmi les objets de version (3424) représente une version de ce qui est représenté par un objet maître (3421) correspondant, dans lequel un objet de version d'élément du groupe d'objets de version d'élément représente une version d'une variante particulière de l'élément de structure de produit dans la structure de produit (3404) qui est représentée par l'objet d'élément correspondant, dans lequel un objet de version d'occurrence (3516) du groupe d'objets de version occurrence est une instanciation de l'objet de version d'élément et l'objet de version d'occurrence représente une utilisation de la version de la variante particulière d'un élément de structure de produit correspondant dans la structure de produit (3404) qui est représenté par l'objet de version d'élément ; et
le gestionnaire de données est apte à créer une organisation de contexte de changement (3433) pour chacun des objets maîtres (3421), l'organisation de contexte de changement est configurée pour organiser des objets de version par rapport aux objets maîtres dans l'organisation hiérarchique primaire,
dans lequel l'organisation de contexte de changement (3433) inclut un groupe d'objets de variante (3430) et un groupe d'objets d'instance de branche (3432),
dans lequel un objet de variante dans le groupe d'objets de variante est détenu par un objet maître parmi les objets maîtres dans l'organisation hiérarchique primaire, dans lequel l'objet de variante détient un objet d'instance de branche (3506, 3514) dans le groupe d'objets d'instance de branche (3434) et représente une variante de l'élément de structure de produit qui est représenté par l'objet d'élément (3502),
dans lequel un objet d'instance de branche (3506, 3514) dans le groupe d'objets d'instance de branche (3432) détient au moins un objet de version d'élément et suit une séquence de l'au moins un objet de version (3424) pour l'objet de variante (3504, 3512) pour une branche de conception (3444) correspondante, dans lequel l'objet d'instance de branche dans le groupe d'objets d'instance de branche (3432) suit des changements de version par rapport à une branche de conception particulière ; et
dans lequel le gestionnaire de données est apte à gérer des changements des données de conception (3402) pour la structure de produit (3404) à l'intérieur de chaque branche de conception (3444) indépendamment d'autres branches de conception en utilisant le modèle (3400), en permettant la conception et la fabrication du produit (102) avec une efficacité accrue en utilisant le modèle (3400).

2. Système de gestion de produit (100) selon la revendication 1, dans lequel l'objet d'élément (3502, 3600) dans le groupe d'objets d'élément (3423) représente l'élément de structure de produit (3405) qui constitue la structure de produit (3404) dans laquelle l'élément de structure de produit (3405) représente l'un parmi un produit (102), un composant d'ensemble qui constitue le produit (102), et un composant de feuille qui constitue le produit (102).

3. Système de gestion de produit (100) selon la revendication 2, dans lequel le groupe d'objets de variante (3430) comprend :
un objet de variante d'élément qui est contenu à l'intérieur de l'objet d'élément (3502, 3600) et qui représente une variante de l'élément de structure de produit (3405) représenté par l'objet d'élément (3502, 3600).

4. Système de gestion de produit (100) selon l'une quelconque des revendications 1 à 3, dans lequel l'objet d'occurrence (3510) dans le groupe d'objets d'occurrence (3425) est une instanciation d'un objet maître (3435) qui est soit un objet d'élément (3502, 3600) soit un objet d'occurrence (3510) différent.

5. Système de gestion de produit (100) selon la revendication 4, dans lequel le groupe d'objets de variante (3430) comprend :
un objet de variante d'occurrence qui est contenu à l'intérieur de l'objet d'occurrence (3510) et représente une variante de l'instanciation de l'objet maître (3435).

6. Système de gestion de produit (100) selon l'une quelconque des revendications 1 à 5, dans lequel le groupe d'objets de version d'élément (3426) comprend :
un objet de version d'élément (3508) qui représente une version d'une variante d'un élément de structure de produit (3405) dans la structure de produit (3404).

7. Système de gestion de produit (100) selon l'une quelconque des revendications 1 à 6, dans lequel l'objet d'instance de branche (3506, 3514) dans le groupe d'objets d'instance de branche (3432) est lié à un objet de branche (3446) qui définit la branche de conception (3444) correspondante.

8. Procédé de gestion d'un modèle (3400) d'une structure de produit (3404) pour un produit (102) pour son utilisation dans un gestionnaire de données (116) mis en oeuvre dans un système informatique (118) d'un système de gestion de produit (100), le procédé comprenant, par le gestionnaire de données (116) :
la création (4000) d'une organisation hiérarchique primaire (3408) d'objets maîtres (3421), dans lequel les objets maîtres (3421) incluent un groupe d'objets d'élément (3423) et un groupe d'objets d'occurrence (3425), dans lequel un objet d'élément dans le groupe d'objets d'élément (3423) représente un élément de structure de produit qui constitue une structure de produit (3404), dans lequel l'objet d'occurrence dans le groupe d'objets d'occurrence (3425) représente une utilisation d'un élément de structure de produit dans la constitution d'un autre élément de structure de produit ;
la création (4002) d'un nombre d'organisations hiérarchiques secondaires (3410) d'objets de version (3424), dans lequel une organisation hiérarchique secondaire (3418) parmi le nombre d'organisations hiérarchiques secondaires (3410) inclut un groupe d'objets de version d'élément (3426) et un groupe d'objets de version d'occurrence (3428), dans lequel chaque objet de version parmi les objets de version (3424) représente une version de ce qui est représenté par un objet maître (3421) correspondant, dans lequel un objet de version d'élément du groupe d'objets de version d'élément représente une version d'une variante particulière de l'élément de structure de produit dans la structure de produit (3404) qui est représentée par l'objet d'élément correspondant, dans lequel un objet de version d'occurrence (3516) du groupe d'objets de version occurrence est une instanciation de l'objet de version d'élément et l'objet de version d'occurrence représente une utilisation de la version de la variante particulière d'un élément de structure de produit correspondant dans la structure de produit (3404) qui est représenté par l'objet de version d'élément ;
la création (4004) d'une organisation de contexte de changement (3433) pour chacun des objets maîtres (3421) et l'organisation d'objets de version par rapport aux objets maîtres dans l'organisation hiérarchique primaire,
dans lequel l'organisation de contexte de changement (3433) inclut un groupe d'objets de variante (3430) et un groupe d'objets d'instance de branche (3432),
dans lequel un objet de variante dans le groupe d'objets de variante est détenu par un objet maître parmi les objets maîtres dans l'organisation hiérarchique primaire, l'objet de variante (3504, 3512) dans le groupe d'objets de variante (3430) détient un objet d'instance de branche (3506, 3514) dans le groupe d'objets d'instance de branche (3434) et l'objet de variante représente une variante de l'élément de structure de produit qui est représenté par l'objet d'élément (3502), dans lequel un objet d'instance de branche (3506, 3514) dans le groupe d'objets d'instance de branche détient au moins un objet de version d'élément et suit une séquence de l'au moins un objet de version (3424) pour l'objet de variante (3504, 3512) pour une branche de conception (3444) correspondante, dans lequel l'objet d'instance de branche dans le groupe d'objets d'instance de branche (3432) suit des changements de version par rapport à une branche de conception particulière ; et
la gestion (4006), par le gestionnaire de données (116), de changements de données de conception (3402) pour la structure de produit (3404) à l'intérieur de chaque branche de conception (3444) indépendamment d'autres branches de conception en utilisant le modèle (3400), en permettant la fabrication du produit (102) avec une efficacité accrue en utilisant le modèle (3400).

9. Procédé selon la revendication 8, dans lequel la création (4000) de l'organisation hiérarchique primaire (3408) comprend :
la création d'un objet d'élément (3502, 3600) dans le groupe d'objets d'élément (3423) qui représente un élément de structure de produit (3405) qui constitue la structure de produit (3404) dans laquelle l'élément de structure de produit (3405) représente l'un parmi un produit (102), un composant d'ensemble qui constitue le produit (102), et un composant de feuille qui constitue le produit (102) ; et
la création d'un objet d'occurrence (3510) dans le groupe d'objets d'occurrence (3425) qui est une instanciation d'un objet maître (3435) qui est soit un objet d'élément (3502, 3600) particulier soit un objet d'occurrence (3510) différent.

10. Procédé selon la revendication 9, dans lequel la création (4002) du nombre d'organisations hiérarchiques secondaires (3410) comprend :
la création d'un objet de variante d'élément qui est contenu à l'intérieur de l'objet d'élément (3502, 3600) et qui représente une variante de l'élément de structure de produit (3405) représenté par l'objet d'élément (3502, 3600) ; et
la création d'un objet de variante d'occurrence qui est contenu à l'intérieur de l'objet d'occurrence (3510) et qui est une variante d'une instanciation de l'objet maître (3435).

11. Procédé selon l'une quelconque des revendications 8 à 10, dans lequel la gestion (4006) des changements des données de conception (3402) comprend :
le changement d'un premier objet de version dans un premier objet d'instance de branche (3608, 3616, 3640) lié à un premier objet de branche (3622) indépendamment d'un second objet de version dans un second objet d'instance de branche (3624, 3628) lié à un second objet de branche (3636).

12. Procédé selon l'une quelconque des revendications 8 à 11, comprenant en outre :
la création d'un nouvel objet de branche (3466) qui comporte un état de début pour définir une nouvelle branche de conception (3444), dans lequel le nouvel objet de branche (3446) capture des changements apportés aux données de conception (3402) pour la nouvelle branche de conception (3444) par rapport à la date de début.

13. Procédé selon l'une quelconque des revendications 8 à 12, comprenant en outre :
le fait de rendre un objet de version dans l'objet d'instance de branche (3506, 3514) immuable.
